(19) Europäisches Patentamt
European Patent Office
Office européen des brevets

(11) **EP 4 723 621 A1**

(12) **EUROPEAN PATENT APPLICATION**
published in accordance with Art. 153(4) EPC

(43) Date of publication:
08.04.2026 Bulletin 2026/15

(21) Application number: 24815735.6

(22) Date of filing: 10.05.2024

(51) International Patent Classification (IPC):
H04N 19/105 (2014.01)   H04N 19/577 (2014.01)
H04N 19/176 (2014.01)   H04N 19/132 (2014.01)
H04N 19/117 (2014.01)   H04N 19/57 (2014.01)
H04N 19/137 (2014.01)

(52) Cooperative Patent Classification (CPC):
H04N 19/105; H04N 19/117; H04N 19/132;
H04N 19/137; H04N 19/176; H04N 19/57;
H04N 19/577

(86) International application number:
PCT/KR2024/006396

(87) International publication number:
WO 2024/248357 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.06.2023  KR 20230071905
18.10.2023  KR 20230139858

(71) Applicant: Samsung Electronics Co., Ltd.
Suwon-si, Gyeonggi-do 16677 (KR)

(72) Inventors:
• KIM, Kyungah
  Suwon-si, Gyeonggi-do 16677 (KR)
• PIAO, Yinji
  Suwon-si, Gyeonggi-do 16677 (KR)
• PARK, Minwoo
  Suwon-si, Gyeonggi-do 16677 (KR)
• CHOI, Kwangpyo
  Suwon-si, Gyeonggi-do 16677 (KR)

(74) Representative: Appleyard Lees IP LLP
G Mill
Dean Clough Industrial Park
Halifax HX3 5AH (GB)

(54) **APPARATUS AND METHOD FOR ENCODING AND DECODING IMAGE BY USING REFERENCE BLOCK**

(57) An image decoding method according to an embodiment may include: determining a first reference block in a first reference image and a second reference block in a second reference image for bi-prediction of a current block; determining weight information for combining the first reference block and the second reference block, based on a current reference template of the current block, a first reference template of the first reference block, and a second reference template of the second reference block; generating a prediction block of the current block by combining the first reference block and the second reference block by using the weight information; and reconstructing the current block by using the prediction block.

FIG. 31

START

DETERMINE FIRST REFERENCE BLOCK IN FIRST REFERENCE IMAGE AND SECOND REFERENCE BLOCK IN SECOND REFERENCE IMAGE FOR BI-PREDICTION OF CURRENT BLOCK — S3110

DETERMINE WEIGHT INFORMATION FOR COMBINATION OF FIRST REFERENCE BLOCK AND SECOND REFERENCE BLOCK, BASED ON CURRENT REFERENCE TEMPLATE OF CURRENT BLOCK, FIRST REFERENCE TEMPLATE OF FIRST REFERENCE BLOCK, AND SECOND REFERENCE TEMPLATE OF SECOND REFERENCE BLOCK — S3120

GENERATE PREDICTION BLOCK OF CURRENT BLOCK BY COMBINING FIRST REFERENCE BLOCK AND SECOND REFERENCE BLOCK BY USING WEIGHT INFORMATION — S3130

RECONSTRUCT CURRENT BLOCK BY USING PREDICTION BLOCK — S3140

END

## Description

Technical Field

The present disclosure relates to the field of image encoding and decoding, and more particularly, to an apparatus and method for encoding and decoding an image by using a reference block included in at least one of a current image or a previous image.

BACKGROUND ART

In image encoding and decoding, an image is split into blocks, and each of the blocks is prediction encoded and prediction decoded via inter prediction.

The inter prediction refers to a technique for compressing an image by removing temporal redundancy between images. In the inter prediction, blocks of a current image are predicted by using a reference image. A reference block that is most similar to a current block may be searched for in a preset search range within the reference image. The current block is predicted based on the reference block, and a residual block is generated by subtracting, from the current block, a prediction block generated as a result of the prediction.

In a codec such as H.264 Advanced Video Coding (AVC) and High Efficiency Video Coding (HEVC), in order to predict a motion vector of a current block, a motion vector of previously-encoded blocks adjacent to the current block or blocks included in a previously-encoded image is used as a motion vector predictor of the current block. A motion vector difference that is a difference between the motion vector and the motion vector predictor of the current block is signaled to a decoder by using a preset scheme.

The residual block generated via the inter prediction is delivered to a decoder via transformation and quantization. The decoder performs inversequantization and inverse-transformation on the residual block, and reconstructs the current block by combining the prediction block and the residual block of the current block. The decoder may remove artifacts within the reconstructed current block by filtering the reconstructed current block in a regular manner.

DISCLOSURE OF INVENTION

TECHNICAL PROBLEM

According to an embodiment, an image encoding method and apparatus and an image decoding method and apparatus are provided to improve performance of prediction encoding and prediction decoding with respect to a current block.

According to an embodiment, the image encoding method and apparatus and the image decoding method and apparatus are provided to decrease the amount of data required to signal an inter prediction mode.

According to an embodiment, the image encoding method and apparatus and the image decoding method and apparatus are provided to decrease a bitrate of a bitstream.

The technical features aimed to be achieved in the present disclosure are not limited to the aforementioned technical features, and other unstated technical features will be clearly understood by one of ordinary skill in the art in view of descriptions below.

SOLUTION TO PROBLEM

According to an embodiment, an image encoding method and apparatus and an image decoding method and apparatus are provided to improve performance of prediction encoding and prediction decoding with respect to a current block,

In an embodiment of the present disclosure, the image decoding method may include determining weight information for combining of the first reference block and the second reference block, based on a current reference template of the current block, a first reference template of the first reference block, and a second reference template of the second reference block.

In an embodiment of the present disclosure, the image decoding method may include generating a prediction block of the current block by combining the first reference block and the second reference block by using the weight information.

In an embodiment of the present disclosure, the image decoding method may include reconstructing the current block by using the prediction block.

In an embodiment of the present disclosure, an image decoding apparatus 2000 may include: at least one memory storing at least one instruction; and at least one processor configured to operate according to the at least one instruction.

In an embodiment of the present disclosure, the at least one processor may be configured to determine a first reference block in a first reference image and a second reference block in a second reference image for bi-prediction of a current block.

In an embodiment of the present disclosure, the at least one processor may be configured to determine weight information for combining the first reference block and the second reference block, based on a current reference template of the current block, a first reference template of the first reference block, and a second reference template of the second reference block.

In an embodiment of the present disclosure, the at least one processor may be configured to generate a prediction block of the current block by combining the first reference block and the second reference block by using the weight information.

In an embodiment of the present disclosure, the at least one processor may be configured to reconstruct the current block by using the prediction block.

In an embodiment of the present disclosure, an image encoding method may include determining a first reference block in a first reference image and a second reference block in a second reference image for bi-prediction of a current block.

In an embodiment of the present disclosure, the image encoding method may include determining weight information for combining the first reference block and the second reference block, based on a current reference template of the current block, a first reference template of the first reference block, and a second reference template of the second reference block.

In an embodiment of the present disclosure, the image encoding method may include generating a prediction block of the current block by combining the first reference block and the second reference block by using the weight information.

In an embodiment of the present disclosure, the image encoding method may include encoding the current block by using the prediction block.

In an embodiment of the present disclosure, an image encoding apparatus 3200 may include: at least one memory storing at least one instruction; and at least one processor configured to operate according to the at least one instruction.

In an embodiment of the present disclosure, the at least one processor may be configured to determine a first reference block in a first reference image and a second reference block in a second reference image for bi-prediction of a current block.

In an embodiment of the present disclosure, the at least one processor may be configured to determine weight information for combining the first reference block and the second reference block, based on a current reference template of the current block, a first reference template of the first reference block, and a second reference template of the second reference block.

In an embodiment of the present disclosure, the at least one processor may be configured to generate a prediction block of the current block by combining the first reference block and the second reference block by using the weight information.

In an embodiment of the present disclosure, the at least one processor may be configured to encode the current block by using the prediction block.

In an embodiment of the present disclosure, provided is a computerreadable recording medium storing therein a bitstream generated by an image encoding method, wherein the bitstream may include motion information of a current block.

In an embodiment of the present disclosure, the motion information of the current block may be generated by determining a first reference block in a first reference image and a second reference block in a second reference image for bi-prediction of the current block, obtaining a current reference template indicating a reference template of the current block, a first reference template indicating a reference template of the first reference block, and a second reference template indicating a reference template of the second reference block, determining weight information for combining the first reference block and the second reference block, based on the current reference template, the first reference template, and the second reference template, generating a prediction block of the current block by combining the first reference block and the second reference block by using the weight information, and encoding the current block by using the prediction block.

ADVANTAGEOUS EFFECTS OF INVENTION

According to an embodiment, an image encoding method and apparatus and an image decoding method and apparatus may improve performance of prediction encoding and prediction decoding with respect to a current block.

According to an embodiment, the image encoding method and apparatus and the image decoding method and apparatus may decrease the amount of data required to signal an inter prediction mode.

According to an embodiment, the image encoding method and apparatus and the image decoding method and apparatus may decrease a bitrate of a bitstream.

The technical features aimed to be achieved in the present disclosure are not limited to the aforementioned technical features, and other unstated technical features will be clearly understood by one of ordinary skill in the art in view of descriptions below.

BRIEF DESCRIPTION OF DRAWINGS

FIG. 1 is a block diagram of an image decoding apparatus according to an embodiment.

FIG. 2 is a block diagram of an image encoding apparatus according to an embodiment.

FIG. 3 illustrates a process of determining at least one coding unit by splitting a current coding unit, according to an embodiment.

FIG. 4 illustrates a process of determining at least one coding unit by splitting a non-square coding unit, according to an embodiment.

FIG. 5 illustrates a process of splitting a coding unit based on at least one of block shape information or split shape mode information, according to an embodiment.

FIG. 6 illustrates a method of determining a preset coding unit from among an odd number of coding units, according to an embodiment.

FIG. 7 illustrates an order of processing a plurality of coding units when the plurality of coding units are determined by splitting a current coding unit, according to an embodiment.

FIG. 8 illustrates a process of determining that a current coding unit is to be split into an odd number of coding units, when coding units are not processable in a preset order, according to an embodiment.

FIG. 9 illustrates a process of determining at least one coding unit by splitting a first coding unit, according to an embodiment.

FIG. 10 illustrates that a shape into which a second coding unit is splittable is restricted when the second coding unit having a non-square shape, which is determined when a first coding unit is split, satisfies a preset condition, according to an embodiment.

FIG. 11 illustrates a process of splitting a square coding unit when split shape mode information is unable to indicate that the square coding unit is split into four square coding units, according to an embodiment.

FIG. 12 illustrates that a processing order between a plurality of coding units may be changed depending on a process of splitting a coding unit, according to an embodiment.

FIG. 13 illustrates a process of determining a depth of a coding unit as a shape and size of the coding unit change, when the coding unit is recursively split such that a plurality of coding units are determined, according to an embodiment.

FIG. 14 illustrates depths that are determinable based on shapes and sizes of coding units, and part indexes (PIDs) that are for distinguishing the coding units, according to an embodiment.

FIG. 15 illustrates that a plurality of coding units are determined based on a plurality of preset data units included in a picture, according to an embodiment.

FIG. 16 illustrates coding units that may be determined in each picture when a combination of shapes into which a coding unit is splittable is different for each picture, according to an embodiment.

FIG. 17 illustrates various shapes of a coding unit which may be determined based on split shape mode information that may be represented in binary code, according to an embodiment.

FIG. 18 illustrates other shapes of a coding unit which may be determined based on split shape mode information that may be represented in binary code, according to an embodiment.

FIG. 19 is a block diagram of an image encoding and decoding system that performs loop filtering, according to an embodiment.

FIG. 20 is a block diagram illustrating a configuration of an image decoding apparatus according to an embodiment.

FIG. 21 is a diagram for describing bi-prediction of a current block according to an embodiment.

FIG. 22 is a diagram illustrating blocks temporally and/or spatially related to a current block.

FIG. 23 is a diagram for describing a template of a current block or a reference block, according to an embodiment.

FIG. 24 is a diagram for describing an operation of determining a reference block based on template matching, according to an embodiment.

FIG. 25 is a diagram for describing processes of determining weight information, according to an embodiment.

FIG. 26 is a diagram for describing an operation of determining a weight filter, according to an embodiment.

FIG. 27 is a diagram for describing an operation of generating a prediction block by using weight information, according to an embodiment.

FIG. 28 is a diagram for describing a detailed process of determining weight information, according to an embodiment.

FIG. 29 is a diagram for describing a detailed process of determining a weight filter, according to an embodiment.

FIG. 30 is a diagram for describing a detailed process of determining weight information, according to an embodiment.

FIG. 31 is a flowchart of an image decoding method according to an embodiment.

FIG. 32 is a block diagram illustrating a configuration of an image encoding apparatus according to an embodiment.

FIG. 33 is a flowchart of an image encoding method according to an embodiment.

MODE FOR THE INVENTION

As the present disclosure allows for various changes and numerous embodiments, particular embodiments will be illustrated in the drawings and described in detail in the written descriptions. However, this is not intended to limit the present disclosure to particular modes of practice, and it is to be appreciated that all changes, equivalents, and substitutes that do not depart from the spirit and technical scope of the present disclosure are encompassed in the present disclosure.

In the descriptions of embodiments, detailed explanations of the related art may be omitted when it is deemed that they may unnecessarily obscure the essence of the present disclosure. Also, numerals (e.g., "first", "second", and the like) in descriptions of embodiments are used only to distinguish one element from another element.

Throughout the present disclosure, the expression "at least one of a, b or c" indicates only a, only b, only c, both a and b, both a and c, both b and c, all of a, b, and c, or variations thereof.

Throughout the specification, when an element is referred to as being "connected to" or "coupled with" another element, it can be directly connected to or coupled with the other element, or it can be indirectly connected to or coupled with the other element by having an intervening element interposed therebetween.

In the present specification, regarding an element represented as a "unit" or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another element.

In the present disclosure, an "image" may refer to a picture, a still image, a frame, a moving picture including a plurality of consecutive still images, or a video.

In the present disclosure, a "sample" may refer to data allocated to a sampling position of an image, i.e., data to be processed. For example, a pixel within a frame of a spatial domain may correspond to a sample. A unit including a plurality of samples may be defined as a block.

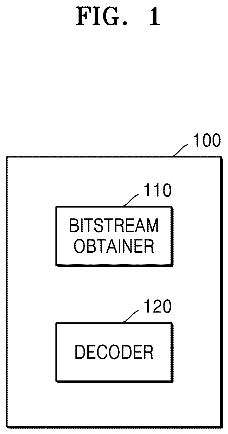

Hereinafter, with reference to FIGS. 1 to 19, an image encoding method and apparatus, and an image decoding method and apparatus, based on coding units and transform units of a tree structure according to an embodiment, are provided.

FIG. 1 illustrates a block diagram of an image decoding apparatus 100 according to an embodiment.

The image decoding apparatus 100 may include a bitstream obtainer 110 and a decoder 120. The bitstream obtainer 110 and the decoder 120 may include at least one processor. Also, the bitstream obtainer 110 and the decoder 120 may include memory storing instructions to be performed by the at least one processor.

The bitstream obtainer 110 may receive a bitstream. The bitstream includes information about an image encoded by an image encoding apparatus 200 to be described below. Also, the bitstream may be transmitted from the image encoding apparatus 200.. The image encoding apparatus 200 and the image decoding apparatus 100 may be connected via wired or wireless connections, and the bitstream obtainer 110 may receive the bitstream via wired or wireless connections. The bitstream obtainer 110 may receive the bitstream from a storage medium such as an optical medium, a hard disk, or the like. The decoder 120 may reconstruct an image based on information obtained from the received bitstream. The decoder 120 may obtain, from the bitstream, a syntax element for reconstructing the image. The decoder 120 may reconstruct the image based on the syntax element.

According to detailed descriptions of an operation of the image decoding apparatus 100, the bitstream obtainer 110 may receive the bitstream.

The image decoding apparatus 100 may perform an operation of obtaining, from a bitstream, a binary string corresponding to a split shape mode of a coding unit. The image decoding apparatus 100 may perform an operation of determining a split rule of the coding unit. Also, the image decoding apparatus 100 may perform an operation of splitting the coding unit into a plurality of coding units, based on at least one of the binary string corresponding to the split shape mode or the split rule. The image decoding apparatus 100 may determine an allowable first range of a size of the coding unit, according to a height to width ratio of the coding unit, so as to determine the split rule. The image decoding apparatus 100 may determine an allowable second range of the size of the coding unit, according to the split shape mode of the coding unit, so as to determine the split rule.

Hereinafter, splitting of a coding unit will be described in detail according to an embodiment of the present disclosure.

First, one picture may be split into one or more slices or one or more tiles. One slice or one tile may be a sequence of one or more largest coding units (coding tree units (CTUs)). According to an embodiment, one slice may include one or more tiles, or one slice may include one or more CTUs. A slice including one or more tiles may be determined within a picture.

There is a largest coding block (coding tree block (CTB)) conceptually compared to a largest coding unit (CTU). The largest coding block (CTB) indicates an NxN block including NxN samples (where, N is an integer). Each color component may be split into one or more largest coding blocks.

A largest coding unit (CTU) of a case where a picture includes three sample arrays (sample arrays for Y, Cr, and Cb components) is a unit including a largest coding block of a luma sample, two corresponding largest coding blocks of chroma samples, and syntax structures used to encode the luma sample and the chroma samples. A largest coding unit of a case where a picture is a monochrome picture is a unit including a largest coding block of a monochrome sample and syntax structures used to encode the monochrome samples. A largest coding unit of a case where a picture is a picture encoded in color planes separated according to color components is a unit including syntax structures used to encode the picture and samples of the picture.

One largest coding block (CTB) may be split into MxN coding blocks including MxN samples (where, M and N are integers).

A coding unit (CU) of a case where a picture has sample arrays for Y, Cr, and Cb components is a unit including a coding block of a luma sample, two corresponding coding blocks of chroma samples, and syntax structures used to encode the luma sample and the chroma samples. A coding unit of a case where a picture is a monochrome picture is a unit including a coding block of a monochrome sample and syntax structures used to encode the monochrome samples. A coding unit of a case where a picture is a picture encoded in color planes separated according to color components is a unit including syntax structures used to encode the picture and samples of the picture.

As described above, a largest coding block and a largest coding unit conceptually distinguished from each other, and a coding block and a coding unit may be conceptually distinguished from each other. That is, a (largest) coding unit may refer to a data structure including a (largest) coding block including a corresponding sample and a syntax structure corresponding to the (largest) coding block. However, because it is understood by one of ordinary skill in the art that a (largest) coding unit or a (largest) coding block refers to a block of a preset size including a preset number of samples, a largest coding block and a largest coding unit, or a coding block and a coding unit are mentioned in the following specification without being distinguished unless otherwise described.

An image may be split into largest coding units (CTUs). A size of each largest coding unit may be determined based on information obtained from a bitstream. A shape of each largest coding unit may be a square shape of the same size. However, the present disclosure is not limited thereto.

For example, information about a largest size of a luma coding block may be obtained from a bitstream. For example, the largest size of the luma coding block indicated by the information about the largest size of the luma coding block may be one of 4x4, 8x8, 16x16, 32x32, 64x64, 128x128, and 256x256.

For example, information about a luma block size difference and a largest size of a luma coding block that may be split into two may be obtained from a bitstream. The information about the luma block size difference may refer to a size difference between a luma largest coding unit and a largest luma coding block that may be split into two. Accordingly, when the information about the largest size of the luma coding block that may be split into two and the information about the luma block size difference obtained from the bitstream are combined with each other, a size of the luma largest coding unit may be determined. A size of a chroma largest coding unit may be determined by using the size of the luma largest coding unit. For example, when a Y:Cb:Cr ratio is 4:2:0 according to a color format, a size of a chroma block may be half a size of a luma block, and a size of a chroma largest coding unit may be half a size of a luma largest coding unit.

According to an embodiment, because information about a largest size of a luma coding block that is binary splittable is obtained from a bitstream, the largest size of the luma coding block that is binary splittable may be variably determined. In contrast, a largest size of a luma coding block that is ternary splittable may be fixed. For example, the largest size of the luma coding block that is ternary splittable in an I-picture may be 32x32, and the largest size of the luma coding block that is ternary splittable in a P-picture or a B-picture may be 64x64.

Also, a largest coding unit may be hierarchically split into coding units based on split shape mode information obtained from a bitstream. At least one of information indicating whether to perform quad splitting, information indicating whether to perform multi-splitting, split direction information, or split type information may be obtained as the split shape mode information from the bitstream.

For example, the information indicating whether to perform quad splitting may indicate whether a current coding unit is to be quad split (QUAD_SPLIT) or not.

When the current coding unit is not quad split, the information indicating whether to perform multi-splitting may indicate whether the current coding unit is to be no longer split (NO_SPLIT) or to be binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode SPLIT_TT_VER.

The image decoding apparatus 100 may obtain, from the bitstream, the binary string of the split shape mode information. A form of the bitstream received by the image decoding apparatus 100 may include fixed length binary code, unary code, truncated unary code, pre-determined binary code, or the like. The binary string is information in a binary format. The binary string may include at least one bit. The image decoding apparatus 100 may obtain the split shape mode information corresponding to the binary string, based on the split rule. The image decoding apparatus 100 may determine whether to quad-split a coding unit, whether not to split a coding unit, a split direction, and a split type, based on one binary string.

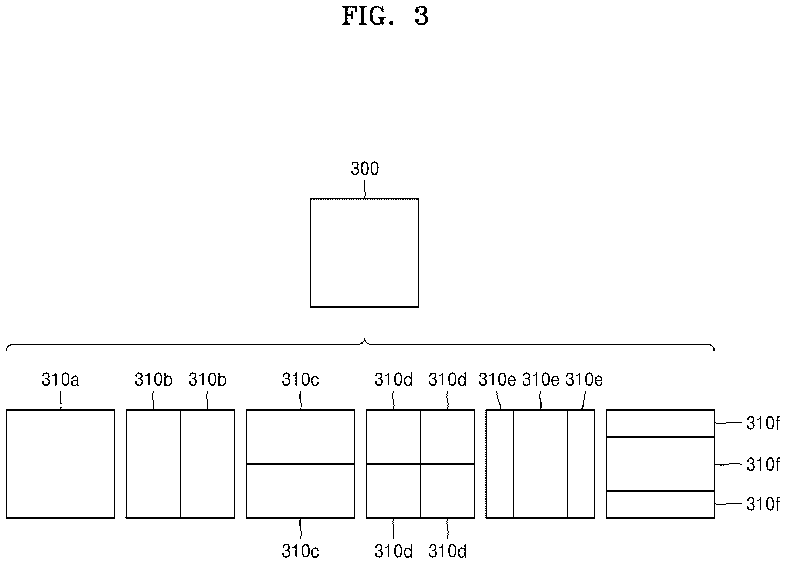

The coding unit may be smaller than or equal to the largest coding unit. For example, because a largest coding unit is a coding unit having a largest size, the largest coding unit is one of coding units. When split shape mode information about a largest coding unit indicates that splitting is not performed, a coding unit determined in the largest coding unit has the same size as that of the largest coding unit. When split shape mode information about a largest coding unit indicates that splitting is performed, the largest coding unit may be split into coding units. Also, when split shape mode information about a coding unit indicates that splitting is performed, the coding unit may be split into smaller coding units. However, the splitting of the image is not limited thereto, and the largest coding unit and the coding unit may not be distinguished. The splitting of the coding unit will be described in detail with reference to FIGS. 3 to 16.

Also, one or more prediction blocks for prediction may be determined from a coding unit. The prediction block may be equal to or smaller than the coding unit. Also, one or more transform blocks for transformation may be determined from a coding unit. The transform block may be equal to or smaller than the coding unit.

The shapes and sizes of the transform block and prediction block may not be related to each other.

In another embodiments, prediction may be performed using a coding unit as a prediction unit. Also, transformation may be performed using a coding unit as a transform block.

The splitting of the coding unit will be described in detail with reference to FIGS. 3 to 16. A current block and a neighboring block of the present disclosure may indicate one of the largest coding unit, the coding unit, the prediction block, and the transform block. Also, the current block of the current coding unit is a block that is currently being decoded or encoded or a block that is currently being split. The neighboring block may be a block reconstructed before the current block. The neighboring block may be spatially or temporally adjacent to the current block. The neighboring block may be located at one of bottom-left, left, top-left, top, top-right, right, bottom-right of the current block.

FIG. 3 illustrates a process, performed by the image decoding apparatus 100, of determining at least one coding unit by splitting a current coding unit, according to an embodiment.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a height to width ratio, or size of a coding unit.

The shape of the coding unit may include a square and a non-square. When the lengths of the width and height of the coding unit are the same (i.e., when the block shape of the coding unit is 4Nx4N), the image decoding apparatus 100 may determine the block shape information of the coding unit to be a square. The image decoding apparatus 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of the coding unit to be a non-square shape. When the shape of the coding unit is non-square, the image decoding apparatus 100 may determine the height to width ratio among the block shape information of the coding unit to be at least one of 1:2, 2:1, 1:4, 4:1, 1:8, 8:1, 1:16, 16:1, 1:32, or 32:1. Also, the image decoding apparatus 100 may determine whether the coding unit is in a horizontal direction or a vertical direction, based on the length of the width and the length of the height of the coding unit. Also, the image decoding apparatus 100 may determine the size of the coding unit, based on at least one of the length of the width, the length of the height, or the area of the coding unit.

According to an embodiment, the image decoding apparatus 100 may determine the shape of the coding unit by using the block shape information, and may determine a splitting method of the coding unit by using the split shape mode information. That is, a coding unit splitting method indicated by the split shape mode information may be determined based on a block shape indicated by the block shape information used by the image decoding apparatus 100.

The image decoding apparatus 100 may obtain the split shape mode information from a bitstream. However, an embodiment is not limited thereto, and the image decoding apparatus 100 and the image encoding apparatus 200 may determine pre-agreed split shape mode information, based on the block shape information. The image decoding apparatus 100 may determine the pre-agreed split shape mode information with respect to a largest coding unit or a smallest coding unit. For example, the image decoding apparatus 100 may determine split shape mode information with respect to the largest coding unit to be a quad split. Also, the image decoding apparatus 100 may determine split shape mode information regarding the smallest coding unit to be "no split". In particular, the image decoding apparatus 100 may determine the size of the largest coding unit to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the largest coding unit of a 256x256 size, based on the split shape mode information. Also, the image decoding apparatus 100 may determine the size of the smallest coding unit to be 4x4. The image decoding apparatus 100 may obtain split shape mode information indicating "no split" with respect to the smallest coding unit.

According to an embodiment, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information of a current coding unit 300 indicates a square shape, the decoder 120 may determine that a coding unit 310a having the same size as the current coding unit 300 is not split, based on the split shape mode information indicating no split, or may determine coding units 310b, 310c, 310d, 310e, 310f, etc. split based on the split shape mode information indicating a preset splitting method.

Referring to FIG. 3, according to an embodiment, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment, the image decoding apparatus 100 may determine three coding units 310e obtained by splitting the current coding unit 300 in a vertical direction, based on the split shape mode information indicating to perform ternary-splitting in a vertical direction. The image decoding apparatus 100 may determine three coding units 310f obtained by splitting the current coding unit 300 in a horizontal direction, based on the split shape mode information indicating to perform ternary-splitting in a horizontal direction. However, splitting methods of the square coding unit are not limited to the above-described methods, and the split shape mode information may indicate various methods. Preset splitting methods of splitting the square coding unit will be described in detail below in relation to various embodiments.

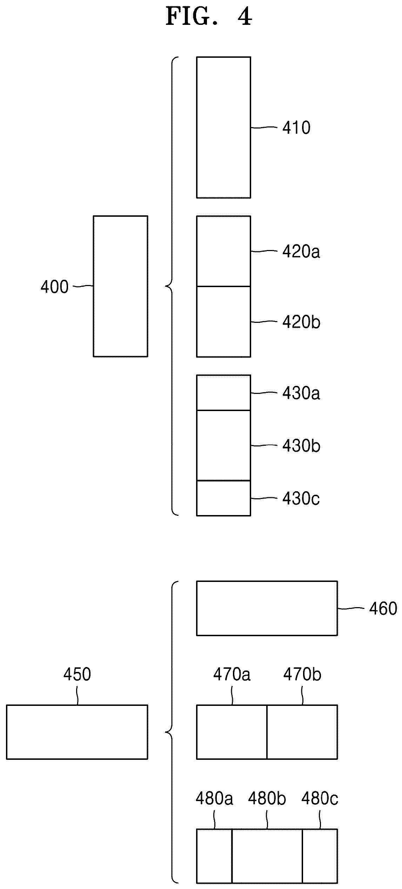

FIG. 4 illustrates a process, performed by the image decoding apparatus 100, of determining at least one coding unit by splitting a non-square coding unit, according to an embodiment.

According to an embodiment, the image decoding apparatus 100 may use block shape information indicating that a current coding unit has a non-square shape. The image decoding apparatus 100 may determine whether not to split the non-square current coding unit or whether to split the non-square current coding unit by using a preset splitting method, based on split shape mode information. Referring to FIG. 4, when the block shape information of a current coding unit 400 or 450 indicates a non-square shape, the image decoding apparatus 100 may determine that a coding unit 410 or 460 having the same size as the current coding unit 400 or 450 is not split, based on the split shape mode information indicating no split, or may determine coding units 420a, 420b, 430a, 430b, 430c, 470a, 470b, 480a, 480b, and 480c split based on the split shape mode information indicating a preset splitting method. Preset splitting methods of splitting a non-square coding unit will be described in detail below in relation to various embodiments.

According to an embodiment, the image decoding apparatus 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information.

According to an embodiment, when the image decoding apparatus 100 splits the non-square current coding unit 400 or 450 based on the split shape mode information, the image decoding apparatus 100 may consider the location of a long side of the non-square current coding unit 400 or 450 so as to split a current coding unit. For example, the image decoding apparatus 100 may determine a plurality of coding units by splitting the current coding unit 400 or 450 in a direction of splitting a long side of the current coding unit 400 or 450, in consideration of the shape of the current coding unit 400 or 450.

According to an embodiment, when the split shape mode information indicates to split (e.g., ternary-split) a coding unit into an odd number of blocks, the image decoding apparatus 100 may determine an odd number of coding units included in the current coding unit 400 or 450. For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c.

According to an embodiment, a height to width ratio of the current coding unit 400 or 450 may be 4:1 or 1:4. When the height to width ratio is 4:1, the block shape information may be a horizontal direction because the length of the width is longer than the length of the height. When the height to width ratio is 1:4, the block shape information may be a vertical direction because the length of the width is shorter than the length of the height. The image decoding apparatus 100 may determine to split a current coding unit into the odd number of blocks, based on the split shape mode information. Also, the image decoding apparatus 100 may determine a split direction of the current coding unit 400 or 450, based on the block shape information of the current coding unit 400 or 450. For example, when the current coding unit 400 is in the vertical direction, the image decoding apparatus 100 may determine the coding units 430a, 430b, and 430c by splitting the current coding unit 400 in the horizontal direction. Also, when the current coding unit 450 is in the horizontal direction, the image decoding apparatus 100 may determine the coding units 480a, 480b, and 480c by splitting the current coding unit 450 in the vertical direction.

According to an embodiment, the image decoding apparatus 100 may determine the odd number of coding units included in the current coding unit 400 or 450, and not all the determined coding units may have the same size. For example, a preset coding unit 430b or 480b from among the determined odd number of coding units 430a, 430b, and 430c, or 480a, 480b, and 480c may have a size different from the size of the other coding units 430a and 430c, or 480a and 480c. That is, coding units that may be determined by splitting the current coding unit 400 or 450 may have multiple sizes and, in some cases, all of the odd number of coding units 430a, 430b, and 430c, or 480a, 480b, and 480c may have different sizes.

According to an embodiment, when the split shape mode information indicates to split a coding unit into the odd number of blocks, the image decoding apparatus 100 may determine the odd number of coding units included in the current coding unit 400 or 450, and in addition, may put a preset restriction on at least one coding unit from among the odd number of coding units generated by splitting the current coding unit 400 or 450. Referring to FIG. 4, the image decoding apparatus 100 may set a decoding process regarding the coding unit 430b or 480b to be different from that of the other coding units 430a and 430c, or 480a or 480c, the coding unit 430b or 480b being located at the center among the three coding units 430a, 430b, and 430c or 480a, 480b, and 480c generated as the current coding unit 400 or 450 is split. For example, the image decoding apparatus 100 may restrict the coding unit 430b or 480b at the center location to be no longer split or to be split only a preset number of times, unlike the other coding units 430a and 430c, or 480a and 480c.

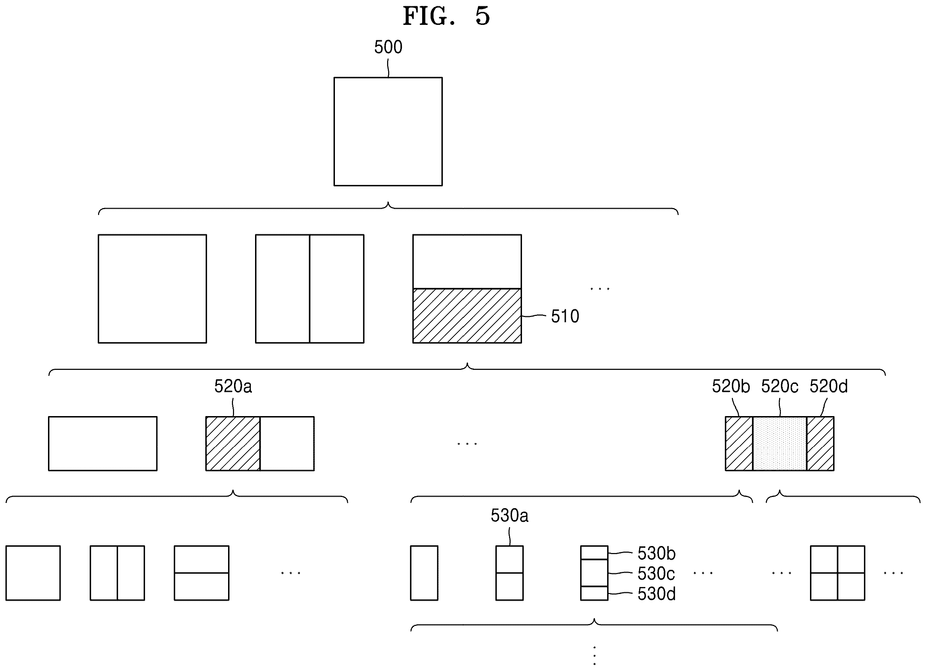

FIG. 5 illustrates a process, performed by the image decoding apparatus 100, of splitting a coding unit based on at least one of block shape information or split shape mode information, according to an embodiment.

According to an embodiment, the image decoding apparatus 100 may determine to split or not to split a square first coding unit 500 into coding units, based on at least one of the block shape information or the split shape mode information. According to an embodiment, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment are terms used to understand a relation before and after a coding unit is split. For example, a second coding unit may be determined by splitting a first coding unit, and a third coding unit may be determined by splitting the second coding unit. Hereinafter, it will be understood that the structure of the first coding unit, the second coding unit, and the third coding unit follows the above descriptions.

According to an embodiment, the image decoding apparatus 100 may determine to split or not to split the determined second coding unit 510 into coding units, based on the split shape mode information. Referring to FIG. 5, the image decoding apparatus 100 may or may not split the non-square second coding unit 510, which is determined by splitting the first coding unit 500, into one or more third coding units 520a, or 520b, 520c, and 520d based on the split shape mode information. The image decoding apparatus 100 may obtain the split shape mode information, and may obtain a plurality of various-shaped second coding units (e.g., the second coding unit 510) by splitting the first coding unit 500, based on the obtained split shape mode information, and the second coding unit 510 may be split by using a splitting method of the first coding unit 500 based on the split shape mode information. According to an embodiment, when the first coding unit 500 is split into the second coding units 510 based on the split shape mode information of the first coding unit 500, the second coding unit 510 may also be split into the third coding units (e.g., 520a, or 520b, 520c, and 520d) based on the split shape mode information of the second coding unit 510. That is, a coding unit may be recursively split based on the split shape mode information of each coding unit. Therefore, a square coding unit may be determined by splitting a non-square coding unit, and a non-square coding unit may be determined by recursively splitting the square coding unit.

Referring to FIG. 5, a preset coding unit from among the odd number of third coding units 520b, 520c, and 520d determined by splitting the non-square second coding unit 510 (e.g., a coding unit at a center location or a square coding unit) may be recursively split. According to an embodiment, the square third coding unit 520b from among the odd number of third coding units 520b, 520c, and 520d may be split in a horizontal direction into a plurality of fourth coding units. A non-square fourth coding unit 530b or 530d from among a plurality of fourth coding units 530a, 530b, 530c, and 530d may be split into a plurality of coding units again. For example, the non-square fourth coding unit 530b or 530d may be split into the odd number of coding units again. A method that may be used to recursively split a coding unit will be described below in relation to various embodiments.

According to an embodiment, the image decoding apparatus 100 may split each of the third coding units 520a, or 520b, 520c, and 520d into coding units, based on the split shape mode information. Also, the image decoding apparatus 100 may determine not to split the second coding unit 510 based on the split shape mode information. According to an embodiment, the image decoding apparatus 100 may split the non-square second coding unit 510 into the odd number of third coding units 520b, 520c, and 520d. The image decoding apparatus 100 may put a preset restriction on a preset third coding unit from among the odd number of third coding units 520b, 520c, and 520d. For example, the image decoding apparatus 100 may restrict the third coding unit 520c at a center location from among the odd number of third coding units 520b, 520c, and 520d to be no longer split or to be split a settable number of times.

Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a preset splitting method (e.g., split into only four coding units or split by using a splitting method of the second coding unit 510), or to be split only a preset number of times (e.g., split only n times (where n>0)). However, the restrictions on the third coding unit 520c at the center location are not limited to the above-described examples, and may include various restrictions for decoding the third coding unit 520c at the center location differently from the other third coding units 520b and 520d.

According to an embodiment, the image decoding apparatus 100 may obtain the split shape mode information, which is used to split a current coding unit, from a preset location in the current coding unit.

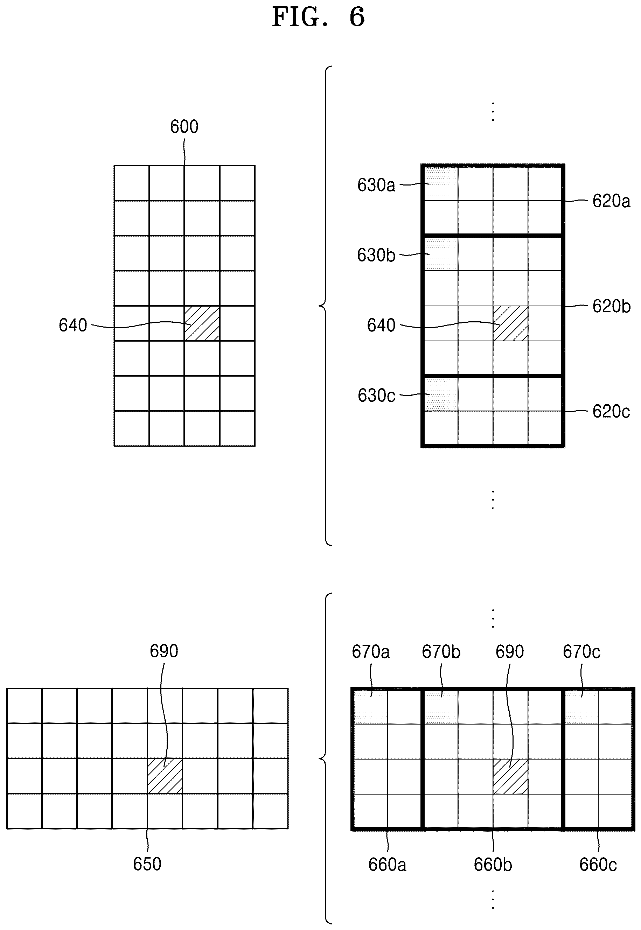

FIG. 6 illustrates a method, performed by the image decoding apparatus 100, of determining a preset coding unit from among an odd number of coding units, according to an embodiment.

Referring to FIG. 6, split shape mode information of a current coding unit 600 or 650 may be obtained from a sample of a preset location (e.g., a sample 640 or 690 of a center location) from among a plurality of samples included in the current coding unit 600 or 650. However, the preset location in the current coding unit 600, from which at least one piece of the split shape mode information may be obtained, is not limited to the center location in FIG. 6, and may include various locations included in the current coding unit 600 (e.g., top, bottom, left, right, top-left, bottom-left, top-right, and bottom-right locations). The image decoding apparatus 100 may obtain the split shape mode information from the preset location and may determine to split or not to split the current coding unit into various-shaped and various-sized coding units.

According to an embodiment, when the current coding unit is split into a preset number of coding units, the image decoding apparatus 100 may select one of the coding units. Various methods may be used to select one of a plurality of coding units, and descriptions of the methods will be described below in relation to various embodiments.

According to an embodiment, the image decoding apparatus 100 may split the current coding unit into a plurality of coding units, and may determine a coding unit at a preset location.

According to an embodiment, image decoding apparatus 100 may use information indicating locations of the odd number of coding units so as to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about the locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of preset samples included in the coding units 620a, 620b, and 620c. In detail, the image decoding apparatus 100 may determine the coding unit 620b at the center location by determining the locations of the coding units 620a, 620b, and 620c based on information indicating locations of top-left samples 630a, 630b, and 630c of the coding units 620a, 620b, and 620c.

According to an embodiment, the information indicating the locations of the top-left samples 630a, 630b, and 630c, which are included in the coding units 620a, 620b, and 620c, respectively, may include information about locations or coordinates of the coding units 620a, 620b, and 620c in a picture. According to an embodiment, the information indicating the locations of the top-left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment, information indicating the location of the top-left sample 630a of the above coding unit 620a may include coordinates (e.g., xa, ya), information indicating the location of the top-left sample 630b of the middle coding unit 620b may include coordinates (e.g., xb, yb), and information indicating the location of the top-left sample 630c of the lower coding unit 620c may include coordinates (e.g., xc, yc). The image decoding apparatus 100 may determine the middle coding unit 620b by using the coordinates of the top-left samples 630a, 630b, and 630c which are included in the coding units 620a, 620b, and 620c, respectively. For example, when the coordinates of the top-left samples 630a, 630b, and 630c are sorted in an ascending or descending order, the coding unit 620b including the coordinates (e.g., xb, yb) of the sample 630b at a center location may be determined as a coding unit at a center location from among the coding units 620a, 620b, and 620c determined by splitting the current coding unit 600. However, the coordinates indicating the locations of the top-left samples 630a, 630b, and 630c may include coordinates indicating absolute locations in the picture, or may use coordinates (e.g., dxb, dyb) indicating a relative location of the top-left sample 630b of the middle coding unit 620b and coordinates (e.g.,dxc, dyc) indicating a relative location of the top-left sample 630c of the lower coding unit 620c with reference to the location of the top-left sample 630a of the above coding unit 620a. A method of determining a coding unit at a preset location by using coordinates of a sample included in the coding unit, as information indicating a location of the sample, is not limited to the above-described method, and may include various arithmetic methods of using the coordinates of the sample.

According to an embodiment, the image decoding apparatus 100 may split the current coding unit 600 into a plurality of coding units 620a, 620b, and 620c, and may select one of the coding units 620a, 620b, and 620c based on a preset criterion. For example, the image decoding apparatus 100 may select the coding unit 620b that has a size different from that of the others, from among the coding units 620a, 620b, and 620c.

According to an embodiment, the image decoding apparatus 100 may determine the width or height of each of the coding units 620a, 620b, and 620c by using the coordinates (xa, ya) that is the information indicating the location of the top-left sample 630a of the above coding unit 620a, the coordinates (xb, yb) that is the information indicating the location of the top-left sample 630b of the middle coding unit 620b, and the coordinates (xc, yc) that is the information indicating the location of the top-left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment, the image decoding apparatus 100 may determine the width of the above coding unit 620a to be the width of the current coding unit 600. The image decoding apparatus 100 may determine the height of the above coding unit 620a to be yb-ya. According to an embodiment, the image decoding apparatus 100 may determine the width of the middle coding unit 620b to be the width of the current coding unit 600. The image decoding apparatus 100 may determine the height of the middle coding unit 620b to be yc-yb. According to an embodiment, the image decoding apparatus 100 may determine the width or height of the lower coding unit by using the width or height of the current coding unit or the widths or heights of the above and middle coding units 620a and 620b. The image decoding apparatus 100 may determine a coding unit that has a size different from that of the others, based on the determined widths and heights of the coding units 620a, 620b, and 620c. Referring to FIG. 6, the image decoding apparatus 100 may determine the middle coding unit 620b that has a size different from the size of the above and lower coding units 620a and 620c, as the coding unit of the preset location. However, the above-described method, performed by the image decoding apparatus 100, of determining a coding unit having a size different from the size of the other coding units merely corresponds to an example of determining a coding unit at a preset location by using the sizes of coding units that are determined based on coordinates of samples, and thus, various methods of determining a coding unit at a preset location by comparing the sizes of coding units that are determined based on coordinates of preset samples may be used.

The image decoding apparatus 100 may determine the width or height of each of the coding units 660a, 660b, and 660c by using the coordinates (e.g., xd, yd) that is information indicating the location of a top-left sample 670a of the left coding unit 660a, the coordinates (e.g., xe, ye) that is information indicating the location of a top-left sample 670b of the middle coding unit 660b, and the coordinates (e.g., xf, yf) that is information indicating a location of the top-left sample 670c of the right coding unit 660c. The image decoding apparatus 100 may determine the respective sizes of the coding units 660a, 660b, and 660c by using the coordinates (e.g., (xd, yd), (xe, ye), (xf, yf)) indicating the locations of the coding units 660a, 660b, and 660c, respectively

According to an embodiment, the image decoding apparatus 100 may determine the width of the left coding unit 660a to be xe-xd. The image decoding apparatus 100 may determine the height of the left coding unit 660a to be the height of the current coding unit 650. According to an embodiment, the image decoding apparatus 100 may determine the width of the middle coding unit 660b to be xf-xe. The image decoding apparatus 100 may determine the height of the middle coding unit 660b to be the height of the current coding unit 600. According to an embodiment, the image decoding apparatus 100 may determine the width or height of the right coding unit 660c by using the width or height of the current coding unit 650 or the widths or heights of the left and middle coding units 660a and 660b. The image decoding apparatus 100 may determine a coding unit that has a size different from that of the others, based on the determined widths and heights of the coding units 660a, 660b, and 660c. Referring to FIG. 6, the image decoding apparatus 100 may determine the middle coding unit 660b that has a size different from the sizes of the left and right coding units 660a and 660c, as the coding unit of the certain location. However, the above-described method, performed by the image decoding apparatus 100, of determining a coding unit having a size different from the size of the other coding units merely corresponds to an example of determining a coding unit at a preset location by using the sizes of coding units that are determined based on coordinates of samples, and thus, various methods of determining a coding unit at a preset location by comparing the sizes of coding units that are determined based on coordinates of certain samples may be used.

However, locations of samples considered to determine locations of coding units are not limited to the above-described top-left locations, and information about arbitrary locations of samples included in the coding units may be used.

According to an embodiment, the image decoding apparatus 100 may select a coding unit at a preset location from among an odd number of coding units determined by splitting the current coding unit, by considering the shape of the current coding unit. For example, when the current coding unit has a non-square shape, a width of which is longer than a height, the image decoding apparatus 100 may determine the coding unit at the preset location in a horizontal direction. That is, the image decoding apparatus 100 may determine one of coding units at different locations in a horizontal direction and may put a restriction on the coding unit. When the current coding unit has a non-square shape, a height of which is longer than a width, the image decoding apparatus 100 may determine the coding unit at the preset location in a vertical direction. That is, the image decoding apparatus 100 may determine one of coding units at different locations in a vertical direction and may put a restriction on the coding unit.

According to an embodiment, the image decoding apparatus 100 may use information indicating respective locations of an even number of coding units so as to determine the coding unit at the preset location from among the even number of coding units. The image decoding apparatus 100 may determine an even number of coding units by splitting (binary-splitting) the current coding unit, and may determine the coding unit at the preset location by using the information about the locations of the even number of coding units. An operation related thereto may correspond to the operation of determining a coding unit at a preset location (e.g., a center location) from among an odd number of coding units, which has been described in detail above in relation to FIG. 6, and thus, detailed descriptions thereof are not provided here.

According to an embodiment, when a non-square current coding unit is split into a plurality of coding units, preset information about a coding unit at a preset location may be used in a splitting operation to determine the coding unit at the preset location from among the plurality of coding units. For example, the image decoding apparatus 100 may use at least one of block shape information or split shape mode information, which is stored in a sample included in a middle coding unit, in a splitting operation to determine a coding unit at a center location from among the plurality of coding units determined by splitting the current coding unit.

Referring to FIG. 6, the image decoding apparatus 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding apparatus 100 may determine the coding unit 620b at the center location, in consideration of a location from which the split shape mode information is obtained. That is, the split shape mode information of the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment, preset information for identifying the coding unit at the preset location may be obtained from a preset sample included in a coding unit to be determined. Referring to FIG. 6, the image decoding apparatus 100 may use the split shape mode information that is obtained from a sample at a preset location in the current coding unit 600 (e.g., a sample at a center location of the current coding unit 600) to determine a coding unit at a preset location from among the plurality of the coding units 620a, 620b, and 620c determined by splitting the current coding unit 600 (e.g., a coding unit at a center location from among a plurality of split coding units). That is, the image decoding apparatus 100 may determine the sample at the preset location by considering a block shape of the current coding unit 600, may determine the coding unit 620b including a sample, from which certain information (e.g., the split shape mode information) may be obtained, from among the plurality of coding units 620a, 620b, and 620c determined by splitting the current coding unit 600, and may put a preset restriction on the coding unit 620b. Referring to FIG. 6, according to an embodiment, the image decoding apparatus 100 may determine the sample 640 at the center location of the current coding unit 600 as the sample from which the preset information may be obtained, and may put a preset restriction on the coding unit 620b including the sample 640, in a decoding operation. However, the location of the sample from which the preset information may be obtained is not limited to the above-described location, and may include arbitrary locations of samples included in the coding unit 620b to be determined for a restriction.

According to an embodiment, the location of the sample from which the preset information may be obtained may be determined based on the shape of the current coding unit 600. According to an embodiment, the block shape information may indicate whether the current coding unit has a square or non-square shape, and the location of the sample from which the preset information may be obtained may be determined based on the shape. For example, the image decoding apparatus 100 may determine a sample located on a boundary for splitting at least one of a width or height of the current coding unit in half, as the sample from which the preset information may be obtained, by using at least one of information about the width of the current coding unit or information about the height of the current coding unit. As another example, when the block shape information of the current coding unit indicates a non-square shape, the image decoding apparatus 100 may determine one of samples adjacent to a boundary for splitting a long side of the current coding unit in half, as the sample from which the preset information may be obtained.

According to an embodiment, when the current coding unit is split into a plurality of coding units, the image decoding apparatus 100 may use the split shape mode information so as to determine a coding unit at a preset location from among the plurality of coding units. According to an embodiment, the image decoding apparatus 100 may obtain the split shape mode information from a sample at a preset location in a coding unit, and may split the plurality of coding units, which are generated by splitting the current coding unit, by using the split shape mode information, which is obtained from the sample of the preset location in each of the plurality of coding units. That is, a coding unit may be recursively split based on the split shape mode information that is obtained from the sample at the preset location in each coding unit. An operation of recursively splitting a coding unit has been described above in relation to FIG. 5, and thus, detailed descriptions thereof are not provided here.

According to an embodiment, the image decoding apparatus 100 may determine one or more coding units by splitting the current coding unit, and may determine an order of decoding the one or more coding units, based on a preset block (e.g., the current coding unit).

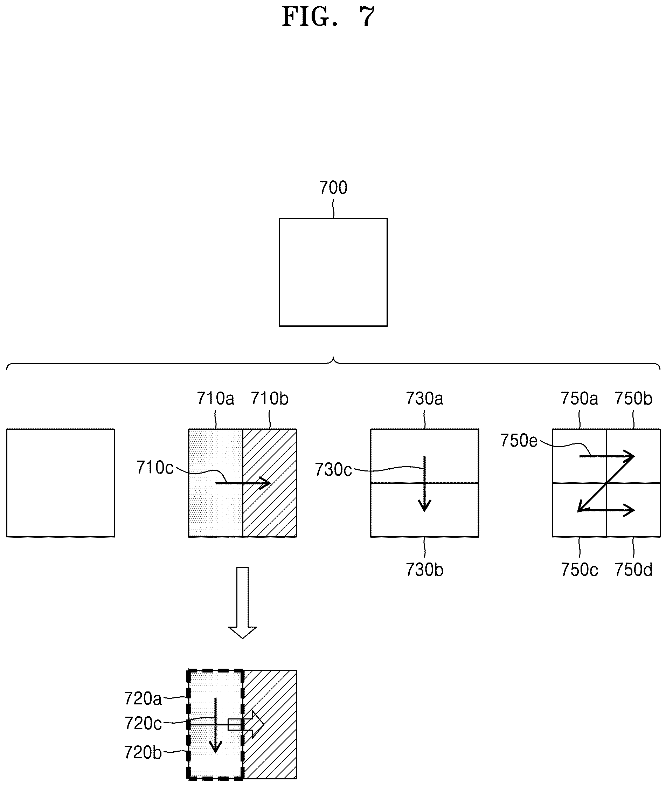

FIG. 7 illustrates an order of processing a plurality of coding units when the image decoding apparatus 100 determines the plurality of coding units by splitting a current coding unit, according to an embodiment.

According to an embodiment, the image decoding apparatus 100 may determine second coding units 710a and 710b by splitting a first coding unit 700 in a vertical direction, may determine second coding units 730a and 730b by splitting the first coding unit 700 in a horizontal direction, or may determine second coding units 750a, 750b, 750c, and 750d by splitting the first coding unit 700 in vertical and horizontal directions, based on split shape mode information.

Referring to FIG. 7, the image decoding apparatus 100 may determine to process the second coding units 710a and 710b that are determined by splitting the first coding unit 700 in a vertical direction, in a horizontal direction order 710c. The image decoding apparatus 100 may determine to process the second coding units 730a and 730b that are determined by splitting the first coding unit 700 in a horizontal direction, in a vertical direction order 730c. The image decoding apparatus 100 may determine to process the second coding units 750a, 750b, 750c, and 750d that are determined by splitting the first coding unit 700 in vertical and horizontal directions, in a preset order for processing coding units in a row and then processing coding units in a next row (e.g., in a raster scan order or Z-scan order 750e).

According to an embodiment, the image decoding apparatus 100 may recursively split coding units. Referring to FIG. 7, the image decoding apparatus 100 may determine the plurality of coding units 710a, 710b, 730a, 730b, 750a, 750b, 750c, and 750d by splitting the first coding unit 700, and may recursively split each of the determined plurality of coding units 710a, 710b, 730a, 730b, 750a, 750b, 750c, and 750d. A splitting method of the plurality of coding units 710a, 710b, 730a, 730b, 750a, 750b, 750c, and 750d may correspond to a splitting method of the first coding unit 700. Accordingly, each of the plurality of coding units 710a, 710b, 730a, 730b, 750a, 750b, 750c, and 750d may be independently split into a plurality of coding units. Referring to FIG. 7, the image decoding apparatus 100 may determine the second coding units 710a and 710b by splitting the first coding unit 700 in a vertical direction, and may determine to independently split or not to split each of the second coding units 710a and 710b.

According to an embodiment, the image decoding apparatus 100 may determine third coding units 720a and 720b by splitting the left second coding unit 710a in a horizontal direction, and may not split the right second coding unit 710b.

According to an embodiment, a processing order of coding units may be determined based on an operation of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. As the left and right second coding units 710a and 710b are processed in the horizontal direction order 710c, the right second coding unit 710b may be processed after the third coding units 720a and 720b included in the left second coding unit 710a are processed in the vertical direction order 720c. An operation of determining a processing order of coding units based on a coding unit before being split is not limited to the above-described example, and it should be understood that various methods may be used to independently process coding units that are split and determined to various shapes, in a preset order.

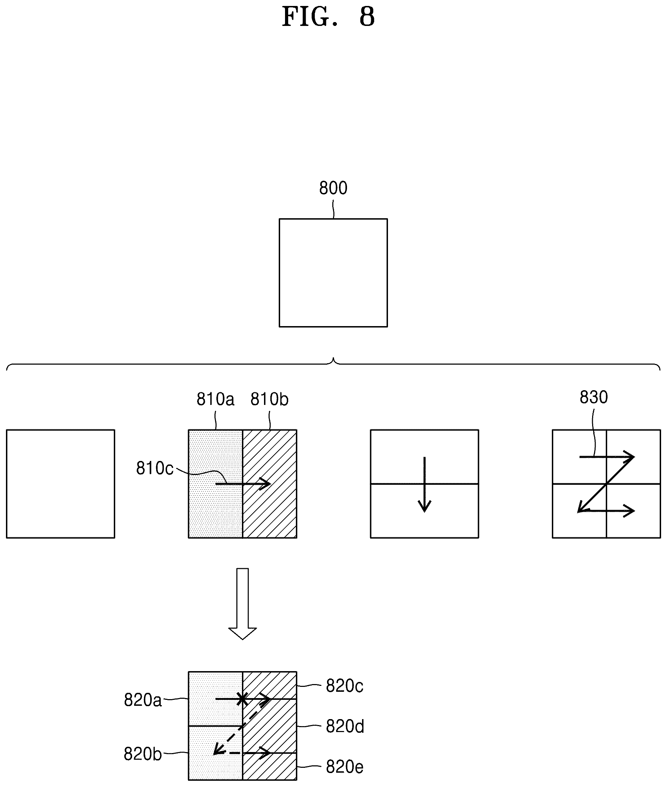

FIG. 8 illustrates a process, performed by the image decoding apparatus 100, of determining that a current coding unit is to be split into an odd number of coding units, when the coding units are not processable in a preset order, according to an embodiment.

According to an embodiment, the image decoding apparatus 100 may determine whether the current coding unit is split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c, 820d and 820e. According to an embodiment, the image decoding apparatus 100 may determine the plurality of third coding units 820a and 820b by splitting the left second coding unit 810a in a horizontal direction, and may split the right second coding unit 810b into the odd number of third coding units 820c to 820e.

According to an embodiment, the image decoding apparatus 100 may determine whether that is any coding unit being split into an odd number of coding units, by determining whether the third coding units 820a and 820b, and 820c, 820d, and 820e are processable in a preset order. Referring to FIG. 8, the image decoding apparatus 100 may determine the third coding units 820a and 820b, and 820c, 820d and 820e by recursively splitting the first coding unit 800. The image decoding apparatus 100 may determine whether any of the first coding unit 800, the second coding units 810a and 810b, and the third coding units 820a and 820b, and 820c, 820d and 820e are split into an odd number of coding units, based on at least one of the block shape information or the split shape mode information. For example, the right second coding unit 810b among the second coding units 810a and 810b may be split into an odd number of third coding units 820c, 820d, and 820e. A processing order of a plurality of coding units included in the first coding unit 800 may be a preset order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the preset order.

According to an embodiment, the image decoding apparatus 100 may determine whether the third coding units 820a and 820b, and 820c, 820d and 820e included in the first coding unit 800 satisfy the condition for processing in the preset order, and the condition relates to whether at least one of a width or height of the second coding units 810a and 810b is split in half along a boundary of the third coding units 820a and 820b, and 820c, 820d and 820e. For example, the third coding units 820a and 820b that are determined when the height of the left second coding unit 810a of the non-square shape is split in half may satisfy the condition. It may be determined that the third coding units 820c, 820d, and 820e do not satisfy the condition because the boundaries of the third coding units 820c, 820d, and 820e that are determined when the right second coding unit 810b is split into three coding units are unable to split the width or height of the right second coding unit 810b in half. When the condition is not satisfied as described above, the image decoding apparatus 100 may determine disconnection of a scan order, and may determine that the right second coding unit 810b is split into an odd number of coding units, based on a result of the determination. According to an embodiment, when a coding unit is split into an odd number of coding units, the image decoding apparatus 100 may put a preset restriction on a coding unit at a preset location from among the split coding units, and the restriction or the preset location is described above in relation to various embodiments, and thus, detailed descriptions thereof are not provided here.

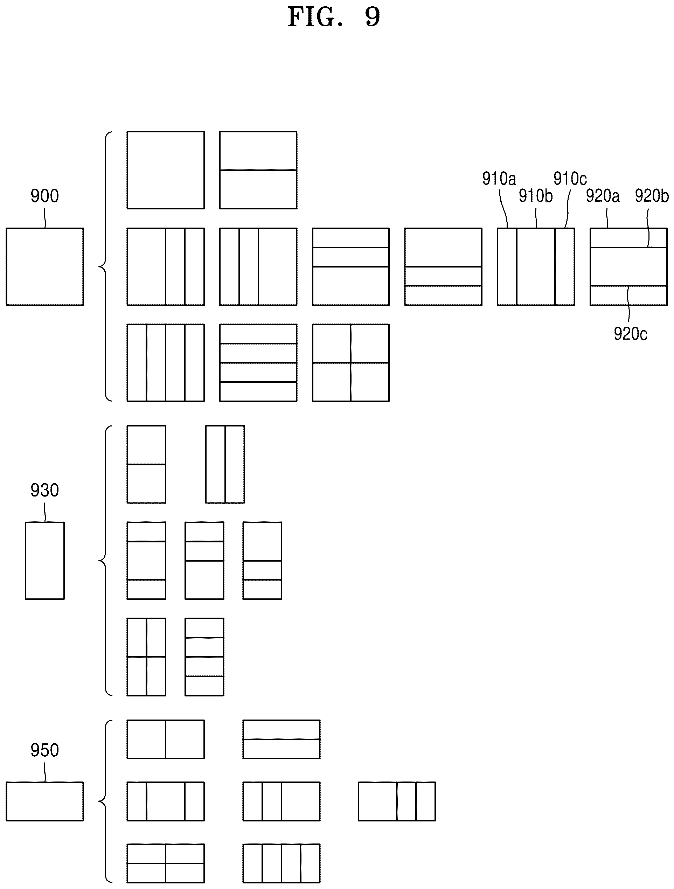

FIG. 9 illustrates a process, performed by the image decoding apparatus 100, of determining at least one coding unit by splitting a first coding unit 900, according to an embodiment.

According to an embodiment, the image decoding apparatus 100 may split the first coding unit 900, based on split shape mode information obtained via the bitstream obtainer 110. The square first coding unit 900 may be split into four square coding units, or may be split into a plurality of non-square coding units. For example, referring to FIG. 9, when the split shape mode information indicates to split the first coding unit 900 into non-square coding units, the image decoding apparatus 100 may split the first coding unit 900 into a plurality of non-square coding units. In detail, when the split shape mode information indicates to determine an odd number of coding units by splitting the first coding unit 900 in a horizontal direction or a vertical direction, the image decoding apparatus 100 may split the square first coding unit 900 into an odd number of coding units that are second coding units 910a, 910b, and 910c determined by splitting the square first coding unit 900 in a vertical direction or second coding units 920a, 920b, and 920c determined by splitting the square first coding unit 900 in a horizontal direction.

According to an embodiment, the image decoding apparatus 100 may determine whether the second coding units 910a, 910b, 910c, 920a, 920b, and 920c included in the first coding unit 900 satisfy a condition for processing in a preset order, and the condition relates to whether at least one of a width or height of the first coding unit 900 is split in half along a boundary of the second coding units 910a, 910b, 910c, 920a, 920b, and 920c. Referring to FIG. 9, as boundaries of the second coding units 910a, 910b, and 910c determined by splitting the square first coding unit 900 in a vertical direction do not split the width of the first coding unit 900 in half, it may be determined that the first coding unit 900 does not satisfy the condition for processing in the preset order. In addition, as boundaries of the second coding units 920a, 920b, and 920c determined by splitting the square first coding unit 900 in a horizontal direction do not split the height of the first coding unit 900 in half, it may be determined that the first coding unit 900 does not satisfy the condition for processing in the preset order. When the condition is not satisfied as described above, the image decoding apparatus 100 may determine disconnection of a scan order, and may determine that the first coding unit 900 is split into an odd number of coding units, based on a result of the determination. According to an embodiment, when a coding unit is split into an odd number of coding units, the image decoding apparatus 100 may put a preset restriction on a coding unit at a preset location from among the split coding units, and the restriction or the preset location is described above in relation to various embodiments, and thus, detailed descriptions thereof are not provided here.

According to an embodiment, the image decoding apparatus 100 may determine various-shaped coding units by splitting a first coding unit.

Referring to FIG. 9, the image decoding apparatus 100 may split the square first coding unit 900 or a non-square first coding unit 930 or 950 into various-shaped coding units.

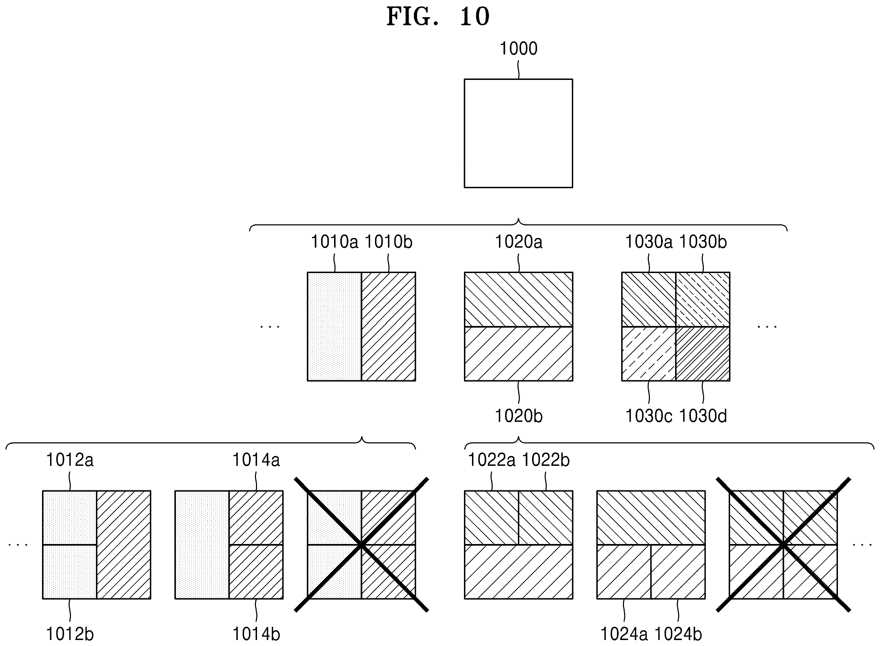

FIG. 10 illustrates that a shape into which a second coding unit is splittable is restricted when the second coding unit having a non-square shape, which is determined when the image decoding apparatus 100 splits a first coding unit 1000, satisfies a preset condition, according to an embodiment.

According to an embodiment, the image decoding apparatus 100 may determine to split the square first coding unit 1000 into non-square second coding units 1010a, 1010b, 1020a, and 1020b, based on split shape mode information obtained via the bitstream obtainer 110. The second coding units 1010a, 1010b, 1020a, and 1020b may be independently split. Accordingly, the image decoding apparatus 100 may determine to split or not to split each of the second coding units 1010a, 1010b, 1020a, and 1020b into a plurality of coding units, based on the split shape mode information of each of the second coding units 1010a, 1010b, 1020a, and 1020b. According to an embodiment, the image decoding apparatus 100 may determine third coding units 1012a and 1012b by splitting the non-square left second coding unit 1010a that is determined by splitting the first coding unit 1000 in a vertical direction, in a horizontal direction. However, when the left second coding unit 1010a is split in a horizontal direction, the image decoding apparatus 100 may restrict the right second coding unit 1010b not to be split in a horizontal direction in which the left second coding unit 1010a is split. When third coding units 1014a and 1014b are determined by splitting the right second coding unit 1010b in a same direction, the third coding units 1012a and 1012b or 1014a and 1014b may be determined in a manner that the left and right second coding units 1010a and 1010b are independently split in a horizontal direction. However, this case serves equally as a case in which the image decoding apparatus 100 splits the first coding unit 1000 into four square second coding units 1030a, 1030b, 1030c, and 1030d, based on the split shape mode information, and may be inefficient in terms of image decoding.

According to an embodiment, the image decoding apparatus 100 may determine third coding units 1022a and 1022b or 1024a and 1024b by splitting the non-square second coding unit 1020a or 1020b which is determined by splitting the first coding unit 1000 in a horizontal direction, in a vertical direction. However, when a second coding unit (e.g., the above second coding unit 1020a) is split in a vertical direction, for the above-described reason, the image decoding apparatus 100 may restrict the other second coding unit (e.g., the lower second coding unit 1020b) not to be split in a vertical direction in which the above second coding unit 1020a is split.

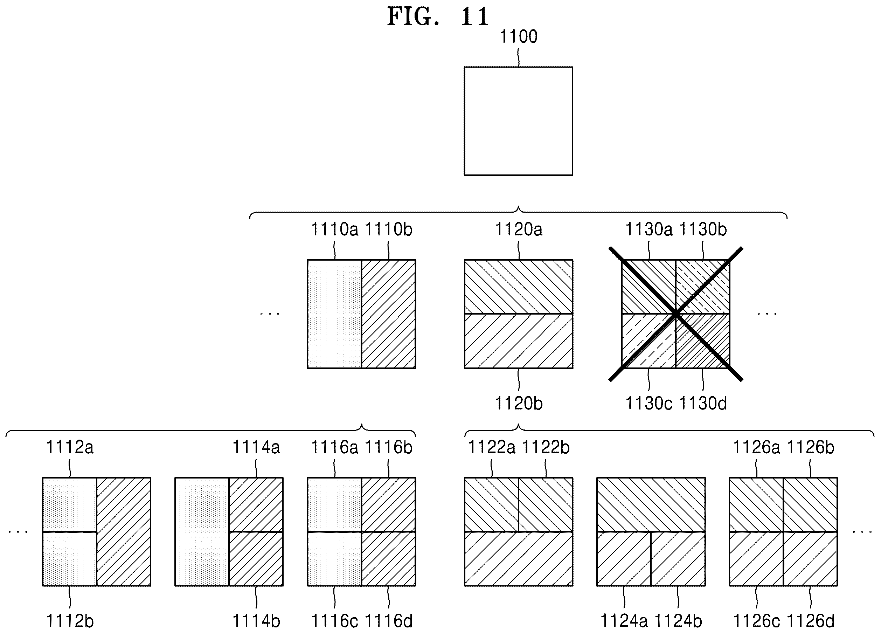

FIG. 11 illustrates a process, performed by the image decoding apparatus 100, of splitting a square coding unit when split shape mode information is unable to indicate that the square coding unit is split into four square coding units, according to an embodiment.

According to an embodiment, the image decoding apparatus 100 may determine second coding units 1110a, 1110b, 1120a, 1120b, etc. by splitting a first coding unit 1100, based on split shape mode information. The split shape mode information may include information about various methods of splitting a coding unit but, the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d. Based on the split shape mode information, the image decoding apparatus 100 may determine the non-square second coding units 1110a, 1110b, 1120a, 1120b, etc.

According to an embodiment, the image decoding apparatus 100 may independently split the non-square second coding units 1110a, 1110b, 1120a, 1120b, etc. Each of the second coding units 1110a, 1110b, 1120a, 1120b, etc. may be recursively split in a preset order, and this splitting method may correspond to a method of splitting the first coding unit 1100, based on the split shape mode information.

For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding apparatus 100 may determine square third coding units 1122a and 1122b by splitting the above second coding unit 1120a in a vertical direction, and may determine square third coding units 1124a and 1124b by splitting the lower second coding unit 1120b in a vertical direction. Furthermore, the image decoding apparatus 100 may determine square third coding units 1126a, 1126b, 1126c, and 1126d by splitting both of the above and lower second coding units 1120a and 1120b in a vertical direction. In this case, coding units having the same shape as the four square second coding units 1130a, 1130b, 1130c, and 1130d split from the first coding unit 1100 may be determined.

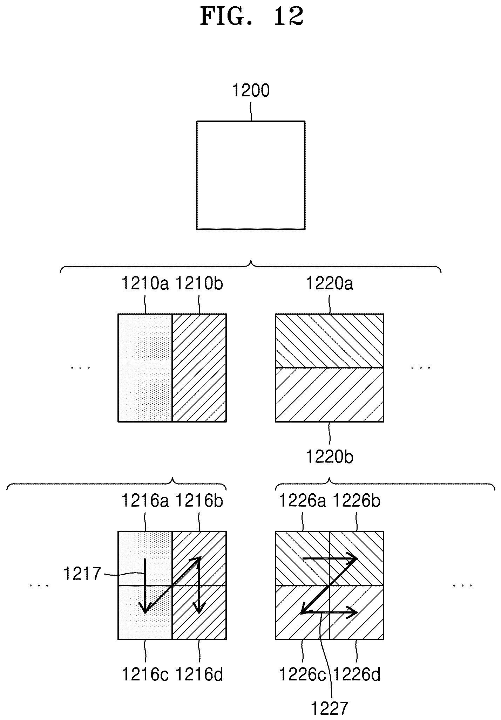

FIG. 12 illustrates that a processing order between a plurality of coding units may be changed depending on a process of splitting a coding unit, according to an embodiment.

According to an embodiment, the image decoding apparatus 100 may split a first coding unit 1200, based on split shape mode information. When a block shape indicates a square shape and the split shape mode information indicates to split the first coding unit 1200 in at least one of a horizontal direction or a vertical direction, the image decoding apparatus 100 may determine second coding units (for examples, second coding units 1210a, 1210b, 1220a, 1220b, etc.) by splitting the first coding unit 1200. Referring to FIG. 12, the non-square second coding units 1210a, 1210b, 1220a, and 1220b determined by splitting the first coding unit 1200 in only a horizontal direction or vertical direction may be independently split based on the split shape mode information of each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a vertical direction. An operation of splitting the second coding units 1210a, 1210b, 1220a, and 1220b is described above with reference to FIG. 11, and thus, detailed descriptions thereof are not provided here.

According to an embodiment, the image decoding apparatus 100 may process coding units in a preset order. An operation of processing coding units in a predetermined order is described above with reference to FIG. 7, and thus, detailed descriptions thereof are not provided here. Referring to FIG. 12, the image decoding apparatus 100 may determine four square third coding units 1216a, 1216b, 1216c, and 1216d, and 1226a, 1226b, 1226c, and 1226d by splitting the square first coding unit 1200. According to an embodiment, the image decoding apparatus 100 may determine processing orders of the third coding units 1216a, 1216b, 1216c, and 1216d, and 1226a, 1226b, 1226c, and 1226d, based on a splitting method of the first coding unit 1200.

According to an embodiment, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the above second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1220b, respectively. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show same-shaped coding units split from the first coding unit 1200. Accordingly, by recursively splitting a coding unit in different manners based on the split shape mode information, the image decoding apparatus 100 may process a plurality of coding units in different orders even when the coding units are eventually determined to be the same shape.

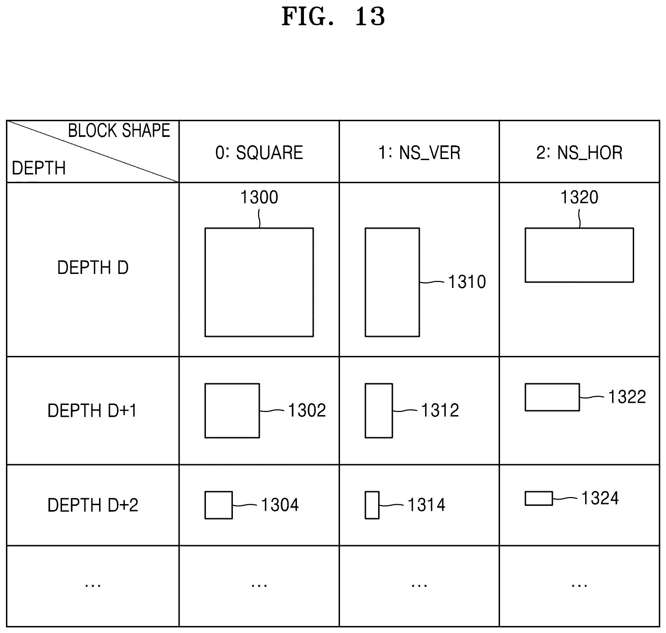

FIG. 13 illustrates a process of determining a depth of a coding unit as a shape and size of the coding unit change, when the coding unit is recursively split such that a plurality of coding units are determined, according to an embodiment.

According to an embodiment, the image decoding apparatus 100 may determine the depth of the coding unit, based on a preset criterion. For example, the preset criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. Hereinafter, a coding unit having an increased depth is expressed as a coding unit of a deeper depth.

Referring to FIG. 13, according to an embodiment, the image decoding apparatus 100 may determine a second coding unit 1302 and a third coding unit 1304 of deeper depths by splitting a square first coding unit 1300 based on block shape information indicating a square shape (for example, the block shape information may be expressed as '0: SQUARE'). Assuming that the size of the square first coding unit 1300 is 2N×2N, the second coding unit 1302 determined by splitting a width and height of the first coding unit 1300 in 1/2 may have a size of N×N. Furthermore, the third coding unit 1304 determined by splitting a width and height of the second coding unit 1302 in 1/2 may have a size of N/2×N/2. In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment, the image decoding apparatus 100 may determine a second coding unit 1312 or 1322 and a third coding unit 1314 or 1324 of deeper depths by splitting a non-square first coding unit 1310 or 1320 based on block shape information indicating a non-square shape (e.g., the block shape information may be expressed as '1: NS_VER' indicating a non-square shape, a height of which is longer than a width, or as '2: NS_HOR' indicating a non-square shape, a width of which is longer than a height).

The image decoding apparatus 100 may determine a second coding unit 1302, 1312, or 1322 by splitting at least one of a width or a height of the first coding unit 1310 having a size of N×2N. That is, the image decoding apparatus 100 may determine the second coding unit 1302 having a size of N×N or the second coding unit 1322 having a size of N×N/2 by splitting the first coding unit 1310 in a horizontal direction, or may determine the second coding unit 1312 having a size of N/2×N by splitting the first coding unit 1310 in horizontal and vertical directions.

According to an embodiment, the image decoding apparatus 100 may determine the second coding unit (e.g., the second coding unit 1302, 1312, 1322, etc.) by splitting at least one of a width or a height of the first coding unit 1320 having a size of 2N×N. That is, the image decoding apparatus 100 may determine the second coding unit 1302 having a size of N×N or the second coding unit 1312 having a size of N/2×N by splitting the first coding unit 1320 in a vertical direction, or may determine the second coding unit 1322 having a size of N×N/2 by splitting the first coding unit 1320 in horizontal and vertical directions.

According to an embodiment, the image decoding apparatus 100 may determine a third coding unit 1304, 1314, or 1324 by splitting at least one of a width or a height of the second coding unit 1302 having a size of N×N. That is, the image decoding apparatus 100 may determine the third coding unit 1304 having a size of N/2×N/2, the third coding unit 1314 having a size of N/4×N/2, or the third coding unit 1324 having a size of N/2×N/4 by splitting the second coding unit 1302 in vertical and horizontal directions.

According to an embodiment, the image decoding apparatus 100 may determine the third coding unit (e.g., the third coding unit 1304, 1314, 1324, etc.) by splitting at least one of a width or a height of the second coding unit 1312 having a size of N/2×N. That is, the image decoding apparatus 100 may determine the third coding unit 1304 having a size of N/2×N/2 or the third coding unit 1324 having a size of N/2×N/4 by splitting the second coding unit 1312 in a horizontal direction, or may determine the third coding unit 1314 having a size of N/4×N/2 by splitting the second coding unit 1312 in vertical and horizontal directions.

According to an embodiment, the image decoding apparatus 100 may determine the third coding unit (e.g., the third coding unit 1304, 1314, 1324, etc.) by splitting at least one of a width or a height of the second coding unit 1322 having a size of N×N/2. That is, the image decoding apparatus 100 may determine the third coding unit 1304 having a size of N/2×N/2 or the third coding unit 1314 having a size of N/4×N/2 by splitting the second coding unit 1322 in a vertical direction, or may determine the third coding unit 1324 having a size of N/2×N/4 by splitting the second coding unit 1322 in vertical and horizontal directions.

According to an embodiment, the image decoding apparatus 100 may split the square coding unit 1300, 1302, or 1304 in a horizontal or vertical direction. For example, the image decoding apparatus 100 may determine the first coding unit 1310 having a size of N×2N by splitting the first coding unit 1300 having a size of 2N×2N in a vertical direction, or may determine the first coding unit 1320 having a size of 2N×N by splitting the first coding unit 1300 in a horizontal direction. According to an embodiment, when a depth is determined based on the length of the longest side of a coding unit, a depth of a coding unit determined by splitting the first coding unit 1300 having a size of 2N×2N in a horizontal or vertical direction may be the same as the depth of the first coding unit 1300.

According to an embodiment, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2.

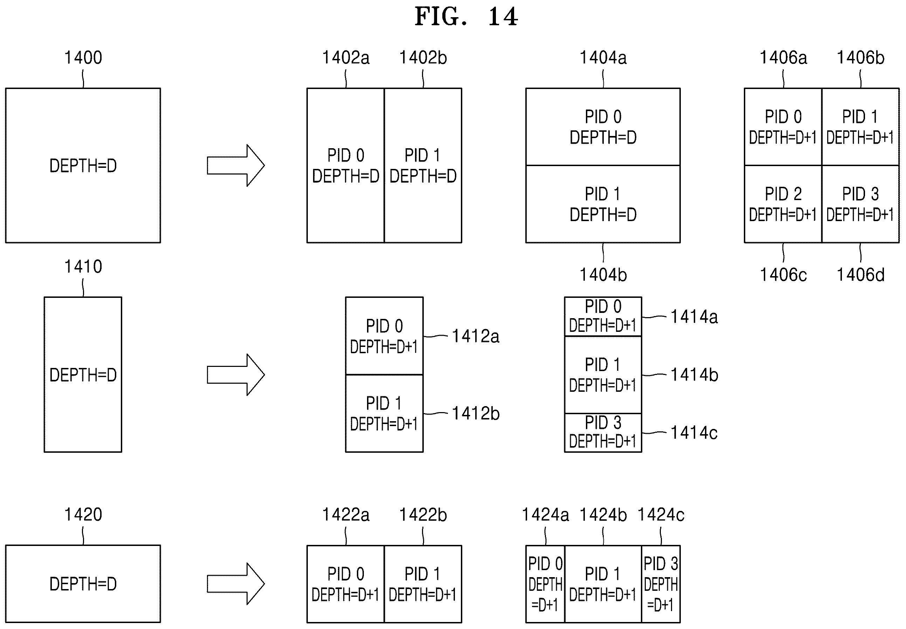

FIG. 14 illustrates depths that are determinable based on shapes and sizes of coding units, and part indexes (PIDs) that are for distinguishing the coding units, according to an embodiment.

According to an embodiment, the image decoding apparatus 100 may determine various-shape second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of a vertical direction or a horizontal direction based on split shape mode information. That is, the image decoding apparatus 100 may determine the second coding units 1402a and 1402b, 1404a and 1404b, and 1406a, 1406b, 1406c, and 1406d, based on the split shape mode information of the first coding unit 1400.

According to an embodiment, a depth of the second coding units 1402a and 1402b, 1404a and 1404b, and 1406a, 1406b, 1406c, and 1406d, which are determined based on the split shape mode information of the square first coding unit 1400, may be determined based on the length of a long side thereof. For example, because the length of a side of the square first coding unit 1400 equals the length of a long side of the non-square second coding units 1402a and 1402b, and 1404a and 1404b, the first coding unit 1400 and the non-square second coding units 1402a and 1402b, and 1404a and 1404b may have the same depth, e.g., D. However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is deeper than the depth D of the first coding unit 1400 by 1.

According to an embodiment, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment, depths of the second coding units 1412a and 1412b, and 1414a, 1414b, and 1414c, or 1422a and 1422b, and 1424a, 1424b, and 1424c that are determined based on the split shape mode information of the non-square first coding unit 1410 or 1420 may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is deeper than the depth D of the non-square first coding unit 1410 by 1.

Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is deeper than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410.

According to an embodiment, the image decoding apparatus 100 may determine PIDs for identifying split coding units, based on a size ratio between the coding units when an odd number of split coding units do not have equal sizes. Referring to FIG. 14, a coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Therefore, when a PID of the coding unit 1414b at the center location is 1 based on a scan order, a PID of the coding unit 1414c located next to the coding unit 1414b may be increased by 2 and thus, may be 3. That is, discontinuity in PID values may be present. According to an embodiment, the image decoding apparatus 100 may determine whether an odd number of split coding units do not have equal sizes, based on whether discontinuity is present in PIDs for identifying the split coding units.

According to an embodiment, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs indicating respective coding units so as to identify the respective coding units. According to an embodiment, the PID may be obtained from a sample of a preset location of each coding unit (e.g., a top-left sample).

According to an embodiment, the image decoding apparatus 100 may determine a coding unit at a preset location from among the split coding units, by using the PIDs for distinguishing the coding units. According to an embodiment, when the split shape mode information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units so as to determine a coding unit at a center location from among the coding units. The image decoding apparatus 100 may determine the coding unit 1414b having a PID corresponding to a middle value among the PIDs of the coding units, as the coding unit at the preset location from among the coding units determined by splitting the first coding unit 1410. According to an embodiment, the image decoding apparatus 100 may determine PIDs for distinguishing split coding units, based on a size ratio between the coding units when the split coding units do not have equal sizes. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus, may be 3. When the PID is not uniformly increased as described above, the image decoding apparatus 100 may determine that a coding unit is split into a plurality of coding units including a coding unit having a size different from that of the other coding units. According to an embodiment, when the split shape mode information indicates to split a coding unit into an odd number of coding units, the image decoding apparatus 100 may split a current coding unit in such a manner that a coding unit of a preset location among an odd number of coding units (e.g., a coding unit of a center location) has a size different from that of the other coding units. In this case, the image decoding apparatus 100 may determine the coding unit of the center location, which has a different size, by using PIDs of the coding units. However, the PIDs and the size or location of the coding unit of the preset location are not limited to the above-described examples, and various PIDs and various locations and sizes of coding units may be used.

According to an embodiment, the image decoding apparatus 100 may use a preset data unit where a coding unit starts to be recursively split.

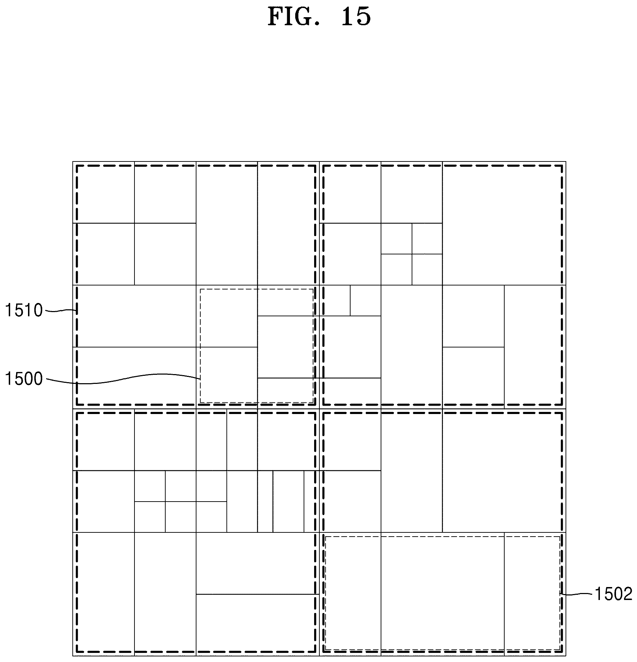

FIG. 15 illustrates that a plurality of coding units are determined based on a plurality of preset data units included in a picture, according to an embodiment.

According to an embodiment, a certain data unit may be defined as a data unit where a coding unit starts to be recursively split by using split shape mode information. That is, the preset data unit may correspond to a coding unit of an uppermost depth, which is used to determine a plurality of coding units split from a current picture. In the following descriptions, for convenience of descriptions, the preset data unit is referred to as a reference data unit.

According to an embodiment, the reference data unit may have a preset size and a preset size shape. According to an embodiment, the reference data unit may include M×N samples. Herein, M and N may be equal to each other, and may be integers expressed as powers of 2. That is, the reference data unit may have a square or non-square shape, and may be split into an integer number of coding units.

According to an embodiment, the image decoding apparatus 100 may split the current picture into a plurality of reference data units. According to an embodiment, the image decoding apparatus 100 may split the plurality of reference data units, which are split from the current picture, by using the split shape mode information of each reference data unit. The operation of splitting the reference data unit may correspond to a splitting operation using a quadtree structure.

According to an embodiment, the image decoding apparatus 100 may previously determine the smallest size allowed for the reference data units included in the current picture. Accordingly, the image decoding apparatus 100 may determine various reference data units having sizes equal to or greater than the smallest size, and may determine one or more coding units by using the split shape mode information with reference to the determined reference data unit.

Referring to FIG. 15, the image decoding apparatus 100 may use a square reference coding unit 1500 or a non-square reference coding unit 1502. According to an embodiment, the shape and size of reference coding units may be determined based on various data units capable of including one or more reference coding units (e.g., sequences, pictures, slices, slice segments, tiles, tile groups, largest coding units, or the like).

According to an embodiment, the bitstream obtainer 110 of the image decoding apparatus 100 may obtain, from a bitstream, at least one of reference coding unit shape information or reference coding unit size information with respect to each of the various data units. An operation of splitting the square reference coding unit 1500 into one or more coding units is described above with reference to the operation of splitting the current coding unit 300 of FIG. 3, and an operation of splitting the non-square reference coding unit 1502 into one or more coding units is described above with reference to the operation of splitting the current coding unit 400 or 450 of FIG. 4. Thus, detailed descriptions thereof are not provided here.

According to an embodiment, the image decoding apparatus 100 may use a PID for identifying the size and shape of reference coding units, to determine the size and shape of reference coding units according to some data units previously determined based on a preset condition. That is, the bitstream obtainer 110 may obtain, from the bitstream, only the PID for identifying the size and shape of reference coding units with respect to each slice, slice segment, tile, tile group, or largest coding unit which is a data unit satisfying a preset condition (e.g., a data unit having a size equal to or smaller than a slice) among the various data units (e.g., sequences, pictures, slices, slice segments, tiles, tile groups, largest coding units, or the like). The image decoding apparatus 100 may determine the size and shape of reference data units with respect to each data unit, which satisfies the preset condition, by using the PID. When the reference coding unit shape information and the reference coding unit size information are obtained and used from the bitstream according to each data unit having a relatively small size, efficiency of using the bitstream may not be high, and therefore, only the PID may be obtained and used instead of directly obtaining the reference coding unit shape information and the reference coding unit size information. In this case, at least one of the size or the shape of reference coding units corresponding to the PID for identifying the size and shape of reference coding units may be previously determined. That is, the image decoding apparatus 100 may determine at least one of the size or the shape of reference coding units included in a data unit serving as a unit for obtaining the PID, by selecting the previously determined at least one of the size or the shape of reference coding units based on the PID.

According to an embodiment, the image decoding apparatus 100 may use one or more reference coding units included in a largest coding unit 1510. That is, a largest coding unit split from a picture may include one or more reference coding units, and coding units may be determined by recursively splitting each reference coding unit. According to an embodiment, at least one of a width or a height of the largest coding unit may be integer times at least one of the width or the height of the reference coding units. According to an embodiment, the size of reference coding units may be obtained by splitting the largest coding unit n times based on a quadtree structure. That is, the image decoding apparatus 100 may determine the reference coding units by splitting the largest coding unit n times based on a quadtree structure, and may split the reference coding unit based on at least one of the block shape information or the split shape mode information according to various embodiments.

According to an embodiment, the image decoding apparatus 100 may obtain block shape information indicating the shape of a current coding unit or split shape mode information indicating a splitting method of the current coding unit, from the bitstream, and may use the obtained information. The split shape mode information may be included in the bitstream related to various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, a syntax element corresponding to the block shape information or the split shape mode information according to each largest coding unit or each reference coding unit, and may use the obtained syntax element.

Hereinafter, a method of determining a split rule, according to an embodiment of the present disclosure, will be described in detail.

The image decoding apparatus 100 may determine a split rule of an image. The split rule may be previously determined between the image decoding apparatus 100 and the image encoding apparatus 200. The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, or a tile group header. The image decoding apparatus 100 may determine the split rule differently according to frames, slices, tiles, temporal layers, largest coding units, or coding units.

The image decoding apparatus 100 may determine the split rule based on a block shape of a coding unit. The block shape may include a size, shape, a height to width ratio, and a direction of the coding unit. The image encoding apparatus 200 and the image decoding apparatus 100 may previously determine to determine the split rule based on block shape information of a coding unit. However, the present disclosure is not limited thereto. The image decoding apparatus 100 may determine the split rule, based on information obtained from a bitstream received from the image encoding apparatus 200.

The shape of the coding unit may include a square and a non-square. When the lengths of the width and height of the coding unit are the same, the image decoding apparatus 100 may determine the shape of the coding unit to be a square. Also, when the lengths of the width and height of the coding unit are not the same, the image decoding apparatus 100 may determine the shape of the coding unit to be a non-square.

A size of the coding unit may include various sizes such as 4x4, 8x4, 4x8, 8x8, 16x4, 16x8, ..., 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of the long sides as having the same size. Also, the image decoding apparatus 100 may apply the same split rule to coding units having the same lengths of long sides.

The height to width ratio of the coding unit may include 1:2, 2:1, 1:4, 4:1, 1:8, 8:1, 1:16, 16:1, 32:1, 1:32, or the like. Also, a direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit. The image decoding apparatus 100 may determine an allowable split type according to the size of the coding unit.

To determine the split rule, based on the size of the coding unit, may be a split rule pre-determined between the image encoding apparatus 200 and the image decoding apparatus 100. Also, the image decoding apparatus 100 may determine the split rule based on the information obtained from the bitstream.

The image decoding apparatus 100 may adaptively determine the split rule based on a location of the coding unit. The image decoding apparatus 100 may adaptively determine the split rule based on the location of the coding unit in the image.

Also, the image decoding apparatus 100 may determine the split rule such that coding units generated via different splitting paths do not have the same block shape. However, the present disclosure is not limited thereto, and the coding units generated via different splitting paths have the same block shape. The coding units generated via the different splitting paths may have different decoding processing orders. As the decoding processing orders are described above with reference to FIG. 12, details thereof are not provided here.

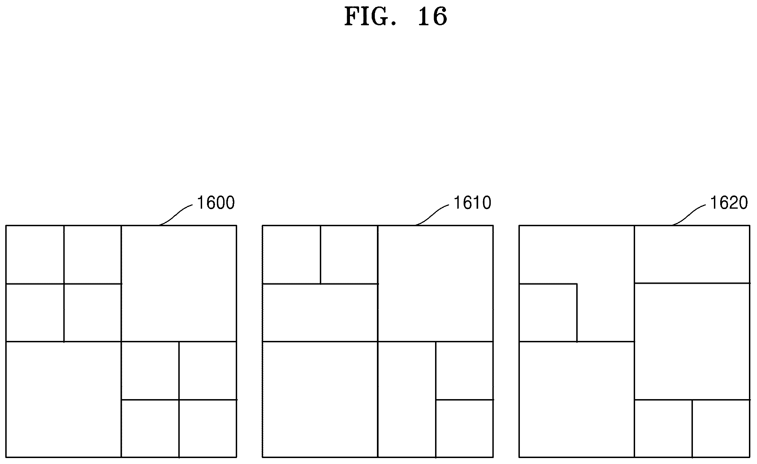

FIG. 16 illustrates coding units that may be determined in each picture when a combination of shapes into which a coding unit is splittable is different for each picture, according to an embodiment.

Referring to FIG. 16, the image decoding apparatus 100 may determine a combination of split shapes into which a coding unit is splittable to be different in each picture. For example, the image decoding apparatus 100 may decode an image by using a picture 1600 being splittable into four coding units, a picture 1610 being splittable into two or four coding units, and a picture 1620 being splittable into two, three, or four coding units among one or more pictures included in the image. In order to split the picture 1600 into a plurality of coding units, the image decoding apparatus 100 may use only split shape information indicating a split into four square coding units. In order to split the picture 1610, the image decoding apparatus 100 may use only split shape information indicating a split into two or four coding units. In order to split the picture 1620, the image decoding apparatus 100 may use only split shape information indicating a split into two, three, or four coding units. The combination of split shapes is merely an embodiment for describing an operation of the image decoding apparatus 100, and thus, should not be interpreted only for the embodiment, and it should be interpreted that a combination of various split shapes may be used in each preset data unit.

According to an embodiment, the bitstream obtainer 110 of the image decoding apparatus 100 may obtain a bitstream including an index indicating a combination of split shape information for each preset data unit (e.g., each sequence, each picture, each slice, each slice segment, each tile, each tile group, etc.). For example, the bitstream obtainer 110 may obtain an index indicating a combination of split shape information from a sequence parameter set, a picture parameter set, a slice header, a tile header, or a tile group header. The image decoding apparatus 100 may determine, by using the obtained index, a combination of split shapes into which a coding unit is splittable in each preset data unit, and thus, may use a combination of different split shapes in each preset data unit.

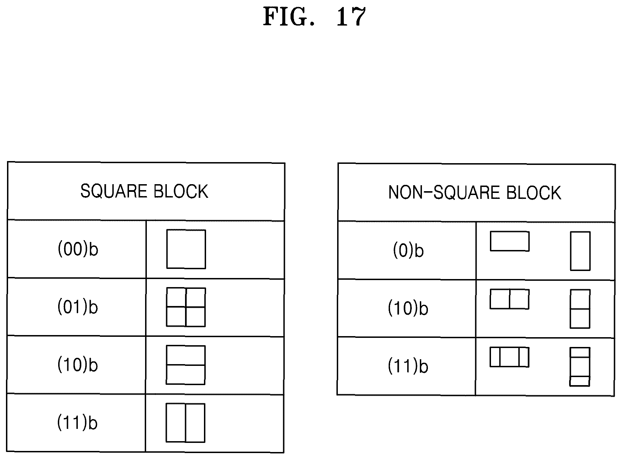

FIG. 17 illustrates various shapes of a coding unit which may be determined based on split shape mode information that may be represented in binary code, according to an embodiment.

According to an embodiment, the image decoding apparatus 100 may split a coding unit into various shapes by using block shape information and split shape mode information obtained via the bitstream obtainer 110. A shape into which a coding unit is splittable may correspond to various shapes including shapes described above in the embodiments.

Referring to FIG. 17, the image decoding apparatus 100 may split a square coding unit in at least one direction among a horizontal direction and a vertical direction, based on the split shape mode information, and may split a non-square coding unit in a horizontal direction or a vertical direction.

According to an embodiment, when it is possible for the image decoding apparatus 100 to split a square coding unit into four square coding units in a horizontal direction and a vertical direction, split shapes for the square coding unit which may be indicated by the split shape mode information may be four shapes. According to an embodiment, the split shape mode information may be represented in 2-bit binary code, and binary code may be allocated to each split shape. For example, when a coding unit is not split, split shape mode information may be represented as (00)b, when a coding unit is split in a horizontal direction and a vertical direction, split shape mode information may be represented as (01)b, when a coding unit is split in a horizontal direction, split shape mode information may be represented as (10)b, and when a coding unit is split in a vertical direction, split shape mode information may be represented as (11)b.

According to an embodiment, when the image decoding apparatus 100 splits a non-square coding unit in a horizontal direction or a vertical direction, split shape types that may be indicated by split shape mode information may be determined based on the number of splits into which a coding unit is divided. Referring to FIG. 17, according to an embodiment, the image decoding apparatus 100 may split a non-square coding unit into three coding units. The image decoding apparatus 100 may split a coding unit into two coding units, and in this case, split shape mode information may be represented as (10)b. The image decoding apparatus 100 may split a coding unit into three coding units, and in this case, split shape mode information may be represented as (11)b. The image decoding apparatus 100 may determine not to split a coding unit, and in this case, split shape mode information may be represented as (0)b. That is, the image decoding apparatus 100 may not use fixed length coding (FLC) but may use variable length coding (VLC) so as to use binary code indicating split shape mode information.

According to an embodiment, referring to FIG. 17, binary code of split shape mode information indicating no split of a coding unit may be represented as (0)b. In a case where binary code of split shape mode information indicating no split of a coding unit is set in (00)b, even when there is no split shape mode information set in (01)b, binary code of 2-bit split shape mode information has to be all used. However, as shown in FIG. 17, in a case where three split shapes for a non-square coding unit are used, the image decoding apparatus 100 may determine no split of a coding unit even when 1-bit binary code (0)b is used as split shape mode information, a bitstream may be efficiently used. However, it should not be interpreted that a split shape of a non-square coding unit which is indicated by split shape mode information is limited to three shapes shown in FIG. 17, and it should be interpreted that the split shape corresponds to various shapes including the embodiments described above.

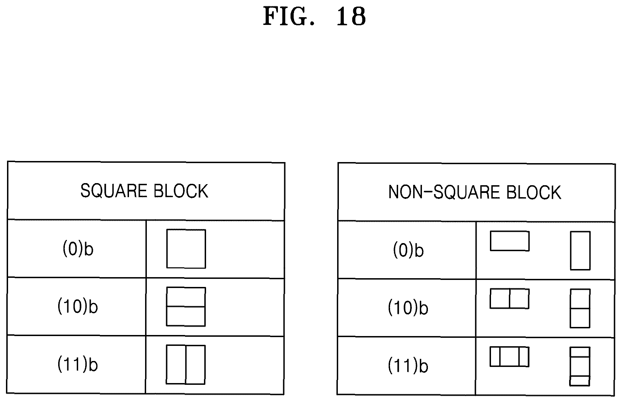

FIG. 18 illustrates other shapes of a coding unit which may be determined based on split shape mode information that may be represented in binary code, according to an embodiment.

Referring to FIG. 18, the image decoding apparatus 100 may split a square coding unit in a horizontal direction or a vertical direction, based on the split shape mode information, and may split a non-square coding unit in a horizontal direction or a vertical direction. That is, the split shape mode information may indicate that a square coding unit is split in one direction. In this case, binary code of split shape mode information indicating no split of a square coding unit may be represented as (0)b. In a case where binary code of split shape mode information indicating no split of a coding unit is set in (00)b, even when there is no split shape mode information set in (01)b, binary code of 2-bit split shape mode information has to be all used. However, as shown in FIG. 18, in a case where three split shapes for a square coding unit are used, the image decoding apparatus 100 may determine no split of a coding unit even when 1-bit binary code (0)b is used as split shape mode information, a bitstream may be efficiently used. However, it should not be interpreted that a split shape of a square coding unit which is indicated by split shape mode information is limited to three shapes shown in FIG. 18, and it should be interpreted that the split shape corresponds to various shapes including the embodiments described above.

According to an embodiment, block shape information or split shape mode information may be represented by using binary code, and such information may be immediately generated as a bitstream. Alternatively, block shape information or split shape mode information that may be represented in binary code may not be immediately generated as a bitstream and may be used as binary code to be input in context adaptive binary arithmetic coding (CABAC).

According to an embodiment, a process in which the image decoding apparatus 100 obtains syntax of block shape information or split shape mode information via CABAC will now be described. A bitstream including binary code for the syntax may be obtained via the bitstream obtainer 110. The image decoding apparatus 100 may detect a syntax element indicating block shape information or split shape mode information by inversely binarizing a binary string included in the obtained bit stream. According to an embodiment, the image decoding apparatus 100 may calculate a binary binary string set corresponding to a syntax element to be decoded, and may decode each bin by using probability information. The image decoding apparatus 100 may repeat decoding until a binary string configured with such decoded bins becomes equal to one of pre-calculated binary strings. The image decoding apparatus 100 may determine the syntax element by performing inverse binarization on the binary string.

According to an embodiment, the image decoding apparatus 100 may determine a syntax of a binary string by performing a decoding process of adaptive binary arithmetic coding. The image decoding apparatus 100 may update a probability model for bins obtained via the bitstream obtainer 110. Referring to FIG. 17, according to an embodiment, the bitstream obtainer 110 of the image decoding apparatus 100 may obtain a bitstream indicating binary code indicating split shape mode information. The image decoding apparatus 100 may determine syntax of split shape mode information by using binary code having 1 bit or 2 bits. In order to determine syntax of split shape mode information, the image decoding apparatus 100 may update probability of each bit in 2-bit binary code. That is, depending on whether a value of a first bin in 2-bit binary code is 0 or 1, the image decoding apparatus 100 may update probability that a next bit has a value of 0 or 1 in decoding.

According to an embodiment, in a process of determining syntax, the image decoding apparatus 100 may update probability of bins used in a process of decoding the bins of a binary string with respect to the syntax, the image decoding apparatus 100 may determine that probability is not updated in a particular bit of the binary string and the particular bit has the same probability.

Referring to FIG. 17, in a process of determining syntax by using a binary string indicating split shape mode information about a non-square coding unit, when the non-square coding unit is not split, the image decoding apparatus 100 may determine the syntax of the split shape mode information by using one bin having the value of 0. That is, in a case where block shape information indicates that a current coding unit has a non-square coding unit, a first bin of a binary string about split shape mode information may be 0 when the non-square coding unit is not split, and may be 1 when the non-square coding unit is split into two or three coding units. Accordingly, probability that the first bin of the binary string of the split shape mode information about the non-square coding unit is 0 may be 1/3 and the probability that the first bin is 1 may be 2/3. As described above, split shape mode information indicating that a non-square coding unit is not split may be represented by only a binary string having a zero-value 1 bit, the image decoding apparatus 100 may determine syntax of the split shape mode information by determining whether a second bin is 0 or 1 only when a first bin of the split shape mode information is 1. According to an embodiment, when the first bin of the split shape mode information is 1, the image decoding apparatus 100 may decode a bin by determining that probability that the second bin is 0 or 1 is the same.

According to an embodiment, the image decoding apparatus 100 may use various probabilities of each bin in a process of determining a bin of a binary string about split shape mode information. According to an embodiment, the image decoding apparatus 100 may determine probability of a bin about split shape mode information to differ according to directions of a non-square block. According to an embodiment, the image decoding apparatus 100 may determine probability of a bin about split shape mode information to differ according to an area or a length of a long side of a current coding unit. According to an embodiment, the image decoding apparatus 100 may determine probability of a bin about split shape mode information to differ according to at least one of a shape or length of a long side of a current coding unit.

According to an embodiment, the image decoding apparatus 100 may determine that probability of a bin about split shape mode information is equal with respect to coding units with a preset size or more. For example, it may be determined that probability of a bin about split shape mode information is equal with respect to coding units with a size of 64 samples or more.

According to an embodiment, the image decoding apparatus 100 may determine initial probability of bins constituting a binary string of split shape mode information, based on a slice type (e.g., I slice, P slice, or B slice).

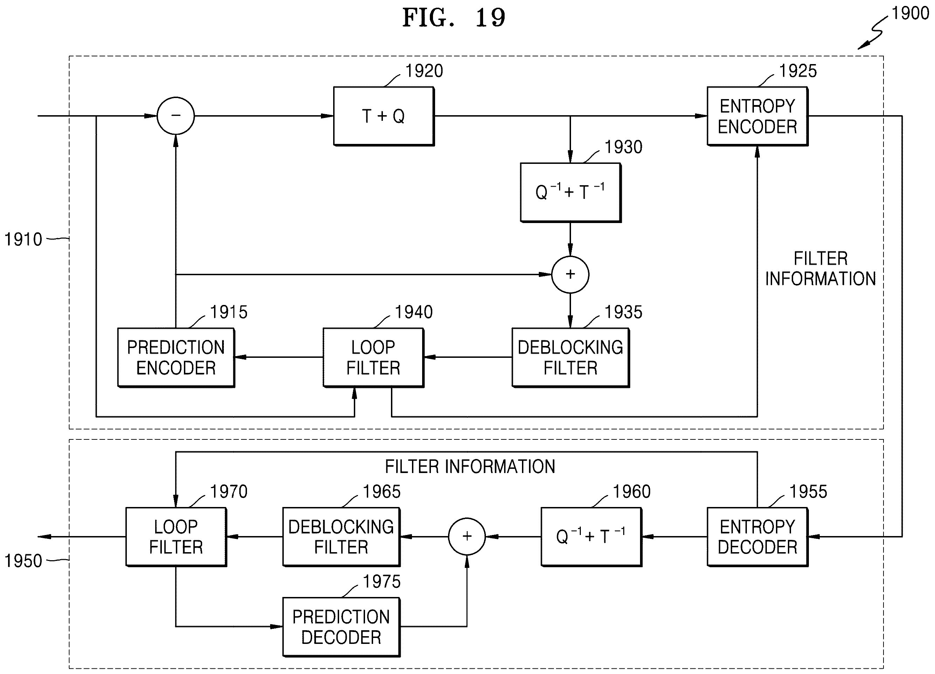

FIG. 19 is a block diagram of an image encoding and decoding system that performs loop filtering.

An encoding end 1910 of an image encoding and decoding system 1900 transmits an encoded bitstream of an image and a decoding end 1950 outputs a reconstructed image by receiving and decoding the bitstream. Here, the encoding end 1910 may have a similar configuration as the image encoding apparatus 200, and the decoding end 1950 may have a similar configuration as the image decoding apparatus 100.

At the encoding end 1910, a prediction encoder 1915 outputs a reference image via inter-prediction and intra-prediction, and a transformer and quantizer 1920 outputs a quantized transform coefficient of residual data between prediction data and a current input image. An entropy encoder 1925 transforms the quantized transform coefficient by encoding the quantized transform coefficient, and outputs the transformed quantized transform coefficient as a bitstream. The quantized transform coefficient is reconstructed as data of a spatial domain via an inverse quantizer and inverse transformer 1930, and the data of the spatial domain is output as a reconstructed image via a deblocking filter 1935 and a loop filter 1940. The reconstructed image may be used as a reference image of a next input image via the prediction encoder 1915.

Encoded image data among the bitstream received by the decoding end 1950 is reconstructed as residual data of a spatial domain via an entropy decoder 1955 and an inverse quantizer and inverse transformer 1960. Image data of a spatial domain is configured when a reference image and residual data output from a prediction decoder 1975 are combined, and a deblocking filter 1965 and a loop filter 1970 may output a reconstructed image regarding a current original image by performing filtering on the image data of the spatial domain. The reconstructed image may be used by the prediction decoder 1975 as a reference image for a next original image.

The loop filter 1940 of the encoding end 1910 performs loop filtering by using filter information input according to a user input or system setting. The filter information used by the loop filter 1940 is output to the entropy encoder 1925 and then is transmitted to the decoding end 1950 together with the encoded image data. The loop filter 1970 of the decoding end 1950 may perform loop filtering based on the filter information input from the decoding end 1950.

In various embodiments described above, an operation related to an image decoding method performed by the image decoding apparatus 100 is described. Hereinafter, an operation of the image encoding apparatus 200 that performs an image encoding method corresponding to an inverse process of the image decoding method will now be described in various embodiments.

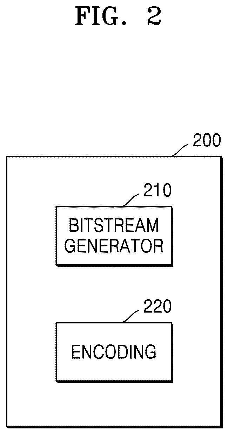

FIG. 2 illustrates a block diagram of the image encoding apparatus 200 capable of encoding an image based on at least one of block shape information or split shape mode information, according to an embodiment.

The image encoding apparatus 200 may include an encoder 220 and a bitstream generator 210. The encoder 220 may receive an input image and then may encode the input image. The encoder 220 may obtain at least one syntax element by encoding the input image. A syntax element may include at least one of a skip flag, a prediction mode, a motion vector difference, a motion vector prediction method (or index), a transform quantized coefficient, a coded block pattern, coded block flag, an intra prediction mode, a direct flag, a merge flag, delta QP, a reference index, a prediction direction, or a transform index. The encoder 220 may determine a context model, based on block shape information including at least one of a shape, a direction, a ratio of a width and a height, or a size of a coding unit.

The bitstream generator 210 may generate a bitstream, based on the encoded input image. For example, the bitstream generator 210 may generate the bitstream by entropy encoding a syntax element, based on the context model. Also, the image encoding apparatus 200 may transmit the bitstream to the image decoding apparatus 100.

According to an embodiment, the encoder 220 of the image encoding apparatus 200 may determine a shape of a coding unit. For example, the coding unit may have a square shape or a non-square shape, and information indicating the shape may be included in the block shape information.

According to an embodiment, the encoder 220 may determine into which shape the coding unit is to be split. The encoder 220 may determine a shape of at least one coding unit included in the coding unit, and the bitstream generator 210 may generate a bitstream including split shape mode information including information about a shape of the coding unit.

According to an embodiment, the encoder 220 may determine whether the coding unit is to be split or is not to be split. When the encoder 220 determines that only one coding unit is included in the coding unit or the coding unit is not to be split, the bitstream generator 210 may generate a bitstream including split shape mode information indicating that the coding unit is not to be split. Also, the encoder 220 may split a coding unit into a plurality of coding units included in the coding unit, and the bitstream generator 210 may generate a bitstream including split shape mode information indicating that the coding unit is to be split into a plurality of coding units.

According to an embodiment, information indicating how many coding units the coding unit is split into or in which direction the coding unit is split may be included in the split shape mode information. For example, the split shape mode information may indicate a split in at least one direction of a vertical direction and a horizontal direction or may indicate no split.

The image encoding apparatus 200 may determine the split shape mode information, based on a split shape mode of the coding unit. The image encoding apparatus 200 determines a context model, based on at least one of a shape, a direction, a ratio of a width and a height, or a size of the coding unit. Then, the image encoding apparatus 200 generates, as a bitstream, the split shape mode information for splitting the coding unit, based on the context model.

In order to determine the context model, the image encoding apparatus 200 may obtain an array for corresponding at least one of a shape, a direction, a ratio of a width and a height, or a size of the coding unit and an index for the context model. The image encoding apparatus 200 may obtain, from the array, the index for the context model, based on at least one of a shape, a direction, a ratio of a width and a height, or a size of the coding unit. The image encoding apparatus 200 may determine the context model, based on the index for the context model.

In order to determine the context model, the image encoding apparatus 200 may determine the context model, further based on block shape information including at least one of a shape, a direction, a ratio of a width and a height, or a size of a neighboring coding unit adjacent to the coding unit. Also, the neighboring coding unit may include at least one of coding units located at bottom-left, left, top-left, top, top-right, right, or bottom-right of the coding unit.

Also, in order to determine the context model, the image encoding apparatus 200 may compare a length of a width of an above neighboring coding unit with a length of a width of the coding unit. Also, the image encoding apparatus 200 may compare lengths of heights of left and right neighboring coding units with a length of a height of the coding unit. Also, the image encoding apparatus 200 may determine the context model, based on results of the comparisons.

As an operation of the image encoding apparatus 200 includes similar content as an operation of the image decoding apparatus 100 described with reference to FIGS. 3 to 19, detailed descriptions thereof are not provided here.

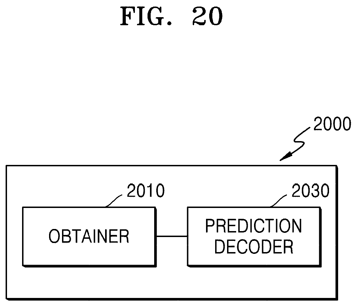

FIG. 20 is a block diagram illustrating a configuration of an image decoding apparatus 2000 according to an embodiment.

Referring to FIG. 20, the image decoding apparatus 2000 may include an obtainer 2010 and a prediction decoder 2030. The obtainer 2010 shown in FIG. 20 may correspond to the bitstream obtainer 110 shown in FIG. 1, and the prediction decoder 2030 may correspond to the decoder 120 shown in FIG. 1. Also, the obtainer 2010 may correspond to the entropy decoder 1955 shown in FIG. 19, and the prediction decoder 2030 may correspond to the prediction decoder 1975 shown in FIG. 19.

In an embodiment, the obtainer 2010 and the prediction decoder 2030 may be implemented as at least one processor. In an embodiment, the obtainer 2010 and the prediction decoder 2030 may operate according to an instruction stored in memory.

In an embodiment, the image encoding apparatus 2000 may include memory that stores input/output data of the obtainer 2010 and the prediction decoder 2030. Also, the image encoding apparatus 2000 may include a memory controller configured to control data input/output to/from the memory.

In an embodiment, the obtainer 2010 may obtain a bitstream generated as an encoding result of an image.

In an embodiment, the bitstream may include an encoding result of a current block. The bitstream may include a plurality of pieces of information used to reconstruct the current block. The current block may be a largest coding unit, a coding unit, a transform unit, or a prediction unit, which is split from a current image to be decoded.

In an embodiment, a prediction decoder 2150 may determine the current block, based on block shape information and/or a split shape mode included in the bitstream, which corresponds to at least one level among a sequence parameter set, a picture parameter set, a video parameter set, a slice header, and a slice segment header.

In an embodiment, the obtainer 2010 may receive the bitstream from an image encoding apparatus via a network.

In an embodiment, the obtainer 2010 may obtain the bitstream from a data storage medium including a magnetic medium such as a hard disk, a floppy disk, and a magnetic tape, an optical recording medium such as compact disc read only memory (CD-ROM) and digital versatile disc (DVD), a magneto-optical medium such as a floptical disk, or the like.

In an embodiment, the obtainer 2010 may obtain, from the bitstream, syntax elements for decoding an image. Values corresponding to the syntax elements may be included in the bitstream, according to a hierarchical structure of the image.

In an embodiment, the obtainer 2010 may obtain the syntax elements by entropy decoding bins included in the bitstream.

In an embodiment, the bitstream may include information indicating a prediction mode of a current block in a current image. The prediction mode of the current block may include an inter mode. The inter mode refers to a mode in which a current block is predicted or reconstructed based on a reference image so as to reduce temporal redundancy between images.

In an embodiment, the prediction decoder 2030 may generate a prediction block of a current block by performing inter prediction on the current block, based on a prediction mode of the current block, and may reconstruct the current block by using the prediction block.

In an embodiment, when the prediction decoder 2030 reconstructs the current block, based on a reference image, the prediction decoder 2030 may use one reference image (e.g., uni-direction prediction), or may use two reference images (e.g., bi-prediction). Whether the current block is uni-direction predicted or bi-predicted may be determined according to explicit information included in the bitstream, or may be implicitly determined from a prediction mode of neighboring blocks related to the current block.

In an embodiment, when the current block is bi-predicted, the prediction decoder 2030 may use motion information included in the bitstream so as to determine reference blocks of the current block, or may perform implicit determination from reference blocks of the neighboring blocks related to the current block. The motion information of the current block may include at least one of a reference image index, a motion vector, a differential motion vector, or a reference direction, and may include all information for prediction of a motion vector of the current block.

In an embodiment, the prediction decoder 2030 may use, as a motion vector predictor of the current block, a motion vector of blocks included in previously-decoded blocks adjacent to the current block or blocks included in a previously-decoded image, or may use a motion vector difference that is a difference between the motion vector and the motion vector predictor of the current block, and thus, may determine a first motion vector and a second motion vector.

In an embodiment, when the current block is bi-predicted, the prediction decoder 2030 may determine a first reference block in a first reference image and a second reference block in a second reference image for bi-prediction of the current block. For example, the prediction decoder 2030 may determine the first reference block and the second reference block for bi-prediction of the current block, by using motion information. The prediction decoder 2030 may determine the first reference block and the second reference block for bi-prediction of the current block, based on template matching.

In an embodiment, the prediction decoder 2030 may determine motion vectors by using motion information or reference blocks of neighboring blocks, and may determine a block, which is indicated by a determined motion vector, to be at least one of the first reference block or the second reference block.

In an embodiment, the prediction decoder 2030 may refine a motion vector by comparing a current reference template with a template in a preset area including a block indicated by the determined motion vector, and thus, may determine at least one of the first reference block or the second reference block of current blocks. The current reference template may indicate a template of the current block. That is, a reference block may be determined based on only motion information, or may be determined based on the motion information and template matching. When the prediction decoder 2030 is capable of defining a template of the first reference block and the second reference block, the prediction decoder 2030 may determine the reference block, regardless of whether the motion vector is refined by performing template matching. In an embodiment, the prediction decoder 2030 may determine weight information for combining reference blocks to generate a prediction block of the current block, based on a template of reference blocks and the current reference template.

In an embodiment, weight candidate list use information is information indicating whether to use a weight candidate list to determine a weight. When the weight candidate list use information indicates that the weight candidate list is used, the prediction decoder 2030 may obtain weight information for determining reference blocks, based on a weight candidate value being determined from the weight candidate list by using a weight index obtained from a bitstream or a neighboring block. Alternatively, when the weight candidate list use information indicates that the weight candidate list is not used, the prediction decoder 2030 may obtain information indicating whether to determine weight information by using motion information or reference blocks of neighboring blocks, without the weight candidate list and the weight index.

In an embodiment, the weight candidate list use information may be included in a sequence parameter set, a picture parameter set, a slice header, or slice data of a bitstream.

In an embodiment, the weight candidate list use information may not be included in the bitstream. When the weight candidate list use information is not included in the bitstream, the prediction decoder 2030 may obtain a weight candidate list and a weight index according a predetermined method, or may determine weight information by using motion information or reference blocks of neighboring blocks, without obtaining the weight candidate list and the weight index.

In an embodiment, the prediction decoder 2030 may determine whether to use the weight candidate list, based on information indicated by information obtained from the bitstream. For example, the weight candidate list use information may include a flag or an index indicating the use of the weight candidate list and/or the weight index or indicating no use of the weight candidate list and/or the weight index.

In an embodiment, the prediction decoder 2030 may obtain the weight candidate list use information by using at least one neighboring block and a reference block of a neighboring block. The prediction decoder 2030 may determine a weight candidate list and/or a weight index for the reference block of the current block by using at least one of a weight candidate list and/or a weight index for the reference block of the neighboring block. For example, a preset weight candidate list may be a list including -2, 3, 4, 5, and 10 as elements. Alternatively, the preset weight candidate list may be a list including 1, 3, 4, 5, 7, 2, and 6 as elements The weight candidate list is not limited to the disclosed example. The prediction decoder may determine the weight index for the reference block of the current block to have the same value as the weight index for the reference block of the neighboring block. By additionally obtaining a delta value for the weight index from the bitstream or performing template matching, the prediction decoder may determine the weight index for the reference block of the current block to have a different value from the weight index for the reference block.

In an embodiment, there may be a plurality of methods of representing weight information. For example, the weight information may be determined by using a single weight (e.g., the use of a constant W), may be determined by using a left weight and an above weight (the use of a constant $w_{left}$ corresponding to the left weight and a constant $w_{above}$ corresponding to the above weight), or may be determined by using a weight filter (the use of pixelwise W having weight values respectively corresponding to samples in a block).

In an embodiment, information indicating a weight information representation method may be included in a sequence parameter set, a picture parameter set, a slice header, or slice data of a bitstream.

In an embodiment, the information indicating the weight information representation method may not be included in a bitstream, and in this case, the prediction decoder 2030 may determine weight information of the current block according to a predetermined method.

In an embodiment, the information indicating the weight information representation method indicates the use of information obtained from a bitstream, the prediction decoder 2030 may determine weight information according to a weight information representation method indicated by the information obtained from the bitstream among a plurality of weight information representation methods. For example, the information indicating the weight information representation method may include a flag or an index indicating any one weight information representation method among the plurality of weight information.

In an embodiment, the prediction decoder 2030 may obtain the information indicating the weight information representation method, by using at least one neighboring block. In this case, even when the information indicating the weight information representation method is not obtained from the bitstream, the representation method of the weight information may be determined by using at least one neighboring block. For example, when a neighboring block determines weight information by using a single weight, it may be determined that a weight information representation method of the current block is to use a single weight, as in the neighboring block.

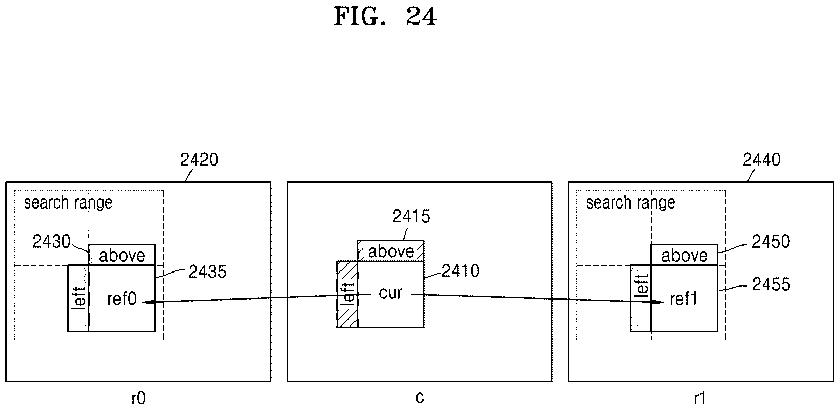

An operation of determining weight information for combining reference blocks will be described below with reference to FIGS. 24 to 29.

In an embodiment, the prediction decoder 2030 may generate the prediction block of the current block by combining reference blocks by using determined weight information.

In an embodiment, the prediction decoder 2030 may determine the prediction block as a reconstructed current block.

In an embodiment, the prediction decoder 2030 may generate the reconstructed current block by combining the prediction block with residual data obtained from a bitstream by the obtainer 2010.

According to the standard such as High Efficiency Video Coding (HEVC), Versatile video coding (VVC), etc., a prediction block is generated based on weight information obtained from a bitstream, and this may cause an increase in the amount of data requested in signaling of an inter prediction mode. Therefore, in an embodiment, the prediction decoder 2030 may determine reference blocks and may determine weight information by using a template of the reference blocks, thereby decreasing the amount of data requested in signaling.

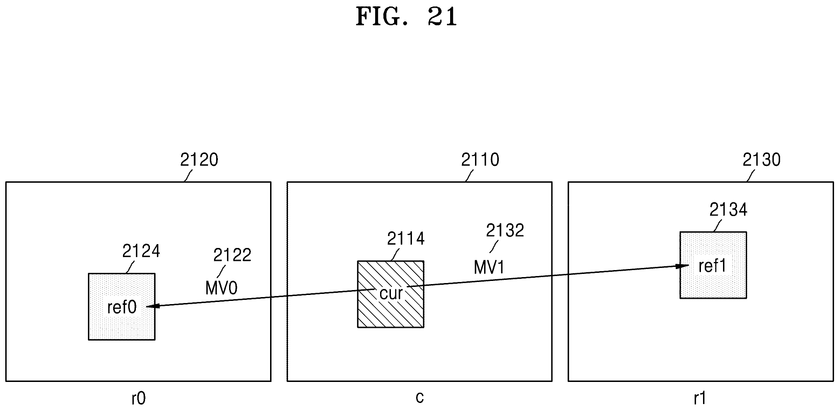

Hereinafter, with reference to FIGS. 21 to 22, bi-prediction performed on a current block will now be described.

FIG. 21 is a diagram for describing bi-prediction of a current block according to an embodiment.

In an embodiment, a current block 2114 included in a current image 2110 may be uni-directionally predicted by using a first reference image 2120 included in list 0 or a second reference image 2130 included in list 1 or may be bi-predicted by using the first reference image 2120 included in list 0 and the second reference image 2130 included in list 1.

In an embodiment, the prediction decoder 2030 may determine the first reference image 2120 and the second reference image 2130 to be referenced by the current block for bi-prediction of the current block, and may determine a first motion vector 2122 indicating a first reference block 2124 in the first reference image 2120 and a second motion vector 2132 indicating a second reference block 2134 in the second reference image 2130. Therefore, the prediction decoder 2030 may determine the first reference block 2124 based on the first motion vector 2122, and may determine the second reference block 2134 based on the second motion vector 2132.

For example, the prediction decoder 2030 may determine the first reference image 2120 and the second reference image 2130 as a reference image to be referenced by the current block, based on information included in a bitstream, or may determine the first reference image 2120 and the second reference image 2130 as a reference image to be referenced by the current block 2114, in consideration of an image referenced by a neighboring block related to the current block 2114.

In an embodiment, in order to determine the first motion vector 2122 and the second motion vector 2132, the prediction decoder 2030 may generate a motion vector candidate list by using motion vectors of a temporal block temporally related to the current block and a spatial block spatially related to the current block. The prediction decoder 2030 may determine the first motion vector 2122 and the second motion vector 2132 by using motion vector candidates among a plurality of motion vector candidates included in the motion vector candidate list, the motion vector candidates being indicated by information included in a bitstream.

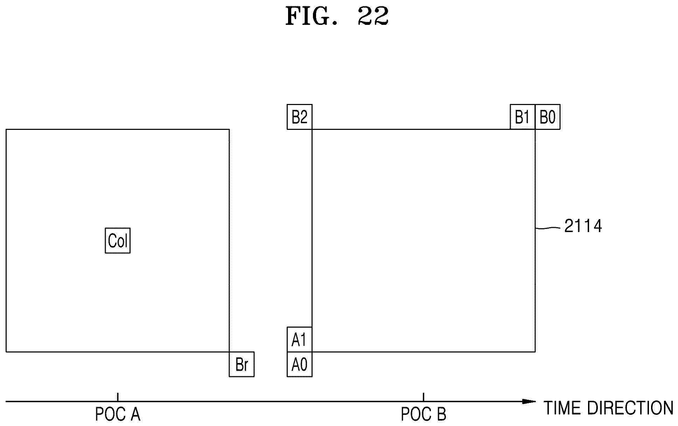

FIG. 22 is a diagram illustrating blocks temporally and/or spatially related to the current block 2114.

Referring to FIG. 22, a temporal block may include a collocated block (hereinafter, referred to as 'col block') Col located at a point that corresponds to the current block 2114 and is in a reference image having a picture order count (POC) different from a POC of the current block 2114, and at least one block Br spatially adjacent to the col block Col. The block Br may be located in the bottom right of the current block 2114 and the col block Col. A collocated block may be determined to be any block in a block being in a collocated picture and having a location and size corresponding to a current block, or a block adjacent to the block having the location and size corresponding to the current block.

A spatial block spatially related to the current block 2114 may include at least one of a bottom-left outer block A0, a bottom-left block A1, a top-right outer block B0, a top-right block B1, or a top-left outer block B2.

Locations of temporal blocks and spatial blocks shown in FIG. 22 are one example, and in other embodiment, the number of temporal blocks and spatial blocks and their locations may vary.

In an embodiment, the prediction decoder 2030 may directly search for, in the first reference image 2120 and the second reference image 2130, the first reference block 2124 and the second reference block 2134 to be used in reconstruction of the current block 2114, or may identify for determine them via other method. In this case, the prediction decoder 2030 may identify or determine the first reference block 2124 and the second reference block 2134 by using the same method performed by an image encoding apparatus 3100.

Referring back to FIG. 21, in an embodiment, when the first reference block 2124 in the first reference image 2120 and the second reference block 2134 in the second reference image 2130 are determined, the prediction decoder 2030 may combine the first reference block 2124 and the second reference block 2134, and may reconstruct the current block 2114, based on a result of the combination. In this regard, the combination of the first reference block 2124 and the second reference block 2134 may indicate that samples included in the first reference block 2124 and samples included in the second reference block 2134 are linearly combined.

In an embodiment, the combination of the first reference block 2124 and the second reference block 2134 may be performed in a different manner according to weight candidate list use information.

In an embodiment, a weight candidate list may include weight candidate values used in bi-prediction of a current block. Also, weight indices respectively corresponding to weight candidates used in bi-prediction of the current block may be allocated. The weight candidate values may correspond to five values or three values defined in the VVC standard. For example, the weight candidate list may include the weight candidate values having values of -2, 3, 4, 5, and 10, or may include the weight candidate values having values of 3, 4, and 5. Also, weight indices of 0 to 4 may be respectively allocated to the weight candidate values. However, types/the number of the weight candidate values, and the weight indices respectively allocated to the candidate values are merely an example, and may vary within a scope that is apparent to one of skill in the art.

For example, the weight candidate list may include the weight candidate values having values of -4, -3, -2, -1, 1, 2, 3, 4, 5, 6, 7, 9, 10, 11, and 12, or may include the weight candidate values having values of 1, 2, 3, 4, 5, 6, and 7.

In an embodiment, the prediction decoder 2030 may determine weight information by using the weight candidate list and the weight indices. The weight indices may be obtained from a bitstream or may be obtained from a neighboring block.

In an embodiment, when the weight information is determined by using the weight candidate list, linear combination of the samples included in the first reference block 2124 and the samples included in the second reference block 2134 may be performed by using Equation 1 below.

[Equation 1]

$$pbSamples[x][y] =$$

$$(w0 * predSamplesL0[x][y] + w1 * predSamplesL1[x][y] + offset) >> (shift)$$

In Equation 1, pbSamples[x][y] may indicate a result value of combination of a sample at x, y location in the first reference block 2124 and a sample at x, y location in the second reference block 2134, predSamplesL0[x][y] may indicate a sample value at x, y location of the first reference block 2124 in the first reference image 2120 included in list 0, and predSamplesL1 [x][y] may indicate a sample value at x, y location of the second reference block 2134 in the second reference image 2130 included in list 1. Also, offset and shift may be predetermined values.

In Equation 1, w0 may indicate a weight candidate value corresponding to a weight index, and w1 may indicate a pair value of w0. The pair value may indicate a value obtained by applying the weight candidate value corresponding to the weight index to a preset computation formula, and for example, w1 may have a value of 8-w0. In other embodiment, w1 may indicate a weight candidate value corresponding to a weight index, and w0 may indicate a pair value of w1.

As described above, when a weight candidate value indicated by a weight index among weight candidate values included in a weight candidate list is identified, the weight candidate value may be used as a weight for combination of a first reference block and a second reference block. That is, in an embodiment, when the first reference block and the second reference block are combined for bi-prediction of the current block, a weight candidate value that produces the most similar combination result with respect to the current block may be selected, so that a size of residual data included in a bitstream may be decreased.

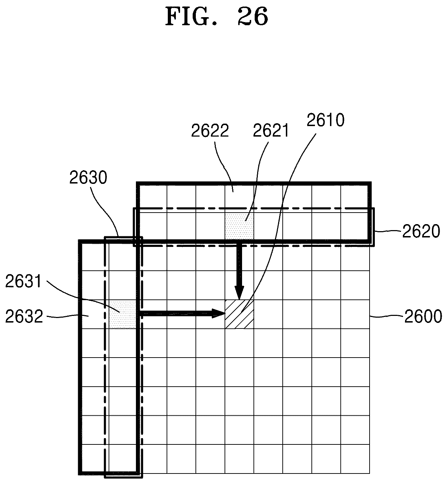

An operation in which weight information is determined by using motion information or reference blocks of neighboring blocks, without using a weight candidate list and a weight index, and the first reference block 2124 and the second reference block 2134 are combined will be described in detail with reference to FIG. 26.

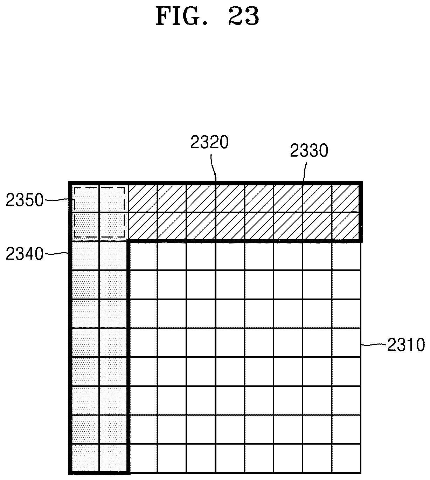

Hereinafter, with reference to FIG. 23, a template of a current block or a reference block will now be described.

FIG. 23 is a diagram for describing a template of a current block or a reference block, according to an embodiment.

In an embodiment, the prediction decoder 2030 may identify neighboring samples adjacent to a current block 2310 so as to perform bi-prediction with respect to the current block 2310. The neighboring samples adjacent to the current block 2310 may be used as a template for generation of a prediction block of the current block 2310, and may be referred to as a current reference template 2320. Also, a first reference template and a second reference template may be templates of a first reference block and a second reference block, the templates being determined based on motion information or template matching, and a method of determining a reference block is not limited to the example of the present disclosure.

In an embodiment, the prediction decoder 2030 may identify or determine the current reference template 2320 of the current block 2310. The current reference template 2320 may include at least one sample among above samples 2330 of the current block 2310 and left samples 2340 of the current block.

Referring to FIG. 23, while 16 above samples 2330 and 20 left samples 2340 are shown as the current reference template 2320 for a case where a size of the current block 2310 is 8X8, the number of the above samples 2330 and the number of the left samples 2340 which are used in bi-prediction of the current block 2310 may be dynamically determined. The left samples 2340 may include or may not include samples of a top-left outer area 2350 contacting a vertex (e.g., apex) of the current block 2310.

For example, the prediction decoder 2030 may identify p*n above samples 2330 (where, p is a constant and n is a width of the current block 2310), and may identify m*q or (m+p)*q left samples 2340 (where, q is a constant and m is a height of the current block 2310).

In an embodiment, while the above samples 2330 are arrayed in two rows in FIG. 23, the above samples 2330 may be arrayed in 0 or 1 row, or may be arrayed in three or more rows. In an embodiment, while the left samples 2340 are arrayed in two columns, the left samples 2340 may be arrayed in 0 or 1 column, or may be arrayed in three or more columns. Also, the left samples 2340 may exclude samples of the top-left outer area 2350, or may indicate only the samples of the top-left outer area 2350.

In an embodiment, with respect to the reference block of the current block 2310, the prediction decoder 2030 may obtain a same or similar shape template in a same or similar manner to the current reference template 2320, and the obtained template may be referred to as a template of the reference block or a reference template. When the current block 2310 is bi-predicted, the first reference template of the first reference block and the second reference template of the second reference block may be identified or determined.

In an embodiment, in a case where the current block 2310 is bi-predicted, when the current reference template 2320, the first reference template, and the second reference template are identified or determined, a prediction block of the current block 2310 may be generated by using the current reference template 2320, the first reference template, and the second reference template.

In an embodiment, the prediction decoder 2030 may determine weight information for combination of the first reference block and the second reference block, based on the current reference template 2320, the first reference template, and the second reference template. The prediction decoder 2030 may generate the prediction block of the current block by combining the first reference block and the second reference block by using the determined weight information.

FIG. 24 is a diagram for describing an operation of determining a reference block based on template matching, according to an embodiment.

In an embodiment, in order to perform bi-prediction with respect to a current block 2410, the prediction decoder 2030 may determine at least one of a first reference block 2435 of a first reference image 2420 or a second reference block 2455 of a second reference image 2440. For example, the prediction decoder 2030 may determine motion vectors by using motion information or reference blocks of neighboring blocks, and may determine a block, which is indicated by a determined motion vector, to be at least one of a first reference block or a second reference block. Alternatively, the prediction decoder 2030 may refine a motion vector by comparing a current reference template with a template in a preset area including a block indicated by the determined motion vector, and thus, may determine at least one of the first reference block or the second reference block of current blocks.

An operation in which the prediction decoder 2030 determines a reference block by determining a motion vector by using motion information or reference blocks of neighboring blocks is described in detail with reference to FIGS. 21 to 22, and thus, hereinafter, an operation in which the prediction decoder 2030 determines at least one of the first reference block or the second reference block, based on template matching, will now be described. That is, an operation in which the prediction decoder 2030 refines a motion vector by comparing a current reference template with a template in a preset area including a block indicated by the determined motion vector, and thus, determines at least one of a first reference block or a second reference block of current blocks will now be described in detail.

In an embodiment, the first reference image 2420 and the second reference image 2440 may be images that are reconstructed before the current image.

In template matching, a neighboring sample set reconstructed before the current block may be used as a template. In an embodiment, a current reference template 2415 that is the template of the current block may include at least some of neighboring samples shown in FIG. 23.

In an embodiment, the prediction decoder 2030 may search for, in the first reference image 2420, the most similar template to the current reference template 2415 by using the current reference template 2415, and may determine, as the first reference block 2435, a block adjacent to a first reference template 2430 that is the most similar template according to a result of the search. Referring to FIG. 24, as the current reference template 2415 is located in the left and above of the current block 2410, a block located in the right and bottom of the first reference template 2430 that is the most similar template in the first reference image 2420 according to the result of the search may be determined as the first reference block 2435.

In an embodiment, the prediction decoder 2030 may search for, in the second reference image 2440, the most similar template to the current reference template 2415 by using the current reference template 2415, and may determine, as the second reference block 2455, a block adjacent to a second reference template 2450 that is the most similar template according to a result of the search. Referring to FIG. 24, as the current reference template 2415 is located in the left and above of the current block 2410, a block located in the right and bottom of the second reference template 2450 that is the most similar template in the second reference image 2440 according to the result of the search may be determined as the second reference block 2455.

In an embodiment, in order to search for a template similar to the current reference template 2415, difference values between sample values may be used. For example, a similar template including the most similar sample values to sample values included in the current reference template 2415 may be determined within the first reference image 2420 and/or the second reference image 2440. In an embodiment, a template having a minimum sum of absolute difference (SAD) value may be determined as the most similar template by using the difference values between sample values, however, this is merely an example, and thus, a sum of absolute transformed difference (SATD) or a histogram of oriented gradient (HoG) may be used, and this may vary within a scope that is apparent to one of skill in the art.

In an embodiment, the prediction decoder 2030 may determine a base motion vector for determining each reference block so as to perform a search of a similar template. For example, a predetermined motion vector (e.g., a zero vector, a vector based on information obtained from a bitstream), or a motion vector of a block at a predetermined location may be determined as the base motion vector. For example, the base motion vector for determining the first reference block 2435 may be the first motion vector 2122 of FIG. 21, and the base motion vector for determining the second reference block 2455 may be the second motion vector 2132 of FIG. 21.

In an embodiment, the prediction decoder 2030 may search for the most similar template to the current reference template 2415, within a preset range around a point indicated by the base motion vector. Also, a block adjacent to the first reference template 2430 that is the most similar template to the current reference template 2415 in the first reference image 2420 may be determined as the first reference block 2435. The prediction decoder 2030 may determine, as the second reference block 2455, a block adjacent to the second reference template 2450 that is the most similar template to the current reference template 2415 in the second reference image 2440.

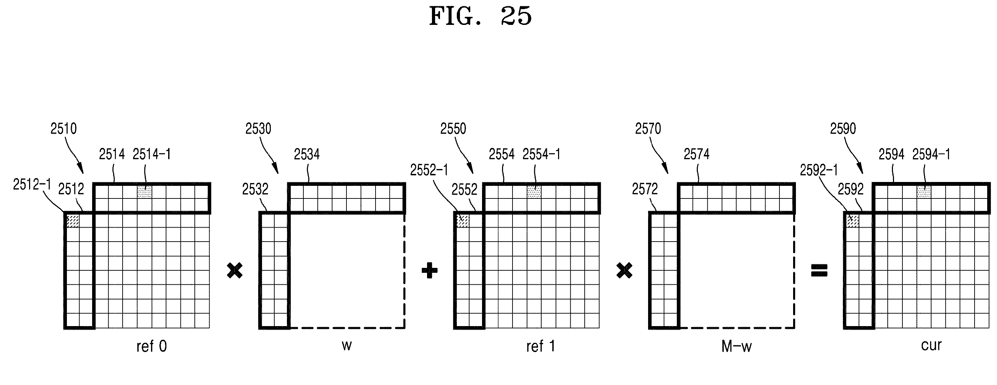

FIG. 25 is a diagram for describing processes of determining weight information, according to an embodiment.

In an embodiment, the prediction decoder 2030 may determine weight information for combination of a first reference block 2510 and a second reference block 2550, based on a current reference template 2590, a first reference template 2510, and a second reference template 2550. The prediction decoder may determine the weight information by using the current reference template 2590, the first reference template 2510, and the second reference template 2550, without using a weight candidate list and a weight index.

In an embodiment, the weight information may include information about a weight for linear combination of the first reference block and the second reference block. For example, the weight information may include a weight to be applied to the first reference block and a weight to be applied to the second reference block.

In an embodiment, an operation of determining weight information may include an operation of determining a first weight. Also, the first weight may be determined to be one of a single weight 2530, a left weight 2532 and an above weight 2534, or a weight filter.

In an embodiment, the first weight that is a weight to be applied to the first reference block may be at least one constant or a matrix. For example, the first weight may be one weight to be commonly applied to the first reference block 2510, and in this case, the first weight may be the single weight 2530 having a $w$ value. The first weight may include the left weight 2532 having a $w_{left}$ value obtained based on at least one left sample of each template, and the above weight 2534 having a $w_{above}$ value obtained based on at least one above sample of each template. When the first weight is represented as a matrix, the first weight may be a weight filter having a $M$ value. Elements of the weight filter may each be independently determined, and may represent weights respectively corresponding to pixels or samples. A matrix in the present disclosure indicates that element values of the matrix are used to indicate respective sample values included in a block, other configuration for indicating respective sample values included in the block may be used, and the present disclosure is not limited thereto.

In an embodiment, when a weight (hereinafter, a first weight) to be applied to the first reference block is determined, a weight (hereinafter, a second weight) to be applied to the second reference block may be determined according to the determined first weight. For example, when the first weight is determined to be $w$, the second weight may be determined to be $M - w$ (where, $M$ is a constant or a constant matrix in which an element value is $M$).

In another embodiment, when the second weight is determined, the first weight may be determined according to the determined second weight.

In an embodiment, information indicating a weight information representation method may be information indicating whether the first weight is a single weight, a left weight and above weight, or a weight filter. In this regard, a method of representing or determining weights of the first weight is merely an example, and may vary within a scope that is apparent to one of skill in the art.

In an embodiment, the second weight may be determined based on the first weight. For example, when the first weight is determined to be the single weight 2530, the second weight may be determined to be a pair single weight 2570 that is one weight corresponding to the single weight 2530. When the first weight is determined to be the left weight 2532 and the above weight 2534, the second weight may be determined to be a pair left weight 2572 and a pair above weight 2574 which respectively correspond to the left weight 2532 and the above weight 2534. When the first weight is determined to be the weight filter, the second weight may be determined to be a pair weight filter.

In an embodiment, the first weight included in the weight information may be determined by using Equation 2.

[Equation 2]

$$ref0\_template * w/M + ref1\_template * (M - w)/M = cur\_template$$

In Equation 2, $ref0\_template$ may indicate the first reference template 2510, $ref1\_template$ may indicate the second reference template 2550, and $w$ $cur\_template$ may indicate the current reference template 2590. may indicate the first weight, and $M - w$ may indicate the second weight. Also, Equation 2 may be commonly used for the single weight 2530, the left weight 2532 and the above weight 2534, or the weight filter.

In an embodiment, the prediction decoder 2030 may determine the single weight 2530 to be applied to the first reference block, based on at least one sample of the first reference template 2510, at least one sample of the second reference template 2550, and at least one sample of the current reference template 2590.

For example, the prediction decoder 2030 may determine the single weight 2530, based on values of a sample included in the first reference template 2510 and a sample included in the second reference template 2550 at a location corresponding to a sample included in the current reference template 2590. The prediction decoder 2030 may determine a w value by applying, to Equation 2 above, a value of a center above sample 2514-1 among above samples of the first reference template 2510, a value of a center above sample 2554-1 among above samples of the second reference template 2550, and a value of a center above sample 2594-1 among above samples of the current reference template 2590. However, locations of samples used to determine the w value may not be limited to the disclosed example.

For example, the prediction decoder 2030 may determine the single weight 2530, based on values of samples included in the first reference template 2510 and samples included in the second reference template 2550 at locations corresponding to two or more samples included in the current reference template 2590. When the first weight is determined by using a plurality of samples included in each template, the single weight 2530 may be determined by using Equation 3.

[Equation 3]

$$w = \frac{M \sum (cur - ref_0)}{\sum (ref_1 - ref_0)}$$

In Equation 3, *cur, ref*$_0$, and *ref*$_1$ may respectively indicate sample values of samples corresponding to same locations in the current reference template 2590, the first reference template 2510, and the second reference template 2550. The single weight 2530 obtained using Equation 3 may be a value determined to minimize a difference between a value of the current reference template 2590 and a value obtained by combining the first reference template 2510 and the second reference template 2550 based on a performance of linear regression analysis on a plurality of samples included in each template. In detail, w may be a value for minimizing a function value obtained using Equation 4.

[Equation 4]

$$E(w) = \sum (ref_0 \cdot (M - w)/M + ref_1 \cdot w/M - cur)^2$$

In Equation 4, *cur*, *ref*$_0$, and *ref*$_1$ may respectively indicate values of samples corresponding to same locations in the current reference template 2590, the first reference template 2510, and the second reference template 2550.

According to Equation 3, the prediction decoder 2030 may determine a w value by applying, to Equation 3 above, values of first samples 2512-1 and 2514-1 included in the first reference template 2510, second samples 2552-1 and 2554-1 included in the second reference template 2550, and current samples 2592-1 and 2594-1 included in the current reference template 2590. Locations of samples used to obtain the w value are not limited to corresponding locations in respective templates, and two or more samples may be used in each template or all samples in a template may be used for determination.

For example, when the left weight 2532 and the above weight 2534 are determined, the single weight 2530 may be determined by using the left weight 2532 and the above weight 2534. The single weight 2530 may be determined to be an average value of the left weight 2532 and the above weight 2534, or may be determined to be a weighted average value in proportion to the number of samples of the left weight 2532 and the number of samples of the above weight 2534. In an embodiment, when each template includes only left samples or only above samples of a block, the single weight 2530 may be equal to the left weight 2532 or equal to the above weight 2534.

Hereinafter, an operation of determining the left weight 2532 and the above weight will now be described.

In an embodiment, the prediction decoder 2030 may determine $w_{left}$ that indicates the left weight 2532 and $w_{above}$ that indicates the above weight 2534, which are to be applied to the first reference block, based on at least one sample of the first reference template 2510, at least one sample of the second reference template 2550, and at least one sample of the current reference template 2590. The left weight 2532 may be a weight to be applied to a bottom-left sample area of the first reference block. The above weight 2534 may be a weight to be applied to a top-right sample area of the first reference block. Applying a weight to a particular area, a block, or a sample may indicate that a value of the weight may be used to generate a prediction block of the particular area.

In an embodiment, a bottom-left sample area of the first reference block may indicate a bottom-left triangular area obtained by splitting the first reference block according to a diagonal line connecting a top-left vertex and a bottom-right vertex of the first reference block. A top-right sample area of the first reference block may indicate a top-right triangular area obtained by splitting the first reference block according to the diagonal line connecting the top-left vertex and the bottom-right vertex of the first reference block.

In an embodiment, the left weight 2532 may be determined based on at least one sample among left samples of the first reference template 2510, at least one sample among left samples of the second reference template 2550, and at least one sample among left samples of the current reference template 2590. The above weight 2534 may be determined based on at least one sample among above samples of the first reference template 2510, at least one sample among above samples of the second reference template 2550, and at least one sample among above samples of the current reference template 2590.

For example, the left weight 2532 may be determined based on one sample among left samples of the first reference template 2510, one sample among left samples of the second reference template 2550, and one sample among left samples of the current reference template 2590. The above weight 2534 may be determined based on one sample among above samples of the first reference template 2510, one sample among above samples of the second reference template 2550, and one sample among above samples of the current reference template 2590. For example, the left weight 2532 may be determined by using the same method of determining *w*, by applying, to Equation 2, the top-left sample 2512-1 among left samples of the first reference template 2510, the top-left sample 2552-1 among left samples of the second reference template 2550, and the top-left sample 2592-1 among left samples of the current reference template 2590. The above weight 2534 may be determined by using the same method of determining *w*, by applying, to Equation 2, the center above sample 2514-1 among above samples of the first reference template 2510, the center above sample 2554-1 among above samples of the second reference template 2550, and the center above sample 2594-1 among above samples of the current reference template 2590. However, locations of samples used to determine the left weight 2532, and locations of samples used to determine the above weight 2534may not be limited to the example above.

For example, the prediction decoder 2030 may determine the left weight 2532 and the above weight 2534, based on values of left samples and above samples of the first reference template 2510, and values of left samples and above samples of the second reference template 2550 at locations respectively corresponding to two or more samples among left samples and two or more samples among above samples of the current reference template 2590.

For example, the prediction decoder 2030 may determine the left weight 2532, based on values of a plurality of samples included in one row for every even number (e.g., 2, 4, 8, or K) rows among left samples of the current reference template 2590, and a plurality of samples of the first reference template and a plurality of samples of the second reference template which correspond to the plurality of samples included in one row for every even number (e.g.,2, 4, 8, or K) rows among the left samples. For example, the prediction decoder 2030 may determine the above weight 2534, based on values of a plurality of samples included in one column for every even number (e.g., 2, 4, 8, or K) columns among above samples of the current reference template 2590, and a plurality of samples of the first reference template and a plurality of samples of the second reference template which correspond to the plurality of samples included in one column for every even number (e.g.,2, 4, 8, or K) columns among the above samples. K may be a preset value, or may be determined according to a size of a current block.

For example, the prediction decoder 2030 may determine the left weight 2532 by performing linear regression analysis on a plurality of samples among left samples of the first reference template 2510, a plurality of samples among left samples of the second reference template 2550, and a plurality of samples among left samples of the current reference template 2590. The linear regression analysis may be performed to determine a value to minimize a difference between a value of combination of the left samples of the first reference template 2510 and the left samples of the second reference template 2550 and a value of the left samples of the current reference template 2590. In this case, $w_{left}$ indicating the left weight 2532 may be determined by using the same method of determining $w$ of Equation 3.

For example, the prediction decoder 2030 may determine the above weight 2534 by performing linear regression analysis on a plurality of samples among above samples of the first reference template 2510, a plurality of samples among above samples of the second reference template 2550, and a plurality of samples among above samples of the current reference template 2590. The linear regression analysis may be performed to determine a value to minimize a difference between a value of combination of the above samples of the first reference template 2510 and the above samples of the second reference template 2550 and a value of the above samples of the current reference template 2590. In this case, $w_{above}$ indicating the above weight 2534 may be determined by using the same method of determining $w$ of Equation 3.

For example, the prediction decoder 2030 may determine the left weight 2532 by performing linear regression analysis on samples of an odd row among the left samples of the first reference template 2510, samples of an odd row among the left samples of the second reference template 2550, and samples of an odd row among the left samples of the current reference template 2590. Locations of samples to be used to determine the left weight 2532 may be determined based on a size of a template, and the number of or locations of samples to be used to determine the left weight 2532 are not limited to the example above. In an example, the number of or locations of samples to be used to determine the above weight 2534 may also be determined based on a size of a template.

In an embodiment, the prediction decoder 2030 may obtain a left weight matrix corresponding to the left samples of the first reference template 2510, based on the left samples of the first reference template 2510, the left samples of the second reference template 2550, and the left samples of the current reference template 2590. The prediction decoder 2030 may obtain an above weight matrix corresponding to the above samples of the first reference template 2510, based on the above samples of the first reference template 2510, the above samples of the second reference template 2550, and the above samples of the current reference template 2590. For example, the prediction decoder 2030 may determine values of all elements of the left weight matrix by applying, to Equation 2, respective values of the left samples of the current reference template 2590, the left samples of the first reference template 2510, and the left samples of the second reference template 2550. The prediction decoder 2030 may determine values of all elements of the above weight matrix by applying, to Equation 2, respective values of the above samples of the current reference template 2590, the above samples of the first reference template 2510, and the above samples of the second reference template 2550.

Hereinafter, an operation of determining weight information by using a left weight matrix and an above weight matrix will now be described.

For example, the prediction decoder 2030 may determine an average value of all or some elements of the left weight matrix to be the left weight 2532. The prediction decoder 2030 may determine an average value of all or some elements of the above weight matrix to be the above weight 2534. Also, the prediction decoder 2030 may determine an average value of all or some elements of the left weight matrix or the above weight matrix to be a single matrix.

In an embodiment, the prediction decoder 2030 may determine, by using at least one of the left weight matrix or the above weight matrix, a weight filter indicating weights that respectively correspond to samples included in a first reference block and are to be applied to the samples included in the first reference block.

Hereinafter, with reference to FIG. 26, an operation of determining a weight filter, based on a left weight matrix or an above weight matrix, will now be described.

FIG. 26 is a diagram for describing an operation of determining a weight filter, according to an embodiment.

In an embodiment, the prediction decoder 2030 may determine weight information for combination of a first reference block and a second reference block, based on a current reference template, a first reference template, and a second reference template. Referring to FIG. 25, the operation of determining weight information may include an operation of determining a first weight, and the first weight may be a weight filter 2600.

In an embodiment, the prediction decoder 2030 may obtain a left weight matrix or an above weight matrix, based on a plurality of samples of the first reference template, a plurality of samples of the second reference template, and a plurality of samples of the current reference template. For example, the above weight matrix may be obtained based on above samples of the first reference template, above samples of the second reference template, and above samples of the current reference template. The above weight matrix may be a matrix determined to correspond to the above samples of the first reference template. For example, when the prediction decoder 2030 identifies p*n above samples (where, p is a constant and n is a width of the weight filter 2600) of the first reference template, the prediction decoder 2030 may obtain the above weight matrix that is a r*n matrix (where, r is a natural number equal to or less than p).

In an embodiment, the prediction decoder 2030 may obtain the left weight matrix, based on left samples of the first reference template, left samples of the second reference template, and left samples of the current reference template. The left weight matrix may be a matrix determined to correspond to the left samples of the first reference template. For example, when the prediction decoder identifies m*q left samples (where, p is a constant and m is a height of the weight filter 2600) of the first reference template, the prediction decoder 2030 may obtain the left weight matrix that is a m*s matrix (where, s is a natural number equal to or less than q).

However, each template, the left weight matrix, the above weight matrix, and a size of the weight filter are not limited to the example above.

In an embodiment, the prediction decoder 2030 may determine the weight filter 2600 to be applied to each of samples included in the first reference block, by using at least one of the left weight matrix or the above weight matrix. The weight filter 2600 may indicate information about weights that respectively correspond to the samples included in the first reference block.

In an embodiment, the weight filter 2600 may be determined based on at least one column included in the left weight matrix and/or at least one row included in the above weight matrix. One sample value included in the weight filter 2600 may be determined based on at least one element included in a column of the above weight matrix corresponding to a location of the sample value, and at least one element included in a row of the left weight matrix corresponding to a location of the sample value.

In an embodiment, the weight filter 2600 may be determined based on one column included in the left weight matrix and one row included in the above weight matrix. For example, one column included in the left weight matrix may be a column 2630 of a left weight matrix being most adjacent to the weight filter 2600. One row included in the above weight matrix may be a column 2620 of an above weight matrix being most adjacent to the weight filter 2600. For example, a value of a first sample 2610 may be determined based on a first left element 2631 and a first above element 2621. The first left element 2631 may be an element of the left weight matrix which is included in the column 2630 of the left weight matrix being the closest to the weight filter 2600 and corresponds to a location of the first sample 2610. The first above element 2621 may be an element of the above weight matrix which is included in the column 2620 of the above weight matrix being the closest to the weight filter 2600 and corresponds to the location of the first sample 2610. A value of the first sample 2610 may be determined to be an average value of the first left element 2631 and the first above element 2621, or may be determined by considering a ratio of a distance between the first sample 2610 and the first left element 2631 to a distance between the first sample 2610 and the first above element 2621. For example, when the distance between the first sample 2610 and the first left element 2631 is twice the distance between the first sample 2610 and the first above element 2621, the prediction decoder 2030 may determine a value obtained by multiplying a value of the first left element 2631 by one third and a value obtained by multiplying a value of the first above element 2621 by two thirds to be the value of the first sample 2610. However, a method of determining the value of the first sample 2610 based on the first left element 2631 and the first above element 2621 may not limited to the example above. Also, a value of a sample in the weight filter 2600 may be determined in a way that is the same or different compared to method of determining the value of the first sample 2610.

In an embodiment, values of respective samples included in the weight filter 2600 may be determined based on at least one element included in each column of an above weight matrix and at least one element included in each row of a left weight matrix. That is, the weight filter 2600 may be determined based on at least one element included in each column of the above weight matrix and at least one element included in each row of the left weight matrix.

For example, the value of the first sample 2610 included in the weight filter 2600 may be determined to be an average of a representative value of a first above column corresponding to columns included in the above weight matrix and a representative value of a first left column corresponding to rows included in the left weight matrix which correspond to a location of the first sample 2610. The representative value of the first above column may be determined based on at least one element included in the first above column. The representative value of the first left row may be determined based on at least one element included in the first left row. The representative value of the first above column may be an average of at least one element included in the first above column, and the representative value of the first left row may be an average of at least one element included in the first left row. When values of all samples included in the weight filter 2600 are determined by the same method of determining the value of the first sample 2610, the weight filter 2600 may be determined based on an average of at least one element included in each row of the left weight matrix and an average of at least one element included in each column of the above weight matrix. A value of a sample in the weight filter 2600 may be determined by using the same or different method of determining the value of the first sample 2610.

For example, a value of the first sample 2610 included in the weight filter 2600 may be determined by multiplying a determined ratio of distances by a representative value of a first above column and a representative value of a first left row, in consideration of a distance between the first sample 2610 and a above weight matrix and a distance between the first sample 2610 and a left weight matrix. When a ratio of the distance between the first sample 2610 and the above weight matrix to the distance between the first sample 2610 and the left weight matrix is 2:3, a value obtained by multiplying the representative value of the first above column by 0.4 and a value obtained by multiplying the representative value of the first left row by 0.6 may be determined as the value of the first sample 2610. The method of determining the value of the first sample 2610, based on the representative value of the first above column and the representative value of the first left row, may not be limited to the example above, and a value of a sample in the weight filter 2600 may be determined in a way that is the same or different compared to the method of determining the value of the first sample 2610.

In an embodiment, the weight filter 2600 may be determined by applying a preset ratio to at least one element included in each row of a left weight matrix and at least one element included in each column of an above weight matrix. For example, the value of the first sample 2610 may be determined by the representative value of the first above column and the representative value of the first left row.

The representative value of the first above column may be determined by a value of at least one element among the first above element 2621 that is an element included in the first above column included in the above weight matrix, and a second above element 2622. The representative value of the first above column may be determined to be a value of the first above element 2621 or a value of the second above element 2622, or may be determined to be an average value of the first above element 2621 and the second above element 2622. The representative value of the first above column may be determined by applying different ratios to the first above element 2621 and the second above element 2622. The different ratios may be preset. A sample at a location closer to the first sample 2610 may be determined by applying a higher ratio thereto. For example, the representative value of the first above column may be a value obtained by summing values obtained by multiplying each of the first above element 2621 and the second above element 2622 by 0.5, or may be a value obtained by summing a value obtained by multiplying the first above element 2621 at a location closer to the first sample 2610 by 0.7 and a value obtained by multiplying the second above element 2622 by 0.3. However, a method of determining the representative value of the first above column may not be limited to the example above.

The representative value of the first left row may be determined by a value of at least one element among the first left element 2631 that is an element included in the first left row included in the left weight matrix, and a second left element 2632. The representative value of the first left row may be determined to be a value of the first left element 2631 or a value of the second left element 2632, or may be determined to be an average value of the first left element 2631 and the second left element 2632. The representative value of the first left row may be determined by applying different ratios to the first left element 2631 and the second left element 2632. The different ratios may be preset. For example, a sample at a location closer to the first sample 2610 may be determined by applying a higher ratio thereto. For example, the representative value of the first left row may be a value obtained by summing values obtained by multiplying each of the first left element 2631 and the second left element 2632 by 0.5, or may be a value obtained by summing a value obtained by multiplying the first left element 2631 at a location closer to the first sample 2610 by 0.7 and a value obtained by multiplying the second left element 2632 by 0.3. However, a method of determining the representative value of the first left row may not be limited to the example above.

In an embodiment, when each template includes only above samples, values of samples with respect to a collocated column of an above weight matrix in the weight filter 2600 may be determined, based on at least one element included in one column of the above weight matrix based on the above weight matrix being obtained. For example, when each template includes only above weight samples, the above weight matrix may be obtained. A value of the first sample 2610 may be determined based on a value of at least one element among the first above element 2621 and the second above element 2622 located in the same column as the first sample 2610 in the above weight matrix. For example, the prediction decoder 2030 may determine a value of the first above element 2621 or a value of the second above element 2622 to be a value of all samples located in the same column as the first sample 2610 in the weight filter 2600. The value of samples located in the same column as the first sample 2610 in the weight filter 2600 may be determined to be an average value of the first above element 2621 and the second above element 2622. The value of samples located in the same column as the first sample 2610 in the weight filter 2600 may be determined by applying different ratios to the first above element 2621 and the second above element 2622.

In an embodiment, when each template includes only left samples, values of samples with respect to a collocated row of a left weight matrix in the weight filter 2600 may be determined, based on at least one element included in one row of the left weight matrix based on the left weight matrix being obtained. For example, when each template includes only left weight samples, the left weight matrix may be obtained. A value of the first sample 2610 may be determined based on a value of at least one element among the first left element 2631 and the second left element 2632 located in the same row as the first sample 2610 in the left weight matrix. For example, the prediction decoder 2030 may determine a value of the first left element 2631 or a value of the second left element 2632 to be a value of samples located in the same row as the first sample 2610 in the weight filter 2600. The value of samples located in the same row as the first sample 2610 in the weight filter 2600 may be determined to be an average value of the first left element 2631 and the second left element 2632. The value of samples located in the same row as the first sample 2610 in the weight filter 2600 may be determined by applying different ratios to the first left element 2631 and the second left element 2632.

In an embodiment, the prediction decoder 2030 may determine a value of at least one sample included in the weight filter 2600 by using the same or different method of determining a value of the first sample 2610.

In an embodiment, the prediction decoder 2030 may determine a value of some samples included in the weight filter 2600 by using the same or different method of determining a value of the first sample 2610, and then may determine a value of samples of which values are not determined in the weight filter 2600, based on the determined value of some samples.

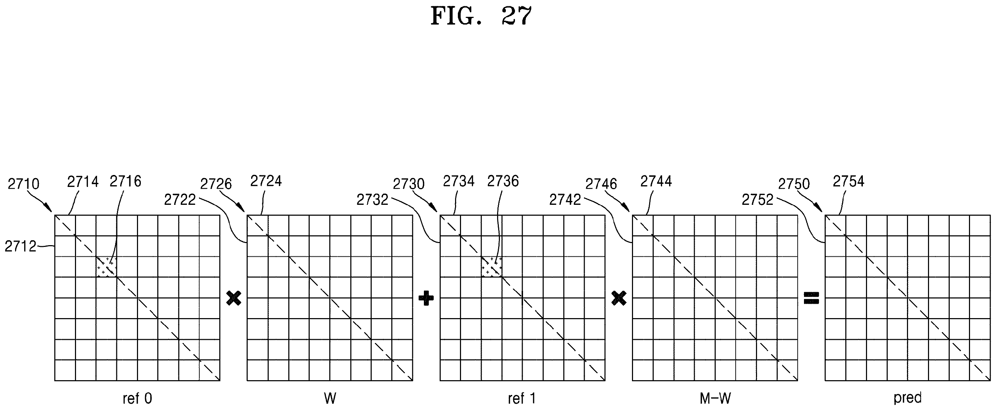

FIG. 27 is a diagram for describing an operation of generating a prediction block by using weight information, according to an embodiment.

In an embodiment, when a first reference block 2710 and a second reference block 2730 are determined, and weight information is determined, the prediction decoder 2030 may generate a prediction block for current block 2750 by combining the first reference block 2710 and the second reference block 2730 by using the weight information. For example, the prediction decoder 2030 may apply, to the first reference block 2710, a first weight determined with reference to FIGS. 25 and 26, may apply, to the second reference block 2730, a second weight determined based on the first weight, and thus, may generate the prediction block 2750. An operation of applying the second weight to the second reference block 2730 may correspond to an operation of applying the first weight to the first reference block 2710, and thus, may be skipped.

In an embodiment, combination of the first reference block 2710 and the second reference block 2730 by using the weight information may be performed by using Equation 5 below.

[Equation 5]

$$pbSamples[x][y]=w * predSamplesL0[x][y]+(M-w) * predSamplesL1[x][y]$$

In Equation 5 above, pbSamples[x][y], predSamplesL0[x][y] and, predSamplesL1[x][y] may correspond to pbSamples[x][y], predSamplesL0[x][y] and, predSamplesL1[x][y] of Equation 1. Also, w and M-w may correspond to a first weight and a second weight, respectively, and may be information determined with reference to FIGS. 25 and 26. M-w may indicate the second weight that is a pair value of w indicating the first weight. The pair value indicates a value obtained by applying a determined weight value to a preset computation formula. In other embodiment, the second weight may be determined as w, and the first weight that is a pair value of the second weight may be determined as M-w.

In an embodiment, the prediction decoder 2030 may generate the prediction block for current block 2750 by combining the first reference block 2710 and the second reference block 2730 by using a single weight. For example, the prediction decoder 2030 may identify the single weight as a first weight to be applied to the first reference block 2710. The prediction decoder 2030 may obtain, by using the single weight, a pair single weight that is a second weight to be applied to the second reference block 2730. The prediction decoder 2030 may apply the first weight to the first reference block 2710 and apply a second weight 2740 to the second reference block 2730, and thus, may generate the prediction block for current block 2750.

For example, when w indicating the single weight is determined, the prediction decoder 2030 may determine the first weight as w, and may determine the second weight to be M-w. The prediction decoder 2030 may generate the prediction block for current block 2750 by adding values obtained by multiplying each sample of the first reference block 2710 by w and values obtained by multiplying each sample of the second reference block 2730 by M-w.

In an embodiment, the prediction decoder 2030 may generate the prediction block for current block 2750 by combining the first reference block 2710 and the second reference block 2730 by using a left weight 2722 and an above weight 2724. For example, the prediction decoder 2030 may identify the left weight 2722 and the above weight 2724 as the first weight to be applied to the first reference block 2710. The prediction decoder 2030 may obtain, by using the left weight 2722 and the above weight 2724 that are the first weight, a pair left weight 2742 and a pair above weight 2744 as the second weight to be applied to the second reference block 2730. The prediction decoder 2030 may apply the left weight 2722 and the above weight 2724 to the first reference block 2710 and apply the pair left weight 2742 and the pair above weight 2744 to the second reference block 2730, and thus, may generate the prediction block for current block 2750.

For example, when $w_{left}$ and $w_{above}$ indicating the left weight 2722 and the above weight 2724, respectfully, are determined, the prediction decoder 2030 may determine the first weight as $w_{left}$, and $w_{above}$, and may determine the second weight to be $M - w_{left}$ indicating the pair left weight 2742 and $M - w_{above}$ indicating the pair above weight 2744. The prediction decoder 2030 may add a value obtained by multiplying each sample of a bottom-left sample area 2712 of the first reference block 2710 by $w_{left}$ and a value obtained by multiplying each sample of a bottom-left sample area 2732 of the second reference block 2730 by $M - w_{left}$, and thus, may determine values of respective samples of a bottom-left sample area 2752 of the prediction block for current block 2750. Also, the prediction decoder 2030 may add a value obtained by multiplying each sample of a top-right sample area 2714 of the first reference block 2710 by $w_{above}$ and a value obtained by multiplying each sample of a top-right sample area 2734 of the second reference block 2730 by $M - w_{above}$, and thus, may determine values of respective samples of a top-right sample area 2754 of the prediction block for current block 2750. The prediction decoder 2030 may generate the prediction block 2750 by using the bottom-left sample area 2752 of the prediction block 2750 and the top-right sample area 2754 of the prediction block 2750.

In the first reference block 2710, a sample 2716 over a diagonal line connecting a top-left vertex and a bottom-right vertex of the first reference block 2710 may be identified. $w_{left}$ or $w_{above}$ may be applied to the sample 2716 over a diagonal line, or an average value of $w_{left}$ and $w_{above}$ may be applied thereto. Also, for a sample 2736 over a diagonal line in the second reference block 2730, a value using $M - w_{left}$ and $M - w_{above}$ may be applied as a weight, and as this corresponds to descriptions for the sample 2716 over a diagonal line in the first reference block 2710, detailed descriptions thereof are not provided here. Referring to FIG. 27, while a left weight and an above weight are shown as a part of a matrix, for convenience of descriptions, this is merely shown as the matrix to correspond to the bottom-left sample area 2712 and the top-right sample area 2714 of the first reference block 2710, and the left weight 2722 and the above weight 2724 may be constants. In other embodiment, when the left weight 2722 and the above weight 2724 are determined, the left weight 2722 and the above weight 2724 may be implemented as a weight filter to be applied to the first reference block 2710.

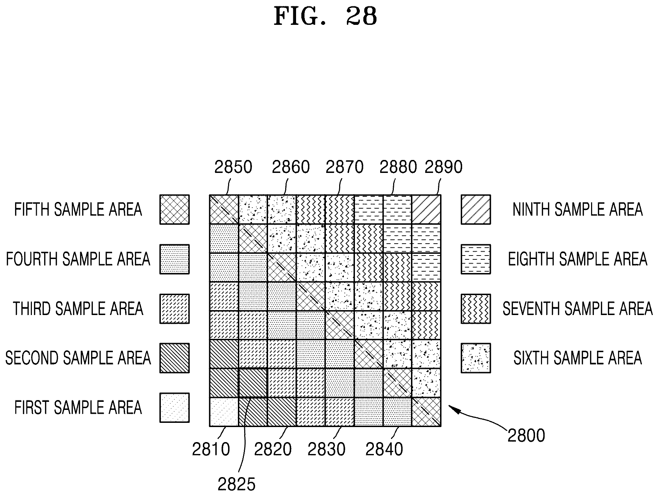

Another embodiment of using the left weight 2722 and the above weight 2724 will be described below with reference to FIG. 28.

In an embodiment, the prediction decoder 2030 may generate the prediction block for current block 2750 by combining the first reference block 2710 and the second reference block 2730 by using a weight filter 2726. For example, the prediction decoder 2030 may identify the weight filter 2726 as a first weight to be applied to the first reference block 2710. The prediction decoder 2030 may obtain, by using the weight filter 2726, a second weight that is a pair value to be applied to the second reference block. The prediction decoder 2030 may apply the first weight to the first reference block 2710 and apply the second weight to the second reference block 2730, and thus, may generate the prediction block for current block 2750.

For example, when $W$ that is the weight filter 2726 is determined, the prediction decoder 2030 may identify the first weight as $W$, and may determine the second weight to be $M - W$. The prediction decoder 2030 may generate the prediction block for current block 2750 by adding a value obtained by multiplying each sample value of the first reference block 2710 by a $W$ element value at a corresponding location and a value obtained by multiplying each sample value of the second reference block 2730 by a $M - W$ element value at a corresponding location. That is, a computation in which $W$ that is a first weight is applied to a first reference block and a computation in which $M - W$ that is a second weight is applied to a second reference block may be an element-wise product computation.

In an embodiment, the prediction decoder 2030 may generate the prediction block for current block 2750 by combining the first reference block 2710 and the second reference block 2730 by using weight information. The prediction decoder 2030 may determine a prediction block as a reconstructed current block. Alternatively, the prediction decoder 2030 may generate the reconstructed current block by combining residual data and a prediction block obtained from a bitstream by the obtainer 2010.

FIG. 28 is a diagram for describing a detailed process of determining weight information, according to an embodiment.

In an embodiment, the prediction decoder 2030 may determine weight information for combination of a first reference block and a second reference block, based on a current reference template, a first reference template, and a second reference template. Referring to FIG. 25, an operation of determining weight information may include an operation of determining a first weight, and the operation of determining a first weight may include an operation of determining a left weight and an above weight or an operation of determining a weight filter.

In an embodiment, the prediction decoder 2030 may determine weights to be respectively applied to samples included in a first reference block, based on a left weight and an above weight. For convenience of descriptions, the weights to be respectively applied to the samples included in the first reference block, based on the left weight and the above weight, may be represented as a weight filter, and may be referred to as a weight filter 2800. The prediction decoder 2030 may differently apply a ratio of the left weight and a ratio of the above weight to each of samples included in the weight filter 2800, based on a distance to a diagonal line connecting a top-left vertex and a bottom-right vertex.

For example, the prediction decoder 2030 may determine, as $w_{left}$ indicating a left weight value, a value of at least one sample included in a first sample area 2810 whose distance to the diagonal line (hereinafter, the diagonal line) connecting the top-left vertex and the bottom-right vertex is longest and which is located in the bottom-left of the diagonal line. The prediction decoder 2030 may determine, as $w_{above}$ indicating an above weight value, a value of at least one sample included in a ninth sample area 2890 whose distance to the diagonal line is longest and which is located in the top-right of the diagonal line. The prediction decoder 2030 may identify a second sample area 2820, a third sample area 2830, and a fourth sample area 2840 with respect to samples located in the bottom-left of the diagonal line, based on distances to the diagonal line. The prediction decoder 2030 may determine a value of at least one sample included in the second sample area 2820 to be $\frac{1}{8}w_{above} + \frac{7}{8}w_{left}$. The prediction decoder 2030 may determine a value of at least one sample included in the third sample area 2830 to be $\frac{2}{8}w_{above} + \frac{6}{8}w_{left}$. The prediction decoder 2030 may determine a value of at least one sample included in the fourth sample area 2840 to be $\frac{3}{8}w_{above} + \frac{5}{8}w_{left}$. The prediction decoder 2030 may determine a value of at least one sample included in a fifth sample area 2850 including samples located over the diagonal line to be $\frac{4}{8}w_{above} + \frac{4}{8}w_{left}$. The prediction decoder 2030 may identify a sixth sample area 2860, a seventh sample area 2870, and an eighth sample area 2880 with respect to samples located in the top-right of the diagonal line, based on distances to the diagonal line. The prediction decoder 2030 may determine a value of at least one sample included in the sixth sample area 2860 to be $\frac{5}{8}w_{above} + \frac{3}{8}w_{left}$. The prediction decoder 2030 may determine a value of at least one sample included in the seventh sample area 2870 to be $\frac{6}{8}w_{above} + \frac{2}{8}w_{left}$. The prediction decoder 2030 may determine a value of at least one sample included in the eighth sample area 2880 to be $\frac{7}{8}w_{above} + \frac{1}{8}w_{left}$.

In an embodiment, the prediction decoder 2030 may determine weights to be respectively applied to samples included in a first reference block, based on values of some samples in a weight filter. For example, a value of one sample included in first to ninth sample areas 2810, 2820, 2830, 2840, 2850, 2860, 2870, 2880, and 2890 may be determined to be a value of at least one sample included in each sample area. In description of a second sample area as an example, the prediction decoder 2030 may determine a value of a representative sample 2825 that is a sample included in the second sample area 2820, by using a method of determining a value of a first sample in a weight filter with reference to FIG. 25. The prediction decoder 2030 may determine the determined value of the representative sample 2825 to be a value of samples included in the second sample area 2820. The prediction decoder 2030 may determine a value of at least one sample included in the first to ninth sample areas 2810, 2820, 2830, 2840, 2850, 2860, 2870, 2880, and 2890, by using the same method of determining a value of at least one sample included in the second sample area 2820, based on the value of the representative sample 2825.

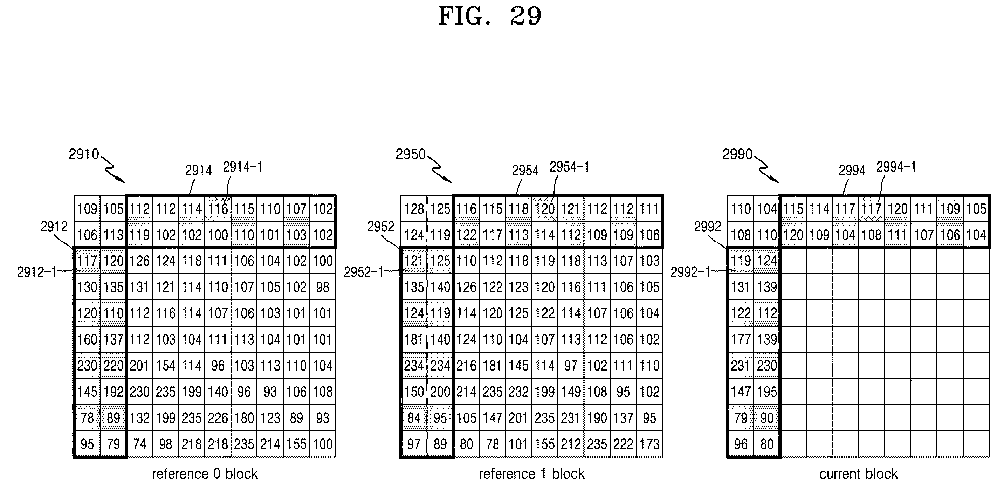

FIG. 29 is a diagram for describing a detailed process of determining a weight filter, according to an embodiment.

In an embodiment, the prediction decoder 2030 may determine weight information for combination of a first reference block and a second reference block, based on a current reference template 2990, a first reference template 2910, and a second reference template 2950. The current reference template 2990, the first reference template 2910, and the second reference template 2950 may respectively correspond to the current reference template 2590, the first reference template 2510, and the second reference template 2550 of FIG. 25. Referring to FIG. 25, an operation of determining weight information may include an operation of determining a first weight. Also, the operation of determining a first weight may include an operation of determining a left weight and an above weight or an operation of determining a weight filter.

In an embodiment, the prediction decoder 2030 may determine a single weight, based on values of a sample included in the first reference template 2910 and a sample included in the second reference template 2950 at a location corresponding to a sample included in the current reference template 2990.

For example, the prediction decoder 2030 may determine a single weight, based on values of a first above reference sample 2914-1 included in the first reference template 2910 and a second above reference sample 2954-1 included in the second reference template 2950 at a location corresponding to a first current sample 2994-1 included in the current reference template 2990. Based on Equation 2 of FIG. 25, when assuming that a value of $x$ is 8 (hereinafter, it is assumed that a value of $x$ is all 8), a value of $w$ may be determined to be 2 according to

$$116 \cdot \frac{(8-w)}{8} + 120 \cdot \frac{w}{8} = 117.$$

For example, the prediction decoder 2030 may determine the single weight by performing linear regression analysis by using values of all samples included in the first reference template 2910 and all samples included in the second reference template 2950 at locations corresponding to all samples included in the current reference template 2990. The prediction decoder 2030 may input values of respective samples to Equation 3 of FIG. 25, and thus, may determine a value of $w$ to be 3.94.

For example, the prediction decoder 2030 may determine the single weight by performing the linear regression analysis by using values of a plurality of samples (a dotted area in 2910 of FIG. 29) included in the first reference template 2910 and a plurality of samples (a dotted area in 2950 of FIG. 29) at locations corresponding to left samples and a plurality of samples included in an odd row (a dotted area in 2990 of FIG. 29) and above samples and a plurality of samples included in an odd column included in the current reference template 2990. The prediction decoder 2030 may input values of respective samples to Equation 3 of FIG. 25, and thus, may determine a value of $w$ to be 3.7.

In an embodiment, the prediction decoder 2030 may determine a left weight, based on at least one sample among left samples of the first reference template 2910, at least one sample among left samples of the second reference template 2950, and at least one sample among left samples of the current reference template 2990. The prediction decoder 2030 may determine an above weight, based on at least one sample among above samples of the first reference template 2910, at least one sample among above samples of the second reference template 2950, and at least one sample among above samples of the current reference template 2990.

In an embodiment, the prediction decoder 2030 may determine an above weight, based on the values of the first above reference sample 2914-1 included in above samples of the first reference template 2910 and the second above reference sample 2954-1 included in above samples of the second reference template 2950 at the location corresponding to the first current sample 2994-1 included in the current reference template 2990. Referring to Equation 2 of FIG. 25, a value of $w_{above}$ may be determined to be 2, according to the formula $116 \cdot \frac{(8-w_{above})}{8} + 120 \cdot \frac{w_{above}}{8} = 117$.

The prediction decoder 2030 may determine a left weight, based on values of a first left reference sample 2912-1 included in left samples of the first reference template 2910 and a second left reference sample 2952-1 included in left samples of the second reference template 2950 at a location corresponding to a second current sample 2992-1 included in left samples of the current reference template 2990. Referring to Equation 2 of FIG. 25, a value of $w_{left}$ may be determined to be 4, according to the formula

$$117 \cdot \frac{8-w_{left}}{8} + 121 \cdot \frac{w_{left}}{8} = 119.$$

In an embodiment, a single weight may be determined based on a left weight and an above weight. For example, when a value of $w_{left}$ indicating the left weight is 4 and a value of $w_{above}$ indicating the above weight is 2, a value of $w$ indicating the single weight may be determined to be 3, that is an average between the left weight and the above weight.

In an embodiment, the prediction decoder 2030 may determine, by using at least one of a left weight matrix or the above weight matrix, a weight filter indicating weights that respectively correspond to samples included in a first reference block and are to be respectively applied to the samples included in the first reference block.

For convenience of descriptions, an example in which a template of a current block or a reference block includes all of above samples and left samples is shown, however, the template is not limited thereto and may include only the above samples or the left samples.

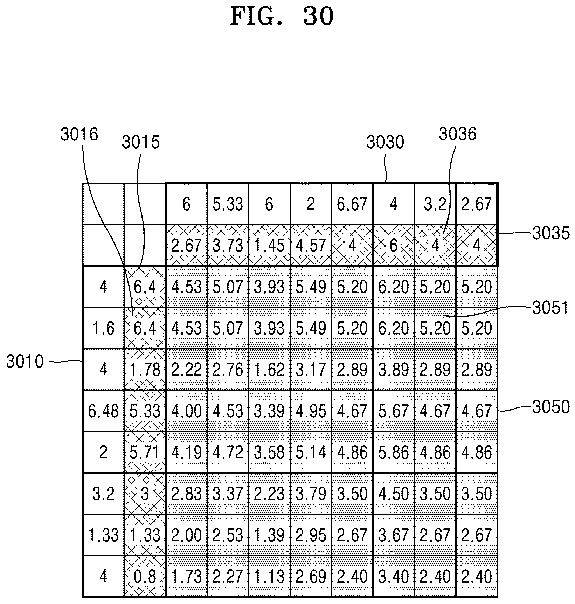

Hereinafter, with reference to FIG. 30, a detailed operation of determining a weight filter will now be described.

FIG. 30 is a diagram for describing a detailed process of determining weight information, according to an embodiment.

In an embodiment, the prediction decoder 2030 may obtain a left weight matrix or an above weight matrix, based on a plurality of samples of a first reference template, a plurality of samples of a second reference template, and a plurality of samples of a current reference template.

For example, the prediction decoder 2030 may obtain a left weight matrix 3010 corresponding to left samples of a first reference template and an above weight matrix 3030 corresponding to above samples of the first reference template, by using a particular example of the current reference template 2990, the first reference template 2910, and the second reference template 2950 of FIG. 29.

In an embodiment, the prediction decoder 2030 may determine a weight filter 3050 to be applied to each of samples included in a first reference block, by using at least one of the left weight matrix 3010 or the above weight matrix 3030. The weight filter 3050 may be determined based on at least one column included in a left weight matrix and/or at least one row included in an above matrix column. One sample value included in the weight filter 3050 may be determined based on at least one element included in one column of the above weight matrix which corresponds to a location of the sample value, and at least one element included in one row of the left weight matrix which corresponds to a location of the sample value.

In an embodiment, the weight filter 3050 may be determined based on a left weight matrix column 3015 included in the left weight matrix 3010 which is most adjacent to the weight filter 3050 and an above weight matrix row 3035 included in the above weight matrix 3030 which is most adjacent to the weight filter 3050. For example, a first sample 3051 that is one sample included in the weight filter 3050 may be determined to be an average of a first left element 3016 and a first above element 3036, the first left element 3016 corresponding to a location of a first sample 3051 and being among elements included in the left weight matrix column 3015 of the left weight matrix 3010 which is closest to the weight filter 3050 and the first above element 3036 corresponding to the location of the first sample 3051 and being among elements included in the above weight matrix row 3035 of the above weight matrix 3030 which is closest to the weight filter 3050. In this case, a value of the first sample 3051 may be determined to be 5.2. Values of all samples included in the weight filter 3050 may be determined by using the same method of determining the value of the first sample 3051. The prediction decoder 2030 may determine values of all samples, and thus, may determine the weight filter 3050 indicating weights respectively corresponding to samples included in the first reference block.

The weight filter shown in FIG. 30 is an example of a weight filter, and is not limited to the example.

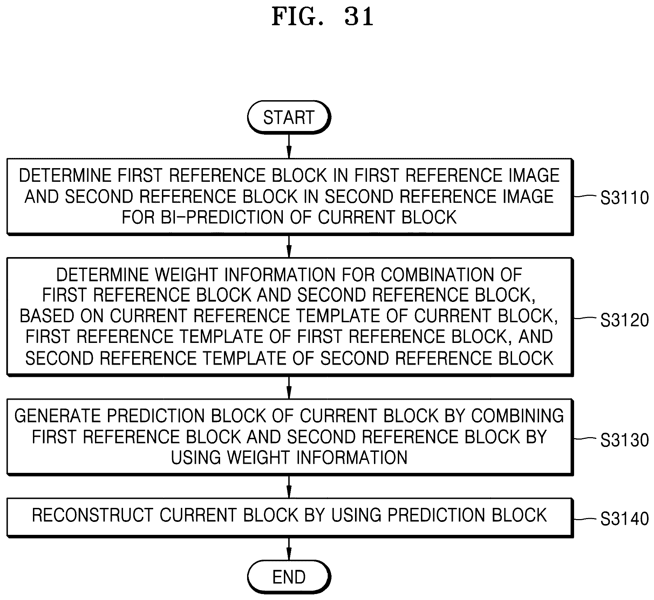

FIG. 31 is a flowchart of an image decoding method according to an embodiment.

In operation S3110, the image decoding apparatus 2000 may determine a first reference block in a first reference image and a second reference block in a second reference image for bi-prediction of a current block.

In an embodiment, the image decoding apparatus 2000 may determine, by using decoded motion information, the first reference block in the first reference image and the second reference block in the second reference image for bi-prediction of the current block.

In an embodiment, the image decoding apparatus 2000 may determine at least one of the first reference block or the second reference block by using motion information or reference blocks of neighboring blocks. For example, the image decoding apparatus 2000 may determine motion vectors by using the motion information or the reference blocks of the neighboring blocks, and may determine a block indicated by a determined motion vector to be at least one of the first reference block or the second reference block.

In an embodiment, the image decoding apparatus 2000 may refine a motion vector by comparing a current reference template with a template in a preset area including a block indicated by the determined motion vector, and thus, may determine at least one of the first reference block or the second reference block of current blocks. For example, the image decoding apparatus 2000 may determine at least one of the first reference block in the first reference image or the second reference block in the second reference image, based on template matching. The first reference image and the second reference image may be images that are reconstructed before a current image. In the template matching, a neighboring sample set reconstructed before the current block in the current image may be used as a template, and a template of the current image may be referred to as a current reference template.

In an embodiment, a template most similar to the current reference template may be searched for in the first reference image and the second reference image. The search range may be a preset range around a point indicated by a first motion vector and a second motion vector which are base motion vectors for determining reference blocks in the first reference image and the second reference image, respectively. In the search range of the first reference image, a template most similar to the current reference template may be determined as the first reference block, and in the search range of the second reference image, a template most similar to the current reference template may be determined as the second reference block.

In operation S3120, the image decoding apparatus 2000 may determine weight information for combination of the first reference block and the second reference block, based on the current reference template of the current block, the first reference template of the first reference block, and the second reference template of the second reference block.

In an embodiment, the weight information may be information for combination of the first reference block 2510 and the second reference block 2550, based on the current reference template 2590, the first reference template 2510, and the second reference template 2550.

In an embodiment, the weight information may include information about a weight for linear combination of the first reference block and the second reference block. For example, the weight information may include information about a first weight to be applied to the first reference block and a second weight to be applied to the second reference block. When the first weight is determined, the second weight may be determined according to the determined first weight. In other embodiment, when the second weight is determined, the first weight may be determined according to the determined first weight.

In an embodiment, the first weight may be a single weight to be commonly applied to samples included in the first reference block. The first weight may be determined based on at least one sample of the first reference template, at least one sample of the second reference template, and at least one sample of the current reference template. For example, the single weight may be determined by performing linear regression analysis to minimize a difference between a value obtained by combining the first reference template and the second reference template and a value of the current reference template with respect to at least one sample of the first reference template, at least one sample of the second reference template, and at least one sample of the current reference template. The single weight may be determined based on a left weight and an above weight.

In an embodiment, the first weight may correspond to a left weight and an above weight, the left weight obtained based on at least one left sample of each template, and the above weight obtained based on at least one above sample of each template. The left weight may be a weight to be applied to a bottom-left sample area of the first reference block, and the above weight may be a weight to be applied to a top-right sample area of the first reference block. The left weight and the above weight may be determined based on at least one sample of the first reference template, at least one sample of the second reference template, and at least one sample of the current reference template.

For example, the left weight may be determined based on one sample among left samples of the first reference template, one sample among left samples of the second reference template, and one sample among left samples of the current reference template. The left weight may be determined by performing linear regression analysis to minimize a difference between a value obtained by combining the left samples of the first reference template and the left samples of the second reference template and a value of the left samples of the current reference template with respect to a plurality of samples among the left samples of the first reference template, a plurality of samples among the left samples of the second reference template, and a plurality of samples among the left samples of the current reference template. The left weight may be determined to be an average value of elements of the left weight matrix which is obtained based on the left samples of the first reference template, the left samples of the second reference template, and the left samples of the current reference template and corresponds to the left samples of the first reference template.

For example, the above weight may be determined based on one sample among above samples of the first reference template, one sample among above samples of the second reference template, and one sample among above samples of the current reference template. The above weight may be determined by performing linear regression analysis to minimize a difference between a value obtained by combining the above samples of the first reference template and the above samples of the second reference template and a value of the above samples of the current reference template with respect to a plurality of samples among the above samples of the first reference template, a plurality of samples among the above samples of the second reference template, and a plurality of samples among the above samples of the current reference template. The above weight may be determined to be an average value of elements of the above weight matrix which is obtained based on the above samples of the first reference template, the above samples of the second reference template, and the above samples of the current reference template and corresponds to the above samples of the first reference template.

In an embodiment, the first weight may be a weight filter that may be expressed as a matrix being differently applicable according to samples included in the first reference block. The weight filter may indicate weights that respectively correspond to samples included in the first reference block and are to be applied to the samples included in the first reference block, by using at least one of a left weight matrix or a above weight matrix.

For example, the weight filter may be determined based on one column included in the left weight matrix and one row included in the above weight matrix. The weight filter may be determined based on an average of at least one element included in each row of the left weight matrix and an average of at least one element included in each column of the above weight matrix. The weight filter may be determined by applying a preset ratio to at least one element included in each row of the left weight matrix and at least one element included in each column of the above weight matrix.

In operation S3130, the image decoding apparatus 2000 may generate a prediction block of a current block by combining the first reference block and the second reference block by using the weight information.

In an embodiment, the weight information may be used in combination of the first reference block and the second reference block. For example, the first reference block and the second reference block may be combined in a manner that the first weight determined in operation S3120 is applied to the first reference block, and the second weight determined based on the first weight is applied to the second reference block.

In an embodiment, when a single weight is identified as the first weight, the first reference block and the second reference block may be combined by adding a value obtained by multiplying each of samples of the first reference block by a value of the determined single weight and a value obtained by multiplying each of samples of the second reference block by a value of a determined pair single weight.

In an embodiment, a left weight and an above weight may be identified as the first weight. In this case, the first reference block and the second reference block may be combined by adding a value obtained by multiplying a sample included in a bottom-left sample area of the first reference block by the left weight and a value obtained by multiplying a sample included in a bottom-left sample area of the second reference block by a pair left weight, and by adding a value obtained by multiplying a sample included in a top-right sample area of the first reference block by the above weight and a value obtained by multiplying a sample included in a top-right sample area of the second reference block by a pair above weight.

In an embodiment, when a weight filter is identified as the first weight, the first reference block and the second reference block may be combined by adding a value obtained by multiplying each sample value of the first reference block by an element of the weight filter at a corresponding location and a value obtained by multiplying each sample value of the second reference block by an element of a pair weight filter at a corresponding location.

In an embodiment, the prediction block of the current block may be generated by combining the first reference block and the second reference block by using the weight information.

In operation S3140, the image decoding apparatus 2000 may reconstruct the current block by using the prediction block.

In an embodiment, the image decoding apparatus 2000 may determine the prediction block as the reconstructed current block.

In an embodiment, the image decoding apparatus 2000 may generate the reconstructed current block by combining residual data obtained from a bitstream and the prediction block.

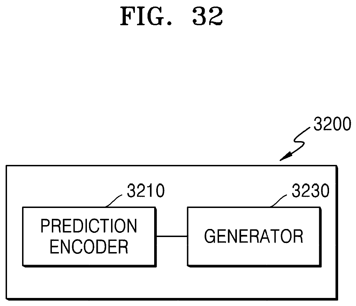

FIG. 32 is a block diagram illustrating a configuration of an image encoding apparatus according to an embodiment.

Referring to FIG. 32, the image encoding apparatus 3200 may include a prediction encoder 3210 and a generator 3230.

According to an embodiment, the prediction encoder 3210 and the generator 3230 may be implemented as at least one processor. In an embodiment, the prediction encoder 3210 and the generator 3230 may operate according to at least one instruction stored in at least one memory.

The image encoding apparatus 3200 may include at least one memory that stores input/output data of the prediction encoder 3210 and the generator 3230. Also, the image encoding apparatus 3200 may include a memory controller configured to control data input/output of the memory.

In an embodiment, the prediction encoder 3210 may correspond to the prediction encoder 1915 shown in FIG. 19, and the generator 3230 may correspond to the entropy encoder 1925 shown in FIG. 19.

In an embodiment, the prediction encoder 3210 may determine a prediction mode of a current block in a current image. The prediction mode of the current block may include an inter mode. The inter mode may refer to a mode in which the current block is predicted or reconstructed based on a reference image so as to reduce temporal redundancy between images. The current block may be a largest coding unit, a coding unit, a transform unit, or a prediction unit which is split from a current image to be encoded.

In an embodiment, the prediction mode of the current block may be determined as the inter mode. The prediction encoder 3210 may perform inter prediction with respect to the current block according to the prediction mode of the current block, and may encode the current block by using a prediction block generated as a result of performing inter prediction.

In an embodiment, the prediction encoder 3210 may use one reference image (e.g., uni-direction prediction) or two reference images (e.g., bi-prediction) so as to encode a current block, based on a reference image. Whether the current block is to be uni-direction predicted or bi-predicted may be included as a flag or an index in a bitstream. When whether the current block is to be uni-direction predicted or bi-predicted is implicitly determined from a prediction mode of neighboring blocks related to the current block, information about the neighboring blocks may be included as a flag or an index in a bitstream.

In an embodiment, when the current block is bi-predicted, the prediction encoder 3210 may identify motion information used to determine reference blocks of the current block. The motion information of the current block may be included in a bitstream. The motion information of the current block may include at least one of a reference image index, a motion vector, a differential motion vector, or a reference direction, and may include all information for prediction of a motion vector of the current block.

In an embodiment, the prediction encoder 3210 may use, as a motion vector predictor of the current block, a motion vector of blocks included in previously-decoded blocks adjacent to the current block or blocks included in a previously-decoded image, or may use a motion vector difference that is a difference between the motion vector and the motion vector predictor of the current block, and thus, may determine a first motion vector and a second motion vector. In an embodiment, when the current block is bi-predicted, the prediction encoder 3210 may determine a first reference block in a first reference image and a second reference block in a second reference image for bi-prediction of the current block. For example, the prediction encoder 3210 may determine, by using the motion information, the first reference block and the second reference block for bi-prediction of the current block. Alternatively, the prediction encoder 3210 may determine reference blocks of the current block which are the first reference block and the second reference block for bi-prediction of the current block, based on template matching.

In an embodiment, the prediction encoder 3210 may determine a motion vector by using the motion information or reference blocks encoded before the current block, and may determine a block, which is indicated by the determined motion vector, to be at least one of the first reference block or the second reference block.

In an embodiment, the prediction encoder 3210 may refine the motion vector by comparing a current reference template with a template in a preset area including the block indicated by the determined motion vector, and thus, may determine at least one of the first reference block or the second reference block of current blocks. The current reference template may indicate a template of the current block. That is, a reference block may be determined based on only motion information, or may be determined based on the motion information and template matching. When the prediction encoder 3210 is capable of defining a template of the first reference block and the second reference block, the prediction decoder 2030 may determine the reference block, regardless of whether the motion vector is refined by performing template matching.

In an embodiment, the prediction encoder 3210 may determine weight information for combining reference blocks to generate a prediction block of the current block, based on a template of reference blocks and the current reference template.

In an embodiment, weight candidate list use information may indicate a method of determining weight information. The weight information may be obtained based on one weight candidate value being determined according to a weight index in a weight candidate list, or may be determined by using motion information or reference blocks of neighboring blocks, independently from the weight candidate list or a weight index.

In an embodiment, the information indicating the weight candidate list use information may be included in a sequence parameter set, a picture parameter set, a slice header, or slice data of a bistream.

In an embodiment, the prediction encoder 3210 may obtain the weight candidate list and the weight index according to a predetermined method, or may determine the weight information by using the motion information or the reference blocks of the neighboring blocks, without obtaining the weight candidate list and the weight index. In this case, the weight candidate list use information may not be included in the bitstream.

In an embodiment, the prediction encoder 3210 may determine weight candidate list use information indicating whether to use a weight candidate list. The weight candidate list use information may be included in the bitstream. The weight candidate list use information may include a flag or an index which indicates a use of the weight candidate list or no use of the weight candidate list.

In an embodiment, the prediction encoder 3210 may determine whether to use the weight candidate list, by using the weight candidate list use information derived from one of reference blocks. The prediction encoder may determine a motion vector indicating a reference block used to derive the weight candidate list use information, so as to determine whether to use the weight candidate list.

In an embodiment, information indicating a weight information representation method may be included in a sequence parameter set, a picture parameter set, a slice header, or slice data of the bitstream.

In an embodiment, the prediction encoder 3210 may determine weight information of the current block according to the predetermined method. In this case, information indicating the weight information representation method may not be included in the bitstream.

In an embodiment, when a weight information representation method is selected to determine weight information, the prediction encoder 3210 may select, among a plurality of weight information representation methods, the weight information representation method that causes a smallest cost in encoding the current block. Information indicating the selected weight information representation method may include a flag or an index which indicates the selected weight information representation method among the plurality of weight information representation methods.

In an embodiment, when a weight information representation method is derived from a reference block, the prediction encoder 3210 may determine at least one of a reference block in a current image which is encoded before a current block or a reference block in a previous reference image encoded before the current block. The prediction encoder 3210 may determine a weight information representation method derived from at least one of reference blocks, as a weight information representation method of the current block. The prediction encoder 3210 may determine a motion vector indicating a reference block.

In an embodiment, encoding of a current block may indicate a process of generating information for allowing an image decoding apparatus to reconstruct the current block. The information generated via encoding may be included in a bitstream.

In an embodiment, when a prediction block of the current block is generated via bi-prediction, the prediction encoder 3210 may encode the current block by using the prediction block.

In an embodiment, the prediction encoder 3210 may generate residual data corresponding to a difference between the prediction block and the current block. When the prediction block is determined as the current block, residual data may not be generated.

The generator 3230 may generate a bitstream including an image encoding result. The bitstream may include an encoding result with respect to the current block.

In an embodiment, the generator 3230 may transmit the bitstream to the image decoding apparatus 2000 via a network.

In an embodiment, the generator 3230 may store the bitstream in a data storage medium including a magnetic medium such as a hard disk, a floppy disk, and a magnetic tape, an optical recording medium such as CD-ROM and DVD, a magneto-optical medium such as a floptical disk, or the like.

The generator 3230 may generate the bitstream including syntax elements generated by encoding an image. The bitstream may include values corresponding to the syntax elements, according to a hierarchical structure of the image.

The bitstream may include bit strings generated when the generator 3230 entropy encodes the syntax elements may be included in the bitstream.

In an embodiment, the bitstream may include motion information of the current block in the current image.

In an embodiment, the bitstream may include at least one of information indicating whether the current block is to be bi-predicted, motion information for determining reference blocks, weight candidate list use information, or information indicating a weight information representation method.

Hereinafter, a process in which the prediction encoder 3210 determines a first reference block in a first reference image and a second reference block in a second reference image will now be described.

In an embodiment, the prediction encoder 3210 may determine at least one of the first reference block of the first reference image or the second reference block of the second reference image, based on motion information or the motion information and template matching. In an embodiment, the first reference image 2420 and the second reference image 2440 may be images encoded before a current image.

In an embodiment, the prediction encoder 3210 may determine the first reference block and the second reference block for the current block, based on the motion information. Referring to FIG. 21, the prediction encoder 3210 may determine the first reference image 2120 and the second reference image 2130 to be referenced by the current block for bi-prediction of the current block, and may determine a first motion vector 2122 indicating a first reference block 2124 in the first reference image 2120 and the second motion vector 2132 indicating a second reference block 2134 in the second reference image 2130. Therefore, the prediction encoder 3210 may determine the first reference block 2124 based on the first motion vector 2122, and may determine the second reference block 2134 based on the second motion vector 2124.

In the template matching, a neighboring sample set encoded before the current block may be used as a template.

In an embodiment, the prediction encoder 3210 may determine at least one of the first reference block or the second reference block for the current block, based on the motion information and the template matching. In an embodiment, the prediction encoder 3210 may search for, in the first reference image 2420, the most similar template to the current reference template 2415 by using the current reference template 2415, and may determine, as the first reference block 2435, a block adjacent to a first reference template 2430 that is the most similar template according to a result of the search. When the current reference template 2415 is located in the left and above of the current block 2410, the prediction encoder 3210 may determine, as the first reference block 2435, a block located in the right and bottom of the first reference template 2430 that is the most similar template in the first reference image 2420 according to the result of the search.

In an embodiment, the prediction encoder 3210 may search for, in the second reference image 2440, the most similar template to the current reference template 2415 by using the current reference template 2415, and may determine, as the second reference block 2455, a block adjacent to a second reference template 2450 that is the most similar template according to a result of the search. When the current reference template 2415 is located in the left and above of the current block 2410, the prediction encoder 3210 may determine, as the second reference block 2455, a block located in the right and bottom of the second reference template 2450 that is the most similar template in the second reference image 2440 according to the result of the search.

In an embodiment, in order to search for a template similar to the current reference template 2415, difference values between sample values may be used. For example, a similar template including the most similar sample values to sample values included in the current reference template 2415 may be determined within the first reference image 2420 and/or the second reference image 2440.

In an embodiment, a template having a minimum sum of absolute difference (SAD) value may be determined as the most similar template by using the difference values between sample values, however, this is merely an example, and thus, a sum of absolute transformed difference (SATD) or a histogram of oriented gradient (HoG) may be used, and this may vary within a scope that is apparent to one of skill in the art.

In an embodiment, the prediction encoder 3210 may determine a base motion vector for determining each reference block so as to perform a search of a similar template. For example, a predetermined motion vector (e.g., a zero vector), or a motion vector of a block at a predetermined location may be determined as the base motion vector. For example, the base motion vector for determining the first reference block 2435 may be the first motion vector 2122 of FIG. 21, and the base motion vector for determining the second reference block 2455 may be the second motion vector 2132 of FIG. 21.

In an embodiment, the prediction encoder 3210 may search for the most similar template to the current reference template 2415, within a preset range around a point indicated by the base motion vector. Also, a block adjacent to the first reference template 2430 that is the most similar template to the current reference template 2415 in the first reference image 2420 may be determined as the first reference block 2435. The prediction encoder 3210 may determine, as the second reference block 2455, a block adjacent to the second reference template 2450 that is the most similar template to the current reference template 2415 in the second reference image 2440.

When at least one of the first reference block 2435 or the second reference block 2455 is determined via template matching by the prediction encoder 3210, the prediction decoder 2030 described above may also determine at least one of the first reference block 2435 or the second reference block 2455 via template matching.

In an embodiment, the prediction encoder 3210 may determine the first motion vector 2122 indicating the first reference block 2435 and the second motion vector 2132 indicating the second reference block 2455. Information indicating the first motion vector 2122 and the second motion vector 2132 may be included in a bitstream.

In an embodiment, the information indicating the first motion vector 2122 may include information indicating any one of candidates of the first motion vector 2122. The information indicating the first motion vector 2122 may include a motion vector difference between a candidate of the first motion vector 2122 selected from the candidates of the first motion vector 2122 and the first motion vector 2122 indicating the first reference block 2435.

In an embodiment, the information indicating the second motion vector 2132 may include information indicating any one of candidates of the second motion vector 2132. The information indicating the second motion vector 2132 may include a motion vector difference between a candidate of the second motion vector 2132 selected from the candidates of the second motion vector 2132 and the second motion vector 2132 indicating the second reference block 2455.

In an embodiment, the prediction encoder 3210 may determine the first reference block 2435 and/or the second reference block 2455 which is indicated by a predetermined motion vector in a previous picture. Here, the predetermined first motion vector 2122 and the predetermined second motion vector 2132 may each indicate a motion vector pre-agreed between the image encoding apparatus 3200 and the image decoding apparatus 2000.

Hereinafter, a process in which the prediction encoder 3210 determines weight information, based on a current reference template, a first reference template, and a second reference template will now be described.

In an embodiment, the prediction encoder 3210 may determine weight information for combination of the first reference template 2510 and the second reference template 2550, based on the current reference template 2590, the first reference template 2510, and the second reference template 2550. The prediction encoder 3210 may determine the weight information by using the current reference template 2590, the first reference template 2510, and the second reference template 2550, without using a weight candidate list and a weight index.

In an embodiment, the weight information may include information about a weight for linear combination of a first reference block and a second reference block. For example, the weight information may include a weight to be applied to the first reference block and a weight to be applied to the second reference block.

In an embodiment, an operation of determining weight information may include an operation of determining a first weight. Also, the first weight may be determined to be one of the single weight 2530, the left weight 2532 and the above weight 2534, or the weight filter. Information indicating a weight information representation method may be information indicating whether an operation of determining a first weight indicates an operation of determining the single weight 2530, indicates an operation of determining the left weight 2532 and the above weight 2534, or indicates an operation of determining a weight filter.

In an embodiment, the first weight that is a weight to be applied to the first reference block may be at least one constant or a matrix. For example, the first weight may be one weight to be commonly applied to the first reference block 2510, and in this case, the first weight may be the single weight 2530 having a $w$ value. The first weight may include the left weight 2532 having a $w_{left}$ value obtained based on at least one left sample of each template, and the above weight 2534 having a $w_{above}$ value obtained based on at least one above sample of each template. When the first weight is represented as a matrix, the first weight may be a weight filter having a $W$ value. Elements of the weight filter may each be independently determined, and may represent weights respectively corresponding to pixels or samples.

In an embodiment, the prediction encoder 3210 may determine the single weight 2530 to be applied to the first reference block, based on at least one sample of the first reference template 2510, at least one sample of the second reference template 2550, and at least one sample of the current reference template 2590.

In an embodiment, the prediction decoder 2030 may determine $w_{left}$ indicating the left weight 2532 and $w_{above}$ indicating the above weight 2534 which are to be applied to the first reference block, based on at least one sample of the first reference template 2510, at least one sample of the second reference template 2550, and at least one sample of the current reference template 2590. The left weight 2532 may be a weight to be applied to a bottom-left sample area of the first reference block. The above weight 2534 may be a weight to be applied to a top-right sample area of the first reference block.

In an embodiment, a bottom-left sample area of the first reference block may indicate a bottom-left triangular area obtained by splitting the first reference block according to a diagonal line connecting a top-left apex and a bottom-right vertex of the first reference block. A top-right sample area of the first reference block may indicate a top-right triangular area obtained by splitting the first reference block according to the diagonal line connecting the top-left vertex and the bottom-right vertex of the first reference block.

In an embodiment, the left weight 2532 may be determined based on at least one sample among left samples of the first reference template 2510, at least one sample among left samples of the second reference template 2550, and at least one sample among left samples of the current reference template 2590. The above weight 2534 may be determined based on at least one sample among above samples of the first reference template 2510, at least one sample among above samples of the second reference template 2550, and at least one sample among above samples of the current reference template 2590.

In an embodiment, the prediction decoder 2030 may obtain a left weight matrix corresponding to the left samples of the first reference template 2510, based on the left samples of the first reference template 2510, the left samples of the second reference template 2550, and the left samples of the current reference template 2590. The prediction encoder 3210 may obtain an above weight matrix corresponding to the above samples of the first reference template 2510, based on the above samples of the first reference template 2510, the above samples of the second reference template 2550, and the above samples of the current reference template 2590. For example, the prediction encoder 3210 may determine values of all elements of the left weight matrix by applying, to Equation 2, respective values of the left samples of the current reference template 2590, the left samples of the first reference template 2510, and the left samples of the second reference template 2550. The prediction encoder 3210 may determine values of all elements of the above weight matrix by applying, to Equation 2, respective values of the above samples of the current reference template 2590, the above samples of the first reference template 2510, and the above samples of the second reference template 2550.

In an embodiment, the prediction encoder 3210 may determine the weight filter 2600 to be applied to each of samples included in the first reference block, by using at least one of the left weight matrix or the above weight matrix. The weight filter 2600 may indicate weights that respectively correspond to the samples included in the first reference block.

In an embodiment, the weight filter 2600 may be determined based on at least one column included in the left weight matrix and/or at least one row included in the above weight matrix. One sample value included in the weight filter 2600 may be determined based on at least one element included in a column of the above weight matrix corresponding to a location of the sample value, and at least one element included in a row of the left weight matrix corresponding to a location of the sample value.

In an embodiment, values of respective samples included in the weight filter 2600 may be determined based on at least one element included in each column of an above weight matrix and at least one element included in each row of a left weight matrix. That is, the weight filter 2600 may be determined based on at least one element included in each column of the above weight matrix and at least one element included in each row of the left weight matrix.

In an embodiment, an operation of the prediction encoder 3210 of the image encoding apparatus 3200 may be equal to an operation of the prediction decoder 2030 of the image decoding apparatus 2000, and thus, the provided descriptions of the operation of the prediction decoder 2030 may be equally applied to the prediction encoder 3210.

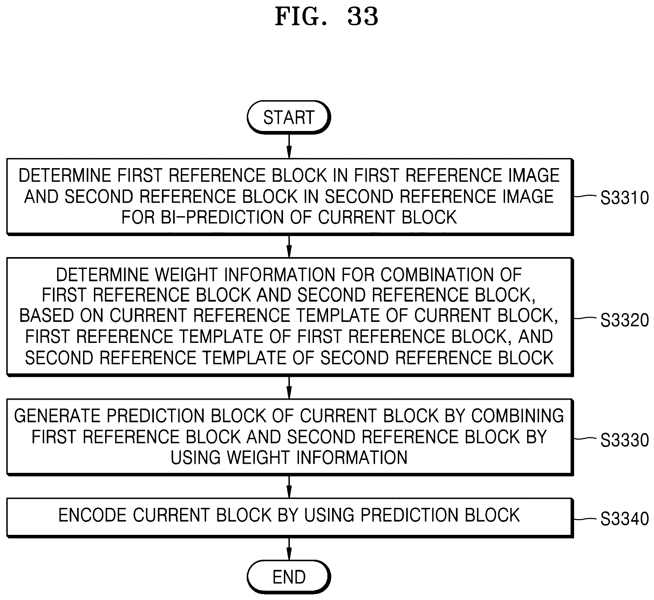

FIG. 33 is a flowchart of an image encoding method according to an embodiment.

In operation S3310, the image encoding apparatus 3200 may determine a first reference block in a first reference image and a second reference block in a second reference image for bi-prediction of a current block.

In an embodiment, the image encoding apparatus 3200 may determine, by using decoded motion information, the first reference block in the first reference image and the second reference block in the second reference image for bi-prediction of the current block. For example, the image encoding apparatus 3200 may determine the first reference block and the second reference block for bi-prediction of the current block, based on motion estimation or template matching.

In an embodiment, the image encoding apparatus 3200 may determine at least one of the first reference block or the second reference block by using motion information or reference blocks of neighboring blocks. For example, the image encoding apparatus 3200 may determine motion vectors by using the motion information or the reference blocks of the neighboring blocks, and may determine a block indicated by a determined motion vector to be at least one of the first reference block or the second reference block.

In an embodiment, the image encoding apparatus 3200 may refine a motion vector by comparing a current reference template with a template in a preset area including a block indicated by the determined motion vector, and thus, may determine at least one of the first reference block or the second reference block of current blocks. For example, the image encoding apparatus 3200 may determine at least one of the first reference block in the first reference image or the second reference block in the second reference image, based on template matching. The first reference image and the second reference image may be images that are reconstructed before a current image. In the template matching, a neighboring sample set reconstructed before the current block in the current image may be used as a template, and a template of the current image may be referred to as a current reference template.

In an embodiment, a template most similar to the current reference template may be searched for in the first reference image and the second reference image. The search range may be a preset range around a point indicated by a first motion vector and a second motion vector which are base motion vectors for determining reference blocks in the first reference image and the second reference image, respectively. In the search range of the first reference image, a template most similar to the current reference template may be determined as the first reference block, and in the search range of the second reference image, a template most similar to the current reference template may be determined as the second reference block.

In operation S3320, the image encoding apparatus 3200 may determine weight information for combination of the first reference block and the second reference block, based on the current reference template of the current block, the first reference template of the first reference block, and the second reference template of the second reference block.

In an embodiment, the weight information may be information for combination of the first reference block 2510 and the second reference block 2550, based on the current reference template 2590, the first reference template 2510, and the second reference template 2550.

In an embodiment, the weight information may include information about a weight for linear combination of the first reference block and the second reference block. For example, the weight information may include information about a first weight to be applied to the first reference block and a second weight to be applied to the second reference block. When the first weight is determined, the second weight may be determined according to the determined first weight. In other embodiment, when the second weight is determined, the first weight may be determined according to the determined first weight.

In an embodiment, the first weight may be a single weight to be commonly applied to samples included in the first reference block. The first weight may be determined based on at least one sample of the first reference template, at least one sample of the second reference template, and at least one sample of the current reference template. For example, the single weight may be determined by performing linear regression analysis to minimize a difference between a value obtained by combining the first reference template and the second reference template and a value of the current reference template with respect to at least one sample of the first reference template, at least one sample of the second reference template, and at least one sample of the current reference template. The single weight may be determined based on a left weight and an above weight.

In an embodiment, the first weight may correspond to a left weight and an above weight, the left weight obtained based on at least one left sample of each template, and the above weight obtained based on at least one above sample of each template. The left weight may be a weight to be applied to a bottom-left sample area of the first reference block, and the above weight may be a weight to be applied to a top-right sample area of the first reference block. The left weight and the above weight may be determined based on at least one sample of the first reference template, at least one sample of the second reference template, and at least one sample of the current reference template.

For example, the left weight may be determined based on one sample among left samples of the first reference template, one sample among left samples of the second reference template, and one sample among left samples of the current reference template. The left weight may be determined by performing linear regression analysis to minimize a difference between a value obtained by combining the left samples of the first reference template and the left samples of the second reference template and a value of the left samples of the current reference template with respect to a plurality of samples among the left samples of the first reference template, a plurality of samples among the left samples of the second reference template, and a plurality of samples among the left samples of the current reference template. The left weight may be determined to be an average value of elements of the left weight matrix which is obtained based on the left samples of the first reference template, the left samples of the second reference template, and the left samples of the current reference template and corresponds to the left samples of the first reference template.

For example, the above weight may be determined based on one sample among above samples of the first reference template, one sample among above samples of the second reference template, and one sample among above samples of the current reference template. The above weight may be determined by performing linear regression analysis to minimize a difference between a value obtained by combining the above samples of the first reference template and the above samples of the second reference template and a value of the above samples of the current reference template with respect to a plurality of samples among the above samples of the first reference template, a plurality of samples among the above samples of the second reference template, and a plurality of samples among the above samples of the current reference template. The above weight may be determined to be an average value of elements of the above weight matrix which is obtained based on the above samples of the first reference template, the above samples of the second reference template, and the above samples of the current reference template and corresponds to the above samples of the first reference template.

In an embodiment, the first weight may be a weight filter that may be expressed as a matrix being differently applicable according to samples included in the first reference block. The weight filter may indicate weights that respectively correspond to samples included in the first reference block and are to be applied to the samples included in the first reference block, by using at least one of a left weight matrix or a above weight matrix.

For example, the weight filter may be determined based on one column included in the left weight matrix and one row included in the above weight matrix. The weight filter may be determined based on an average of at least one element included in each row of the left weight matrix and an average of at least one element included in each column of the above weight matrix. The weight filter may be determined by applying a preset ratio to at least one element included in each row of the left weight matrix and at least one element included in each column of the above weight matrix.

In operation S3330, the image encoding apparatus 3200 may generate a prediction block of a current block by combining the first reference block and the second reference block by using the weight information.

In an embodiment, the weight information may be used in combination of the first reference block and the second reference block. For example, the first reference block and the second reference block may be combined in a manner that the first weight determined in operation S3120 is applied to the first reference block, and the second weight determined based on the first weight is applied to the second reference block.

In an embodiment, when a single weight is identified as the first weight, the first reference block and the second reference block may be combined by adding a value obtained by multiplying each of samples of the first reference block by a value of the determined single weight and a value obtained by multiplying each of samples of the second reference block by a value of a determined pair single weight.

In an embodiment, a left weight and an above weight may be identified as the first weight. In this case, the first reference block and the second reference block may be combined by adding a value obtained by multiplying a sample included in a bottom-left sample area of the first reference block by the left weight and a value obtained by multiplying a sample included in a bottom-left sample area of the second reference block by a pair left weight, and by adding a value obtained by multiplying a sample included in a top-right sample area of the first reference block by the above weight and a value obtained by multiplying a sample included in a top-right sample area of the second reference block by a pair above weight.

In an embodiment, when a weight filter is identified as the first weight, the first reference block and the second reference block may be combined by adding a value obtained by multiplying each sample value of the first reference block by an element of the weight filter at a corresponding location and a value obtained by multiplying each sample value of the second reference block by an element of a pair weight filter at a corresponding location.

In operation S3340, the image encoding apparatus 3200 may encode the current block by using the prediction block.

A bitstream may be generated as a result of encoding of the current block.

In an embodiment, the image encoding apparatus 3200 may obtain residual data corresponding to a difference between the prediction block and the current block, and information about the residual data may be included in the bitstream.

According to an embodiment, the image encoding method and apparatus 3200 and the image decoding method and apparatus 2000 are provided to improve performance of prediction encoding and prediction decoding with respect to a current block 2250.

According to an embodiment, the image encoding method and apparatus 3200 and the image decoding method and apparatus 2000 are provided to decrease the amount of data required to signal an inter prediction mode.

According to an embodiment, the image encoding method and apparatus 3200 and the image decoding method and apparatus 2000 are provided to decrease a bitrate of a bitstream.

The technical features aimed to be achieved in the present disclosure are not limited to the aforementioned technical features, and other unstated technical features will be clearly understood by one of ordinary skill in the art in view of descriptions below.

In an embodiment of the present disclosure, the image decoding method may include determining a first reference block in a first reference image 2420 and a second reference block in a second reference image 2440 for bi-prediction of a current block.

In an embodiment of the present disclosure, the image decoding method may include determining weight information for combination of the first reference block and the second reference block, based on a current reference template of the current block 2410, a first reference template of the first reference block, and a second reference template of the second reference block.

In an embodiment of the present disclosure, the image decoding method may include generating a prediction block of the current block 2410 by combining the first reference block and the second reference block by using the weight information.

In an embodiment of the present disclosure, the image decoding method may include reconstructing the current block 2410 by using the prediction block.

According to an embodiment, as a weight candidate list or a weight index is not used to determine a current block, the amount of data for signaling may be decreased.

In an embodiment of the present disclosure, the image decoding method may include determining a single weight to be applied to the first reference block, based on at least one sample of the first reference template, at least one sample of the second reference template, and at least one sample of the current reference template.

In an embodiment of the present disclosure, the single weight may be determined by performing linear regression analysis to minimize a difference between a value obtained by combining the first reference template and the second reference template and a value of the current reference template with respect to at least one sample of the first reference template, at least one sample of the second reference template, and at least one sample of the current reference template.

In an embodiment of the present disclosure, the single weight may be determined based on a left weight determined based on at least one sample among left samples of the first reference template, at least one sample among left samples of the second reference template, and at least one sample among left samples of the current reference template, or an above weight determined based on at least one sample among above samples of the first reference template, at least one sample among above samples of the second reference template, and at least one sample among above samples of the current reference template.

In an embodiment of the present disclosure, the image decoding method may include determining a left weight to be applied to a bottom-left sample area of the first reference block, and an above weight to be applied to a top-right sample area of the first reference block, based on at least one sample of the first reference template, at least one sample of the second reference template, and at least one sample of the current reference template.

In an embodiment of the present disclosure, the left weight may be determined based on one sample among the left samples of the first reference template, one sample among the left samples of the second reference template, and one sample among the left samples of the current reference template.

In an embodiment of the present disclosure, the above weight may be determined based on one sample among the above samples of the first reference template, one sample among the above samples of the second reference template, and one sample among the above samples of the current reference template.

In an embodiment of the present disclosure, the left weight may be determined by performing linear regression analysis to minimize a difference between a value obtained by combining the left samples of the first reference template and the left samples of the second reference template and a value of the left samples of the current reference template with respect to a plurality of samples among the left samples of the first reference template, a plurality of samples among the left samples of the second reference template, and a plurality of samples among the left samples of the current reference template.

In an embodiment of the present disclosure, the above weight may be determined by performing linear regression analysis to minimize a difference between a value obtained by combining the above samples of the first reference template and the above samples of the second reference template and a value of the above samples of the current reference template with respect to a plurality of samples among the above samples of the first reference template, a plurality of samples among the above samples of the second reference template, and a plurality of samples among the above samples of the current reference template.

In an embodiment of the present disclosure, the left weight may be determined to be an average value of elements of a left weight matrix which is obtained based on the left samples of the first reference template, the left samples of the second reference template, and the left samples of the current reference template and corresponds to the left samples of the first reference template, and the above weight may be determined to be an average value of elements of an above weight matrix which is obtained based on the above samples of the first reference template, the above samples of the second reference template, and the above samples of the current reference template and corresponds to the above samples of the first reference template.

In an embodiment of the present disclosure, the image decoding method may include obtaining a left weight matrix corresponding to left samples of the first reference template, based on left samples of the first reference template, left samples of the second reference template, and left samples of the current reference template. The image decoding method may include obtaining an above weight matrix corresponding to above samples of the first reference template, based on above samples of the first reference template, above samples of the second reference template, and above samples of the current reference template. The image decoding method may include determining, by using at least one of the left weight matrix or the above weight matrix, a weight filter indicating weights that respectively correspond to samples included in the first reference block and are to be applied to the samples included in the first reference block.

In an embodiment of the present disclosure, the weight filter may be determined based on one column included in the left weight matrix and one row included in the above weight matrix.

In an embodiment of the present disclosure, the weight filter may be determined based on an average of at least one element included in each row of the left weight matrix and an average of at least one element included in each column of the above weight matrix.

In an embodiment of the present disclosure, the weight filter may be determined by applying a preset ratio to at least one element included in each row of the left weight matrix and at least one element included in each column of the above weight matrix.

In an embodiment of the present disclosure, the image decoding method may include identifying the single weight as a first weight to be applied to the first reference block. The image decoding method may include obtaining, by using the single weight, a second weight to be applied to the second reference block. The image decoding method may include applying the first weight to the first reference block, and applying the second weight to the second reference block.

In an embodiment of the present disclosure, the image decoding method may include identifying the left weight as the first weight to be applied to a bottom-left sample area of the first reference block and identifying the above weight as the first weight to be applied to a top-right sample area of the first reference block. The image decoding method may include obtaining the second weight to be applied to a bottom-left sample area of the second reference block by using the left weight and to be applied to a top-right sample area of the second reference block by using the above weight. The image decoding method may include applying the first weight to the first reference block and applying the second weight to the second reference block.

In an embodiment of the present disclosure, the image decoding method may include identifying a weight filter as the first weight to be applied to the first reference block. The image decoding method may include obtaining the second weight to be applied to the second reference block by using the weight filer. The image decoding method may include applying the first weight to the first reference block and applying the second weight to the second reference block.

In an embodiment of the present disclosure, the image decoding apparatus 2000 may include at least one memory storing at least one instruction; and at least one processor configured to operate according to the at least one instruction.

In an embodiment of the present disclosure, the at least one processor may be configured to determine a first reference block in the first reference image 2420 and a second reference block in the second reference image 2440 for bi-prediction of a current block.

In an embodiment of the present disclosure, the at least one processor may be configured to determine weight information for combination of the first reference block and the second reference block, based on a current reference template of the current block 2410, a first reference template of the first reference block, and a second reference template of the second reference block.

In an embodiment of the present disclosure, the at least one processor may be configured to generate a prediction block of the current block 2410 by combining the first reference block and the second reference block by using the weight information.

In an embodiment of the present disclosure, the at least one processor may be configured to reconstruct the current block 2410 by using the prediction block.

In an embodiment of the present disclosure, an image encoding method may include determining a first reference block in a first reference image and a second reference block in a second reference image for bi-prediction of the current block 2410 (S3310).

In an embodiment of the present disclosure, the image encoding method may include determining weight information for combination of the first reference block and the second reference block, based on a current reference template of the current block 2410, a first reference template of the first reference block, and a second reference template of the second reference block (S3320).

In an embodiment of the present disclosure, the image encoding method may include generating a prediction block of the current block 2410 by combining the first reference block and the second reference block by using the weight information (S3330).

In an embodiment of the present disclosure, the image encoding method may include encoding the current block 2410 by using the prediction block (S3340).

In an embodiment of the present disclosure, the image encoding apparatus 3200 may include at least one memory storing at least one instruction; and at least one processor configured to operate according to the at least one instruction.

In an embodiment of the present disclosure, the at least one processor may be configured to determine a first reference block in a first reference image and a second reference block in a second reference image for bi-prediction of the current block 2410.

In an embodiment of the present disclosure, the at least one processor may be configured to determine weight information for combination of the first reference block and the second reference block, based on a current reference template of the current block 2410, a first reference template of the first reference block, and a second reference template of the second reference block.

In an embodiment of the present disclosure, the at least one processor may be configured to generate a prediction block of the current block 2410 by combining the first reference block and the second reference block by using the weight information.

In an embodiment of the present disclosure, the at least one processor may be configured to encode the current block 2410 by using the prediction block.

In an embodiment of the present disclosure, provided is a computer-readable recording medium storing therein a bitstream generated by an image encoding method, wherein the bitstream may include motion information of the current block 2410.

In an embodiment of the present disclosure, the motion information may be generated by determining a first reference block in a first reference image and a second reference block in a second reference image for bi-prediction of the current block 2410, obtaining a current reference template indicating a reference template of the current block 2410, a first reference template indicating a reference template of the first reference block, and a second reference template indicating a reference template of the second reference block, determining weight information for combination of the first reference block and the second reference block, based on the current reference template, the first reference template, and the second reference template, generating a prediction block of the current block 2410 by combining the first reference block and the second reference block by using the weight information, and encoding the current block 2410 by using the prediction block.

The embodiments of the present disclosure described above may be written as computer-executable programs that may be stored in a machine-readable storage medium.

A machine-readable storage medium may be provided in a form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

According to an embodiment, a method according to various embodiments disclosed in the present disclosure may be provided by being included in a computer program product. The computer program products are products that can be traded between sellers and buyers. The computer program product may be distributed in a form of machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or a memory of a relay server.

## Claims

1. An image decoding method comprising:

    determining a first reference block in a first reference image (2420) and a second reference block in a second reference image (2440) for bi-prediction of a current block (2410) (S3110);
    determining weight information for combining the first reference block and the second reference block based on a current reference template of the current block (2410), a first reference template of the first reference block, and a second reference template of the second reference block (S3120);
    generating a prediction block of the current block (2410) by combining the first reference block and the second reference block by using the weight information (S3130); and
    reconstructing the current block (2410) by using the prediction block (S3140).

2. The image decoding method of claim 1, wherein the determining of the weight information comprises determining a weight to be applied to the first reference block based on at least one sample of the first reference template, at least one sample of the second reference template, and at least one sample of the current reference template.

3. The image decoding method of claim 2, wherein the weight is determined by performing linear regression analysis to minimize a difference between a value obtained by combining the first reference template and the second reference template and a value of the current reference template, with respect to at least one sample of the first reference template, at least one sample of the second reference template, and at least one sample of the current reference template.

4. The image decoding method of claim 2, wherein the weight is determined based on a left weight determined based on at least one sample among left samples of the first reference template, at least one sample among left samples of the second reference template, and at least one sample among left samples of the current reference template, or an above weight determined based on at least one sample among above samples of the first reference template, at least one sample among above samples of the second reference template, and at least one sample among above samples of the current reference template.

5. The image decoding method of claim 1, wherein the determining of the weight information comprises determining a left weight to be applied to a bottom-left sample area of the first reference block, and an above weight to be applied to a top-right sample area of the first reference block, based on the at least one sample of the first reference template, the at least one sample of the second reference template, and the at least one sample of the current reference template.

6. The image decoding method of at least one of claims 4 and 5, wherein the left weight is determined based on one sample among the left samples of the first reference template, one sample among the left samples of the second reference template, and one sample among the left samples of the current reference template, and wherein the above weight is determined based on one sample among the above samples of the first reference template, one sample among the above samples of the second reference template, and one sample among the above samples of the current reference template.

7. The image decoding method of at least one of claims 4 and 5, wherein the left weight is determined by performing linear regression analysis to minimize a difference between a value obtained by combining the left samples of the first reference template and the left samples of the second reference template and a value of the left samples of the current reference template, with respect to a plurality of samples among the left samples of the first reference template, a plurality of samples among the left samples of the second reference template, and a plurality of samples among the left samples of the current reference template, and wherein the above weight is determined by performing linear regression analysis to minimize a difference between a value obtained by combining the above samples of the first reference template and the above samples of the second reference template and a value of the above samples of the current reference template, with respect to a plurality of samples among the above samples of the first reference template, a plurality of samples among the above samples of the second reference template, and a plurality of samples among the above samples of the current reference template.

8. The image decoding method of at least one of claims 4 and 5, wherein the left weight is determined to be an average value of elements of a left weight matrix obtained based on the left samples of the first reference template, the left samples of the second reference template, and the left samples of the current reference template, the left weight matrix corresponding to the left samples of the first reference template, and wherein the above weight is determined to be an average value of elements of an above weight matrix obtained based on the above samples of the first reference template, the above samples of the second reference template, and the above samples of the current reference template, the above weight matrix corresponding to the above samples of the first reference template.

9. The image decoding method of claim 1, wherein the determining of the weight information comprises:

obtaining a left weight matrix corresponding to left samples of the first reference template based on left samples of the first reference template, left samples of the second reference template, and left samples of the current reference template;
obtaining an above weight matrix corresponding to above samples of the first reference template based on above samples of the first reference template, above samples of the second reference template, and above samples of the current reference template; and
determining, by using at least one of the left weight matrix or the above weight matrix, a weight filter indicating weights that respectively correspond to samples included in the first reference block, the weight filter applied to the samples included in the first reference block.

10. The image decoding method of claim 9, wherein the weight filter is determined based on a column of the left weight matrix and a row of the above weight matrix.

11. The image decoding method of claim 9, wherein the weight filter is determined based on an average of at least one element included in each row of the left weight matrix and an average of at least one element included in each column of the above weight matrix.

12. The image decoding method of claim 9, wherein the weight filter is determined by applying a preset ratio to at least one element included in each row of the left weight matrix and to at least one element included in each column of the above weight matrix.

13. The image decoding method of any one of claims 2 to 4, wherein the generating of the prediction block of the current block (2410) comprises:

identifying the weight as a first weight to be applied to the first reference block;
obtaining, by using the weight, a second weight to be applied to the second reference block; and
applying the first weight to the first reference block, and applying the second weight to the second reference block.

**14.** An image encoding method comprising:

determining a first reference block in a first reference image and a second reference block in a second reference image for bi-prediction of a current block (2410) (S3310);

determining weight information for combining the first reference block and the second reference block based on a current reference template of the current block (2410), a first reference template of the first reference block, and a second reference template of the second reference block (S3320);

generating a prediction block of the current block (2410) by combining the first reference block and the second reference block by using the weight information (S3330); and

encoding the current block (2410) by using the prediction block (S3340).

**15.** A computer-readable recording medium storing therein a bitstream generated by an image encoding method,

wherein the bitstream comprises motion information of a current block (2410), and

the motion information of the current block (2410) is generated by

determining a first reference block in a first reference image and a second reference block in a second reference image for bi-prediction of the current block (2410),

obtaining a current reference template indicating a reference template of the current block (2410), a first reference template indicating a reference template of the first reference block, and a second reference template indicating a reference template of the second reference block,

determining weight information for combining the first reference block and the second reference block, based on the current reference template, the first reference template, and the second reference template,

generating a prediction block of the current block (2410) by combining the first reference block and the second reference block by using the weight information, and

encoding the current block (2410) by using the prediction block.

FIG. 1

```
                              ╱ 100
   ┌──────────────────────────────┐
   │                              │
   │         ╱ 110                │
   │   ┌──────────────┐           │
   │   │  BITSTREAM   │           │
   │   │  OBTAINER    │           │
   │   └──────────────┘           │
   │                              │
   │         ╱ 120                │
   │   ┌──────────────┐           │
   │   │   DECODER    │           │
   │   │              │           │
   │   └──────────────┘           │
   │                              │
   └──────────────────────────────┘
```

# FIG. 2

EP 4 723 621 A1

# FIG. 3

300

310a  310b  310b  310c  310d  310d  310e 310e 310e

310f

310f

310f

310c  310d 310d

# FIG. 4

FIG. 5

EP 4 723 621 A1

# FIG. 6

# FIG. 7

# FIG. 8

# FIG. 9

FIG. 10

FIG. 11

EP 4 723 621 A1

# FIG. 12

# FIG. 13

| BLOCK SHAPE / DEPTH | 0: SQUARE | 1: NS_VER | 2: NS_HOR |
|---|---|---|---|
| DEPTH D | 1300 | 1310 | 1320 |
| DEPTH D+1 | 1302 | 1312 | 1322 |
| DEPTH D+2 | 1304 | 1314 | 1324 |
| ... | ... | ... | ... |

FIG. 14

FIG. 15

FIG. 16

# FIG. 17

| SQUARE BLOCK | |
|---|---|
| (00)b | |
| (01)b | |
| (10)b | |
| (11)b | |

| NON-SQUARE BLOCK | |
|---|---|
| (0)b | |
| (10)b | |
| (11)b | |

FIG. 18

| SQUARE BLOCK | |
|---|---|
| (0)b | |
| (10)b | |
| (11)b | |

| NON-SQUARE BLOCK | |
|---|---|
| (0)b | |
| (10)b | |
| (11)b | |

## FIG. 19

FIG. 20

# FIG. 21

EP 4 723 621 A1

# FIG. 22

# FIG. 23

EP 4 723 621 A1

# FIG. 24

# FIG. 25

FIG. 26

# FIG. 27

ref 0 × W + ref 1 × M−W = pred

FIG. 28

FIG. 29

## FIG. 30

| | | 6 | 5.33 | 6 | 2 | 6.67 | 4 | 3.2 | 2.67 |
|---|---|---|---|---|---|---|---|---|---|
| | | 2.67 | 3.73 | 1.45 | 4.57 | 4 | 6 | 4 | 4 |
| 4 | 6.4 | 4.53 | 5.07 | 3.93 | 5.49 | 5.20 | 6.20 | 5.20 | 5.20 |
| 1.6 | 6.4 | 4.53 | 5.07 | 3.93 | 5.49 | 5.20 | 6.20 | 5.20 | 5.20 |
| 4 | 1.78 | 2.22 | 2.76 | 1.62 | 3.17 | 2.89 | 3.89 | 2.89 | 2.89 |
| 6.48 | 5.33 | 4.00 | 4.53 | 3.39 | 4.95 | 4.67 | 5.67 | 4.67 | 4.67 |
| 2 | 5.71 | 4.19 | 4.72 | 3.58 | 5.14 | 4.86 | 5.86 | 4.86 | 4.86 |
| 3.2 | 3 | 2.83 | 3.37 | 2.23 | 3.79 | 3.50 | 4.50 | 3.50 | 3.50 |
| 1.33 | 1.33 | 2.00 | 2.53 | 1.39 | 2.95 | 2.67 | 3.67 | 2.67 | 2.67 |
| 4 | 0.8 | 1.73 | 2.27 | 1.13 | 2.69 | 2.40 | 3.40 | 2.40 | 2.40 |

# FIG. 31

START

DETERMINE FIRST REFERENCE BLOCK IN FIRST REFERENCE IMAGE AND SECOND REFERENCE BLOCK IN SECOND REFERENCE IMAGE FOR BI-PREDICTION OF CURRENT BLOCK —— S3110

DETERMINE WEIGHT INFORMATION FOR COMBINATION OF FIRST REFERENCE BLOCK AND SECOND REFERENCE BLOCK, BASED ON CURRENT REFERENCE TEMPLATE OF CURRENT BLOCK, FIRST REFERENCE TEMPLATE OF FIRST REFERENCE BLOCK, AND SECOND REFERENCE TEMPLATE OF SECOND REFERENCE BLOCK —— S3120

GENERATE PREDICTION BLOCK OF CURRENT BLOCK BY COMBINING FIRST REFERENCE BLOCK AND SECOND REFERENCE BLOCK BY USING WEIGHT INFORMATION —— S3130

RECONSTRUCT CURRENT BLOCK BY USING PREDICTION BLOCK —— S3140

END

FIG. 32

3200

3210

PREDICTION
ENCODER

3230

GENERATOR

# FIG. 33

START

DETERMINE FIRST REFERENCE BLOCK IN FIRST REFERENCE IMAGE
AND SECOND REFERENCE BLOCK IN SECOND REFERENCE IMAGE
FOR BI-PREDICTION OF CURRENT BLOCK — S3310

DETERMINE WEIGHT INFORMATION FOR COMBINATION OF
FIRST REFERENCE BLOCK AND SECOND REFERENCE BLOCK,
BASED ON CURRENT REFERENCE TEMPLATE OF CURRENT BLOCK,
FIRST REFERENCE TEMPLATE OF FIRST REFERENCE BLOCK, AND
SECOND REFERENCE TEMPLATE OF SECOND REFERENCE BLOCK — S3320

GENERATE PREDICTION BLOCK OF CURRENT BLOCK BY COMBINING
FIRST REFERENCE BLOCK AND SECOND REFERENCE BLOCK BY
USING WEIGHT INFORMATION — S3330

ENCODE CURRENT BLOCK BY USING PREDICTION BLOCK — S3340

END

## INTERNATIONAL SEARCH REPORT

| International application No. |
| --- |
| **PCT/KR2024/006396** |

**A. CLASSIFICATION OF SUBJECT MATTER**

**H04N 19/105**(2014.01)i; **H04N 19/577**(2014.01)i; **H04N 19/176**(2014.01)i; **H04N 19/132**(2014.01)i; **H04N 19/117**(2014.01)i; **H04N 19/57**(2014.01)i; **H04N 19/137**(2014.01)i

According to International Patent Classification (IPC) or to both national classification and IPC

**B. FIELDS SEARCHED**

Minimum documentation searched (classification system followed by classification symbols)

H04N 19/105(2014.01); H04N 19/109(2014.01); H04N 19/11(2014.01); H04N 19/119(2014.01); H04N 19/147(2014.01); H04N 19/176(2014.01); H04N 19/19(2014.01); H04N 19/533(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 참조(reference), 템플릿(template), 예측(predict), 가중(weight), 복원(reconstruct), 선형 회귀(linear regression)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2023-0040295 A (KT CORPORATION) 22 March 2023 (2023-03-22) See paragraphs [0063], [0071], [0083], [0107], [0143]-[0144], [0158], [0247], [0249], [0253], [0266], [0289] and [0329]; claims 1 and 15; and figures 1-3. | 1-2,5,13-15 |
| Y | | 3-4,6-12 |
| Y | KR 10-1406156 B1 (THOMSON LICENSING) 13 June 2014 (2014-06-13) See paragraphs [0006] and [0132]. | 3-4,6-12 |
| Y | WO 2019-245260 A1 (INDUSTRY ACADEMY COOPERATION FOUNDATION OF SEJONG UNIVERSITY) 26 December 2019 (2019-12-26) See paragraphs [0271]-[0283] and [0470]; and figures 24-28 and 55. | 4,6-12 |
| A | US 2022-0159296 A1 (INTERDIGITAL MADISON PATENT HOLDINGS, SAS) 19 May 2022 (2022-05-19) See claims 25-29. | 1-15 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 August 2024** | **14 August 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/006396**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2013-0023444 A (IUCF-HYU (INDUSTRY-UNIVERSITY COOPERATION FOUNDATION HANYANG UNIVERSITY)) 08 March 2013 (2013-03-08)<br>See claims 6-9. | 1-15 |

Form PCT/ISA/210 (second sheet) (July 2022)

EP 4 723 621 A1

## INTERNATIONAL SEARCH REPORT
### Information on patent family members

International application No.

**PCT/KR2024/006396**

| Patent document cited in search report | | | Publication date (day/month/year) | Patent family member(s) | | | Publication date (day/month/year) |
|---|---|---|---|---|---|---|---|
| KR | 10-2023-0040295 | A | 22 March 2023 | CN | 117941356 | A | 26 April 2024 |
| | | | | WO | 2023-043223 | A1 | 23 March 2023 |
| KR | 10-1406156 | B1 | 13 June 2014 | CN | 101379829 | A | 04 March 2009 |
| | | | | CN | 101379829 | B | 18 May 2016 |
| | | | | EP | 1980112 | A2 | 15 October 2008 |
| | | | | EP | 1980112 | B1 | 24 October 2012 |
| | | | | JP | 2009-525687 | A | 09 July 2009 |
| | | | | JP | 5224459 | B2 | 03 July 2013 |
| | | | | KR | 10-2008-0090466 | A | 08 October 2008 |
| | | | | US | 2009-0010330 | A1 | 08 January 2009 |
| | | | | US | 8498336 | B2 | 30 July 2013 |
| | | | | WO | 2007-092215 | A2 | 16 August 2007 |
| | | | | WO | 2007-092215 | A3 | 01 November 2007 |
| WO | 2019-245260 | A1 | 26 December 2019 | CN | 112292854 | A | 29 January 2021 |
| | | | | EP | 3809701 | A1 | 21 April 2021 |
| | | | | US | 11647222 | B2 | 09 May 2023 |
| | | | | US | 2023-0239496 | A1 | 27 July 2023 |
| US | 2022-0159296 | A1 | 19 May 2022 | CN | 110832864 | A | 21 February 2020 |
| | | | | CN | 110832864 | B | 29 March 2024 |
| | | | | EP | 3646600 | A1 | 06 May 2020 |
| | | | | US | 11172221 | B2 | 09 November 2021 |
| | | | | US | 11706447 | B2 | 18 July 2023 |
| | | | | US | 2020-0120358 | A1 | 16 April 2020 |
| | | | | US | 2023-0262260 | A1 | 17 August 2023 |
| | | | | WO | 2019-002171 | A1 | 03 January 2019 |
| KR | 10-2013-0023444 | A | 08 March 2013 | None | | | |

Form PCT/ISA/210 (patent family annex) (July 2022)